# EUROPEAN PATENT APPLICATION

(11) **EP 4 600 289 A1**
(43) Date of publication of application: **13.08.2025**
(21) Application number: 23874600.2
(22) Date of filing: 11.09.2023
(51) Int. Cl.: C08G 65/332, C08F 290/06, C08G 65/336

(54) **ACRYLIC COMPOUND CONTAINING FLUOROPOLYETHER GROUP, ACTINIC-RAY-CURABLE COMPOSITION, CURED COATING FILM FORMED FROM SAID CURABLE COMPOSITION, AND ARTICLE**

(30) Priority: 07.10.2022 JP 2022162525
(71) Applicant: SHIN-ETSU CHEMICAL CO., LTD., Tokyo 1000005 (JP)
(72) Inventor: MORI, Seiya, Annaka-shi, Gunma 379-0224 (JP); SAKANO, Yasunori, Annaka-shi, Gunma 379-0224 (JP)
(74) Representative: Ter Meer Steinmeister & Partner
(86) International application number: PCT/JP2023/032973
(87) International publication number: WO 2024/075471

(57) **Abstract**

A novel acrylic compound containing a fluoropolyether group and represented by formula (1) according to the present invention, when added to a composition curable with actinic rays, e.g., ultraviolet light or electron beams, imparts excellent liquid repellency, antifouling properties, and wear resistance to a cured coating film to be obtained therefrom. 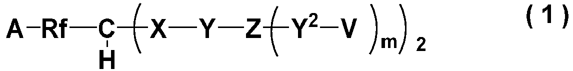 (A is H, F, a monovalent hydrocarbon group, or -CH(X-Y-Z(Y²-V)ₘ)₂; Rf is a divalent fluoropolyether group; X is a single bond or a divalent heteroatom; Y is a divalent hydrocarbon group optionally containing O, N, or Si; Z is an (m+1)-valent linking group having a siloxane structure; Y² is a single bond or Y; V is H or a monovalent organic group including an acryl or α-substituted acryl group which may contain O, N, or S, the acrylic compound containing one or more acryl or α-substituted acryl groups in each molecule; and m is 1-11.)

## Description

### TECHNICAL FIELD

The present invention relates to a fluoropolyether-containing acrylic compound capable of imparting excellent liquid repellency, anti-fouling property, and abrasion resistance to a resulting cured film by being blended in an active energy ray-curable composition such as an ultraviolet ray or an electron beam, an active energy ray-curable composition containing the fluoropolyether-containing acrylic compound, a cured film obtained by curing the active energy ray-curable composition, and an article having the cured film on a substrate surface.

### BACKGROUND ART

Conventionally, a hard coat treatment has been widely and generally used as a means for protecting a surface of a resin molded body or the like. This is to form a hard cured resin layer (hard coat layer) on the surface of the molded body to make it less likely to be damaged. As a material constituting the hard coat layer, a curable composition by active energy rays such as a thermosetting resin, an ultraviolet or electron beam curable resin is often used.

With expansion of fields of application of resin molded articles and a trend of increasing added value, there are increasing demands for higher functionality of cured resin layer (hard coat layer), and as one of them, there is a demand for imparting anti-fouling property to a hard coat layer. By imparting properties such as water repellency and oil repellency to a surface of the hard coat layer, the hard coat layer is hardly stained or can be easily removed even if stained.

As a method for imparting anti-fouling property to the hard coat layer, there are a method of applying and/or fixing a fluorine-containing anti-fouling agent to the surface of the hard coat layer once formed, and a method of simultaneously forming the hard coat layer and imparting anti-fouling property by adding a fluorine-containing curable component to a cured resin composition before curing and applying and curing the fluorine-containing curable component. For example, JP-A H06-211945 (Patent Document 1) shows production of a hard coat layer imparted with anti-fouling property by adding fluoroalkyl acrylate to an acryl-based curable resin composition and curing the acryl-based curable resin composition.

The present inventors have promoted various developments as a fluorine-containing compound capable of imparting anti-fouling property to such a curable resin composition, and for example, JP-A 2013-237824 (Patent Document 2) proposes a method for imparting anti-fouling property by blending a fluoropolyether-containing polymer having a terminal hydroxyl group. In addition, the present inventors have proposed photocurable fluorine-containing compounds shown in, for example, JP-A 2010-53114 (Patent Document 3), JP-A 2010-138112 (Patent Document 4), and JP-A 2010-285501 (Patent Document 5).

However, in recent years, use of a hard coat containing a fluorine-containing compound for an article that is easily touched by a human finger such as a touch panel tends to increase. However, when the conventional fluorine-containing compound is used for the use, the surface of the hard coat is worn due to abrasion by a human finger, and anti-fouling property is deteriorated, thus abrasion resistance may not be practically sufficient.

### PRIOR ART DOCUMENTS

### PATENT DOCUMENTS

| | |
|---|---|
| Patent Document 1: | JP-A H06-211945 |
| Patent Document 2: | JP-A 2013-237824 |
| Patent Document 3: | JP-A 2010-53114 |
| Patent Document 4: | JP-A 2010-138112 |
| Patent Document 5: | JP-A 2010-285501 |

### SUMMARY OF INVENTION

### TECHNICAL PROBLEM

The present invention has been made in view of the above circumstances, and an object of the present invention is to provide a fluoropolyether-containing acrylic compound capable of imparting excellent liquid repellency, anti-fouling property, and abrasion resistance to a resulting cured film by being added to an active energy ray-curable composition such as an ultraviolet ray or an electron beam, an active energy ray-curable composition containing the fluoropolyether-containing acrylic compound, a cured film obtained by curing the active energy ray-curable composition, and an article having the cured film of the composition on a substrate surface.

### SOLUTION TO PROBLEM

As a result of further studies to achieve the above object, the present inventors have found that a fluoropolyether-containing acrylic compound represented by the following general formula (1) is useful as a compound satisfying the above requirement, and have completed the present invention. 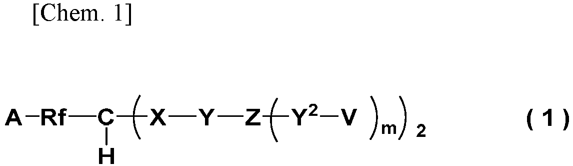 wherein A is a hydrogen atom, a fluorine atom, an unsubstituted or fluorine-substituted C₁-C₂₀ monovalent hydrocarbon group, or a monovalent group of -CH(X-Y-Z(Y²-V)ₘ)₂, Rf is a divalent fluoropolyether group, X is independently a single bond or a divalent heteroatom, Y is independently a C₁-C₂₀ divalent hydrocarbon group which may contain one or more selected from an oxygen atom, a nitrogen atom, a silicon atom, and a sulfur atom, Z is independently an (m+1)-valent linking group having a siloxane structure, Y² is independently a single bond or a C₁-C₂₀ divalent hydrocarbon group which may contain one or more selected from an oxygen atom, a nitrogen atom, and a silicon atom, V is independently a hydrogen atom, or a monovalent organic group containing an acryloyl group or an α-substituted acryloyl group which may contain at least one selected from an oxygen atom and a nitrogen atom, at least one acryloyl or α-substituted acryloyl group being contained per molecule on the average, and m is an integer of 1 to 11.

Therefore, the present invention provides the following fluoropolyether-containing acrylic compound, an active energy ray-curable composition containing the acrylic compound, a cured film of the curable composition, and an article.
[1] A fluoropolyether-containing acrylic compound having the following general formula (1): 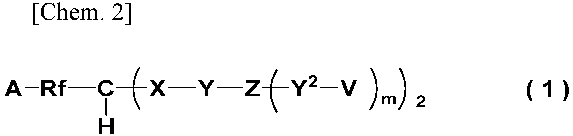 wherein A is a hydrogen atom, a fluorine atom, an unsubstituted or fluorine-substituted C₁-C₂₀ monovalent hydrocarbon group, or a monovalent group of -CH(X-Y-Z(Y²-V)ₘ)₂, Rf is a divalent fluoropolyether group, X is independently a single bond or a divalent heteroatom, Y is independently a C₁-C₂₀ divalent hydrocarbon group which may contain one or more selected from an oxygen atom, a nitrogen atom, a silicon atom, and a sulfur atom, Z is independently an (m+1)-valent linking group having a siloxane structure, Y² is independently a single bond or a C₁-C₂₀ divalent hydrocarbon group which may contain one or more selected from an oxygen atom, a nitrogen atom, and a silicon atom, V is independently a hydrogen atom, or a monovalent organic group containing an acryloyl group or an α-substituted acryloyl group which may contain at least one selected from an oxygen atom and a nitrogen atom, at least one acryloyl or α-substituted acryloyl group being contained per molecule on the average, and m is an integer of 1 to 11.
[2] The fluoropolyether-containing acrylic compound of [1], wherein in the formula (1), Rf is a divalent fluoropolyether group having the following general formula (2): 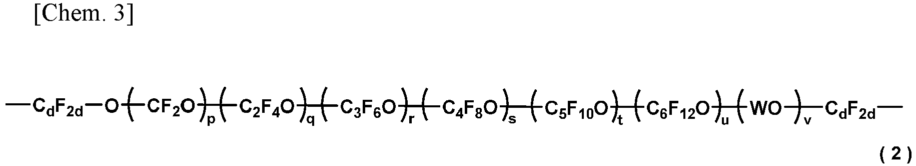 wherein W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.
[3] The fluoropolyether-containing acrylic compound of [1] or [2], wherein in the formula (1), Rf is any one of divalent perfluoropolyether groups having the following formulae: 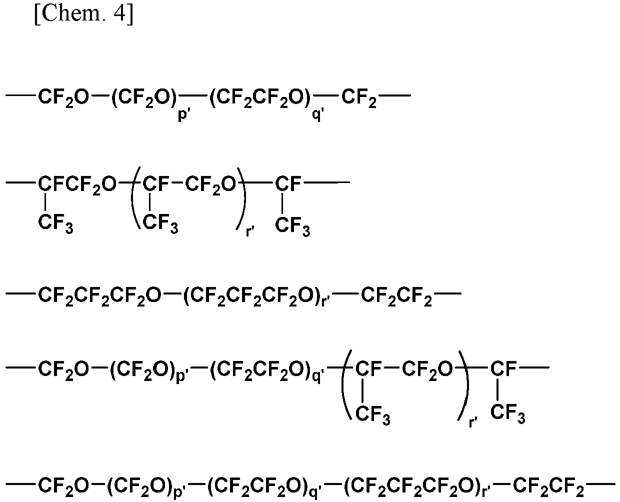 wherein p', q', and r' are each an integer of 1 or more, the sum of p', q', and r' in each formula is 3 to 200, and individual repeat units shown in parentheses with p', q', and r' may be randomly bonded.
[4] The fluoropolyether-containing acrylic compound of any one of [1] to [3], wherein in the formula (1), A is a hydrogen atom, a fluorine atom, a C₁-C₆ fluoroalkyl group, or a monovalent group of -CH(X-Y-Z(Y²-V)ₘ)₂.
[5] The fluoropolyether-containing acrylic compound of any one of [1] to [4], wherein in the formula (1), A is a fluorine atom or a C₁-C₆ perfluoroalkyl group.
[6] The fluoropolyether-containing acrylic compound of any one of [1] to [5], wherein two X's are present at one end of the molecular chain when A is a hydrogen atom, a fluorine atom, or an unsubstituted or fluorine-substituted C₁-C₂₀ monovalent hydrocarbon group, and two X's are present at each of both ends of the molecular chain (four X's in the molecule) when A is a monovalent group of -CH(X-Y-Z(Y²-V)ₘ)₂; one X is an oxygen atom, and the other X is a single bond at each end.
[7] The fluoropolyether-containing acrylic compound of any one of [1] to [6], wherein in the formula (1), Y is independently a C₂-C₁₀ alkylene group, or a C₂-C₁₀ alkylene group containing a C₆-C₈ arylene group.
[8] The fluoropolyether-containing acrylic compound of any one of [1] to [7], wherein in the formula (1), Z is a linear tri to deca-valent organopolysiloxane residue of 2 to 10 silicon atoms or a branched or cyclic tri to deca-valent organopolysiloxane residue of 3 to 10 silicon atoms.
[9] The fluoropolyether-containing acrylic compound of any one of [1] to [8], wherein in the formula (1), Z has any one of the following formulae: 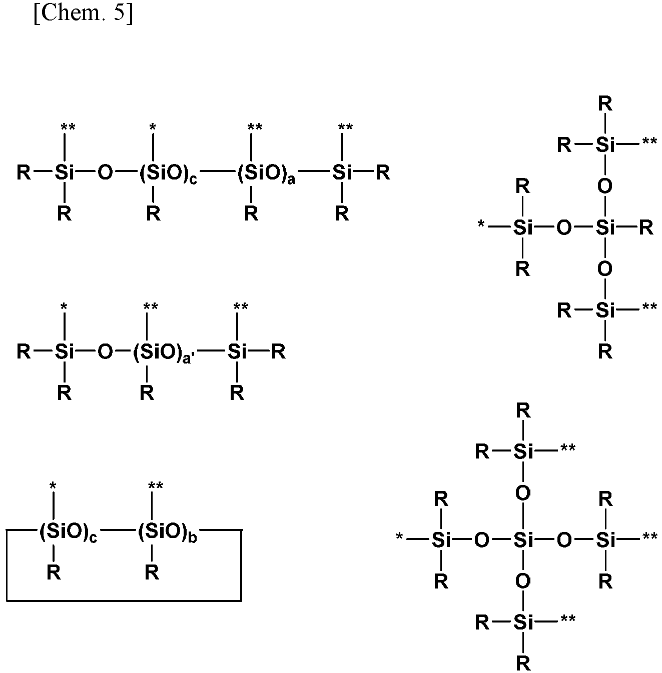 wherein * is a bond bonded to Y in the formula (1), ** is a bond bonded to Y² in the formula (1), R is independently a C₁-C₂₀ monovalent hydrocarbon group, a and a' are integers of 0 to 6, b is an integer of 2 to 9, c is 1, and individual repeat units shown in parentheses with a and c may be randomly bonded.
[10] The fluoropolyether-containing acrylic compound of any one of [1] to [9], wherein in the formula (1), Z is an (m'+1)-valent linking group having the following formula: 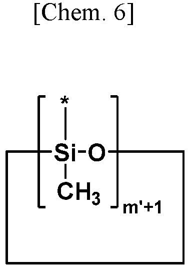 wherein * is a bond bonded to Y and Y² in the formula (1), one of * is a bond bonded to Y, and m' is an integer of 2 to 11.
[11] The fluoropolyether-containing acrylic compound of any one of [1] to [10], wherein in the formula (1), Y² is independently a C₃-C₁₀ alkylene group which may contain an oxygen atom, or a C₃-C₁₀ alkylene group containing a C₆-C₈ arylene group.
[12] The fluoropolyether-containing acrylic compound of any one of [1] to [11], wherein in the formula (1), V is a monovalent group having the following formula: 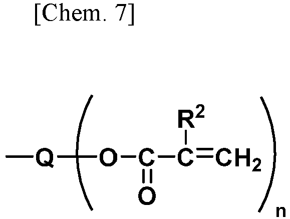 wherein R² is independently a hydrogen atom, a fluorine atom, a methyl group, or a trifluoromethyl group, Q is a single bond or a divalent or trivalent hydrocarbon group which may contain one or more bonds selected from an ether bond, an ester bond, and a urethane bond, and n is 1 or 2.
[13] The fluoropolyether-containing acrylic compound of any one of [1] to [12], wherein in the formula (1), V has any one of the following formulae. 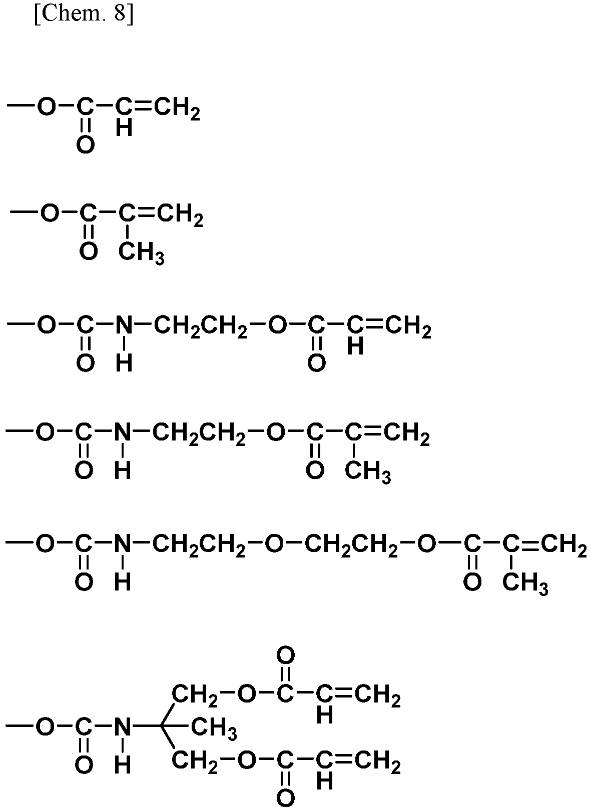
[14] The fluoropolyether-containing acrylic compound of any one of [1] to [13], wherein the fluoropolyether-containing acrylic compound having the formula (1) has the following general formula (3): 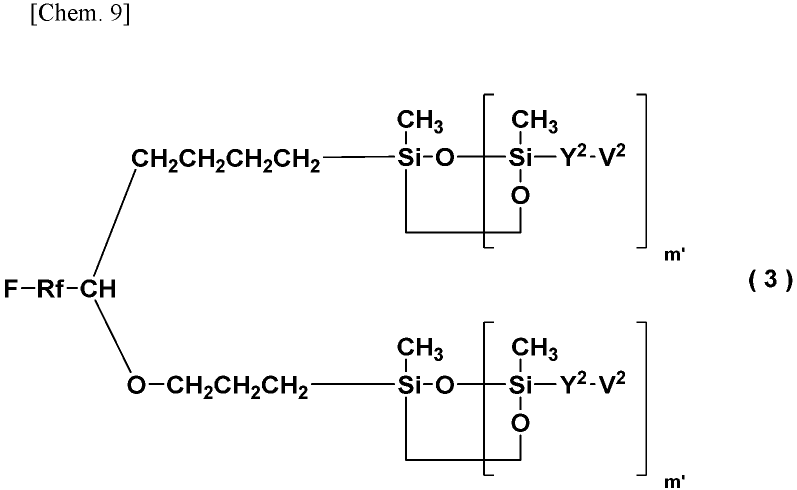 wherein Rf and Y² are the same as described above, m' is an integer of 2 to 11, and V² has any one of the following formulae. 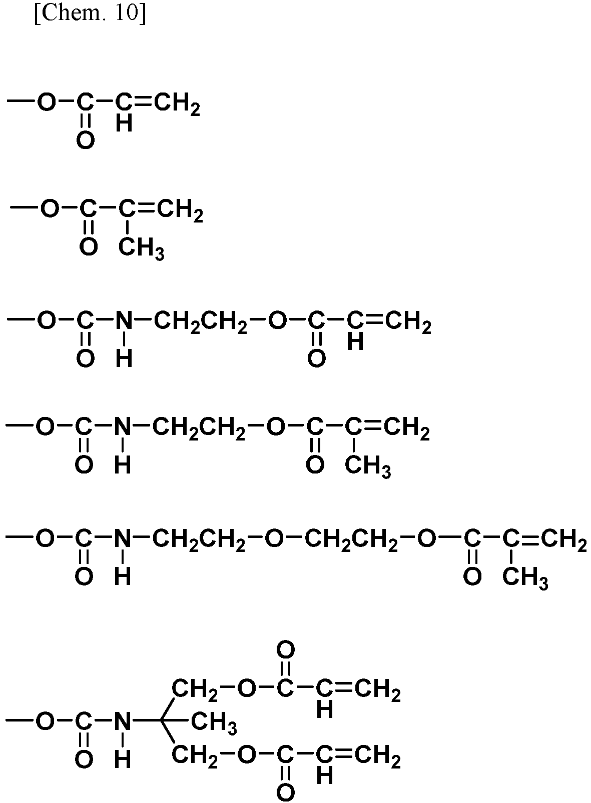
[15] An active energy ray-curable composition comprising the fluoropolyether-containing acrylic compounds of any one of [1] to [14] and a polymerization initiator as essential components.
[16] The active energy ray-curable composition of [15], further comprising a solvent.
[17] The active energy ray-curable composition of [15] or [16], further comprising a non-fluorine-based acrylic compound.
[18] A cured film obtained by curing the active energy ray-curable composition of any one of [15] to [17].
[19] The cured film of [18], wherein the cured film has a film thickness of 0.5 to 100 µm in a case where a ratio of the fluoropolyether-containing acrylic compound is 0.005 parts by weight or more and less than 50 parts by weight in 100 parts by weight of all components of the active energy ray-curable composition excluding the solvent, and the cured film has a film thickness of 1 to 500 nm in a case where a ratio of the fluoropolyether-containing acrylic compound is 50 parts by weight or more and 99.9 parts by weight or less.
[20] The cured film of [18] or [19], which has a water contact angle at a temperature of 25°C and a relative humidity of 40% of 90° or more.
[21] An article having a cured film of any one of [18] to [20] on a surface thereof.

### ADVANTAGEOUS EFFECTS OF INVENTION

The cured film obtained by curing the active energy ray-curable composition containing the fluoropolyether-containing acrylic compound of the present invention hardly deteriorates in anti-fouling property even by abrasion. Therefore, the fluoropolyether-containing acrylic compound is useful as an anti-fouling additive for imparting liquid repellency, anti-fouling property, and abrasion resistance to an ultraviolet-curable or thermosetting hard coating agent, a coating material, a resin, an antireflection coating composition, and the like.

### DESCRIPTION OF EMBODIMENTS

In the present invention, the "acrylic compound" is a generic term for compounds having an acryloyl group and compounds having an α-substituted acryloyl group, and also includes compounds in which two or more acryloyl groups or α-substituted acryloyl groups are introduced into side chains or terminals of various polymers by an arbitrary method. Also, in the present invention, a "(meth)acrylate" refers to one or both of acrylate and methacrylate, a "(meth)acryloyl group" refers to one or both of an acryloyl group and a methacryloyl group, and a "(meth)acrylic acid halide" refers to one or both of an acrylic acid halide and a methacrylic acid halide.

In addition, as used herein, the term "about (a value)" is a numerical value (approximate value) obtained by counting fractions over 1/2 as one and disregarding the rest, and when the lowest digit of the numerical value described is not "0", includes a numerical value range in which the numerical value described is reached by counting fractions of the digit below the lowest digit over 1/2 as one and disregarding the rest. For example, "about 3 equivalents" implies a range from 2.5 equivalents to 3.4 equivalents, and "about 0.02 equivalent" implies a range from 0.015 equivalent to 0.024 equivalent. When the lowest digit of the numerical value described is "0", the term "about (a value)" includes a numerical value range in which the numerical value described is reached by counting fractions of the lowest digit over 1/2 as one and disregarding the rest. For example, "about 80°C" implies a range from 75°C to 84°C.

The fluoropolyether-containing acrylic compound of the present invention has the following general formula (1). 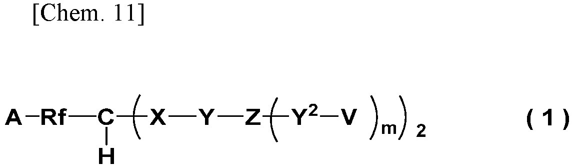 wherein A is a hydrogen atom, a fluorine atom, an unsubstituted or fluorine-substituted C₁-C₂₀ monovalent hydrocarbon group, or a monovalent group of -CH(X-Y-Z(Y²-V)ₘ)₂, Rf is a divalent fluoropolyether group, X is independently a single bond or a divalent heteroatom, Y is independently a C₁-C₂₀ divalent hydrocarbon group which may contain one or more selected from an oxygen atom, a nitrogen atom, a silicon atom, and a sulfur atom, Z is independently an (m+1)-valent linking group having a siloxane structure, Y² is independently a single bond or a C₁-C₂₀ divalent hydrocarbon group which may contain one or more selected from an oxygen atom, a nitrogen atom, and a silicon atom, V is independently a hydrogen atom, or a monovalent organic group containing an acryloyl group or an α-substituted acryloyl group which may contain at least one selected from an oxygen atom and a nitrogen atom, at least one acryloyl or α-substituted acryloyl group being contained per molecule on the average, and m is an integer of 1 to 11.

The fluoropolyether-containing acrylic compound of the present invention is represented by the above formula (1), and it is essential that the fluoropolyether-containing acrylic compound has a perfluoropolyether group, an acryloyl group or an α-substituted acryloyl group, and a siloxane structure in the structure. When the compound represented by the formula (1) has a perfluoropolyether group as a water/oil-repellent group and an acryloyl group or an α-substituted acryloyl group as an active energy ray-curable group, and further has a flexible siloxane structure in a linking group between the perfluoropolyether group and the acryloyl group or the α-substituted acryloyl group, the compound is excellent in compatibility with an active energy ray-curable composition containing a non-fluorine-based acrylic compound as a principal component, and the compound is added to an active energy ray-curable composition, whereby excellent liquid repellency, anti-fouling property, and abrasion resistance can be imparted to a cured film of the curable composition.

In the formula (1), A is a hydrogen atom, a fluorine atom, an unsubstituted or fluorine-substituted C₁-C₂₀ monovalent hydrocarbon group, or a monovalent group represented by -CH(X-Y-Z(Y²-V)ₘ)₂.

A is preferably a hydrogen atom, a fluorine atom, a C₁-C₆ fluoroalkyl group, or a monovalent group represented by -CH(X-Y-Z(Y²-V)ₘ)₂, and is still more preferably a fluorine atom or a C₁-C₆ perfluoroalkyl group. When A is a fluorine atom or a C₁-C₆ perfluoroalkyl group, the fluoropolyether group has high molecular mobility and low surface energy even after the cured film is formed, so that a cured film particularly excellent in liquid repellency, anti-fouling property, and abrasion resistance can be obtained.

In the formula (1), Rf is a divalent fluoropolyether group, and is preferably a divalent perfluoropolyether group with a molecular weight of 400 to 40,000 composed of a C₁-C₆ perfluoroalkylene group and an oxygen atom, and Rf particularly preferably has a perfluorooxyalkylene structure having 1 to 6 carbon atoms, particularly 1 to 3 carbon atoms as follows as a main repeat unit.

-CF₂O-

-CF₂CF₂O-

-CF(CF₃)CF₂O-

-CF₂CF₂CF₂O-

These structures may be any one homopolymer, or a random or block polymer composed of a plurality of structures.

Examples of Rf having such a structure include a divalent fluoropolyether group represented by the following general formula (2). 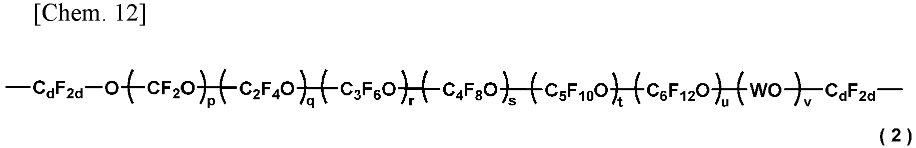 wherein W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.

In the formula (2), W is a C₁-C₆ fluoroalkylene group containing at least one hydrogen atom, examples of which include perfluoroalkylene groups such as CF₂, C₂F₄, C₃F₆, C₄F₈, C₅F₁₀ and C₆F₁₂ units in which one or two fluorine atoms are substituted by hydrogen atoms.

In the formula (2), d is independently for each unit an integer of 1 to 3, preferably 1 or 2.

Also, p, q, r, s, t, u, and v are each an integer of 0 to 200, preferably p is an integer of 0 to 100, q is an integer of 0 to 100, r is an integer of 0 to 100, s is an integer of 0 to 100, t is an integer of 0 to 100, u is an integer of 0 to 100, v is an integer of 0 to 100, and the sum of p, q, r, s, t, u, and v is 3 to 200, preferably 10 to 100. When the sum of p, q, r, s, t, u, and v is not more than the upper limit, adhesion and curability of a resulting cured film are satisfactory, and when the same is not less than the lower limit, the characteristics of fluoropolyether group can be fully developed, which is preferable.

When r, s, t, u, and v are all 0, it is preferable that p and q are each an integer of 5 to 100, and the sum of p and q is 10 to 105, and particularly 15 to 60.

In the formula (2), each unit may be linear or branched. Also, individual repeat units shown in parentheses with p, q, r, s, t, u, and v may be randomly bonded.

Specific examples of Rf include those shown below.

[Chem. 13] -CF₂O(CF₂O)_{p'}CF₂--CF₂O(CF₂O)_{p'}(CF₂CF₂O)_{q'}CF₂--CF₂O(CF₂O)_{p'}(CF₂CF₂O)_{q'}(CF₂CF₂CF₂O)_{r'}CF₂--CF₂O(CF₂O)_{p'}(CF₂CF₂O)_{q'}(CF₂CF₂CF₂CF₂O)_{s'}CF₂--CF₂O(CF₂O)_{p'}(CF₂CF₂O)_{q'}(CF₂CF₂CF₂O)_{r'}(CF₂CF₂CF₂CF₂O)_{s'}CF₂--CF₂O(CF₂O)_{p'}(CF₂CF₂O)_{q'}(CF₂CF₂CF₂O)_{r'}(CF₂CF₂CF₂CF₂O)_{s'}(CF₂CF₂CF₂CF₂CF₂O)_{t'}CF₂--CF₂O(CF₂O)_{p'}(CF₂CF₂O)_{q'}(CF₂CF₂CF₂O)_{r'}(CF₂CF₂CF₂CF₂O)_{3'}(CF₂CF₂CF₂CF₂CF₂O)_{t'}(CF₂CF₂CF₂CF₂CF₂CF₂O)_{u'}CF₂--CF₂O(CF₂CF₂O)_{q'}CF₂- 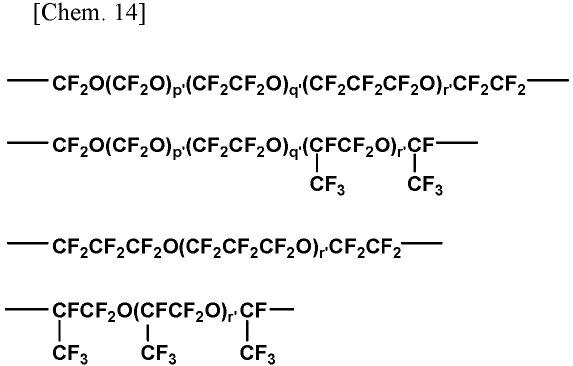 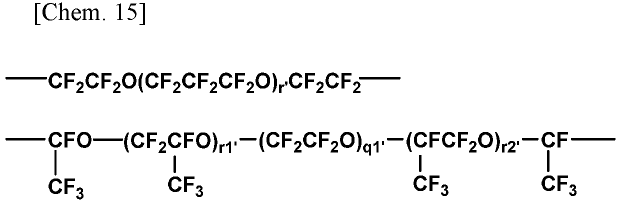 wherein p', q', r', s', t', u', q1', r1', and r2' are each an integer of 1 or more, and the sum of p', q', r', s', t', u', q1', r1', and r2' in each formula is 3 to 200, and individual repeat units shown in parentheses with p', q', r', s', t', and u' may be randomly bonded.

Preferred examples of Rf having such a structure include the following structures: 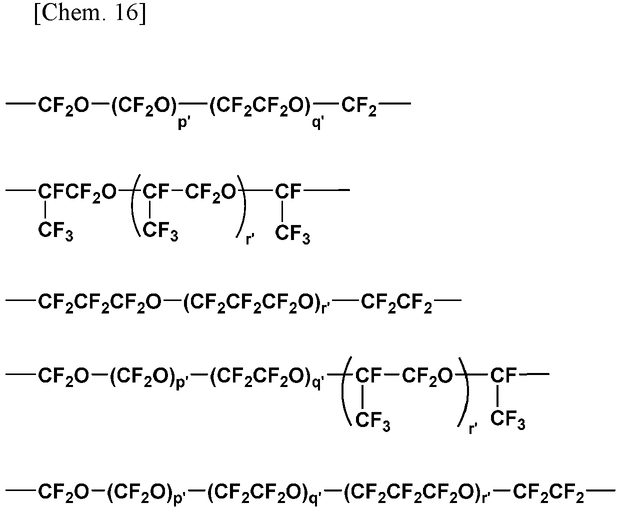 wherein p', q', and r' are each an integer of 1 or more, the sum of p', q', and r' in each formula is 3 to 200, and individual repeat units shown in parentheses with p', q', and r' may be randomly bonded.

A molecular weight of Rf is not particularly limited as long as a numerical average molecular weight of a corresponding structural part is each contained in the range of 500 to 40,000, preferably 2,000 to 25,000, and a molecular weight distribution (or distribution of degree of polymerization) thereof is not particularly limited. In the present invention, the molecular weight (or the degree of polymerization or the number of repeat units) can be determined as a numerical average molecular weight (or number average degree of polymerization) in terms of polystyrene by gel permeation chromatography (GPC) analysis using a fluorine-based solvent as a developing solvent, and is preferably a numerical average molecular weight (or number average degree of polymerization) calculated from a characteristic peak intensity ratio between a terminal structure and a main chain structure of a fluoropolyether-containing acrylic compound based on ¹H-NMR analysis and ¹⁹F-NMR analysis (the same applies hereinafter).

In the formula (1), X is independently a single bond or a divalent heteroatom, and examples of the divalent heteroatom include an oxygen atom, a nitrogen atom, and a sulfur atom. In the formula (1), two X's are present at one end of the molecular chain when A is a hydrogen atom, a fluorine atom, or an unsubstituted or fluorine-substituted C₁-C₂₀ monovalent hydrocarbon group, and two X's are present at each of both ends of the molecular chain (four X's in the molecule) when A is a monovalent group represented by -CH(X-Y-Z(Y²-V)ₘ)₂; it is preferable that one X is a divalent heteroatom and the other X is a single bond at each end, and it is still more preferable that one X is an oxygen atom and the other X is a single bond at each end.

In the formula (1), Y is independently a C₁-C₂₀ divalent hydrocarbon group which may contain one or more selected from an oxygen atom, a nitrogen atom, a silicon atom, and a sulfur atom. Specific examples of Y include C₁-C₂₀, preferably C₁-C₁₀ alkylene groups such as methylene, ethylene, propylene (trimethylene, methylethylene), butylene (tetramethylene, methylpropylene), hexamethylene, and octamethylene, C₆-C₂₀ arylene groups such as phenylene, combinations of at least two of the foregoing (e.g., C₂-C₁₀ alkylene groups containing a C₆-C₈ arylene group (C₈-C₁₈ alkylene arylene groups), and the like), and groups in which one or more bonds selected from an amide bond (e.g., an unsubstituted amide bond, an N-methyl-substituted amide bond, or an N-phenyl-substituted amide bond), an ether bond, a carbonyl bond, an ester bond, a diorganosilylene group (e.g., a dialkylsilylene group such as dimethylsilylene), a silarylene bond (e.g., a silphenylene bond), and a silalkylene bond (e.g., a silethylene bond) are linked or intervened, and Y is preferably a C₂-C₁₀ alkylene group, a C₂-C₁₀ alkylene group containing a C₆-C₈ arylene group, and more preferably a C₃-C₆ linear alkylene group.

Specific examples of Y include the following groups: 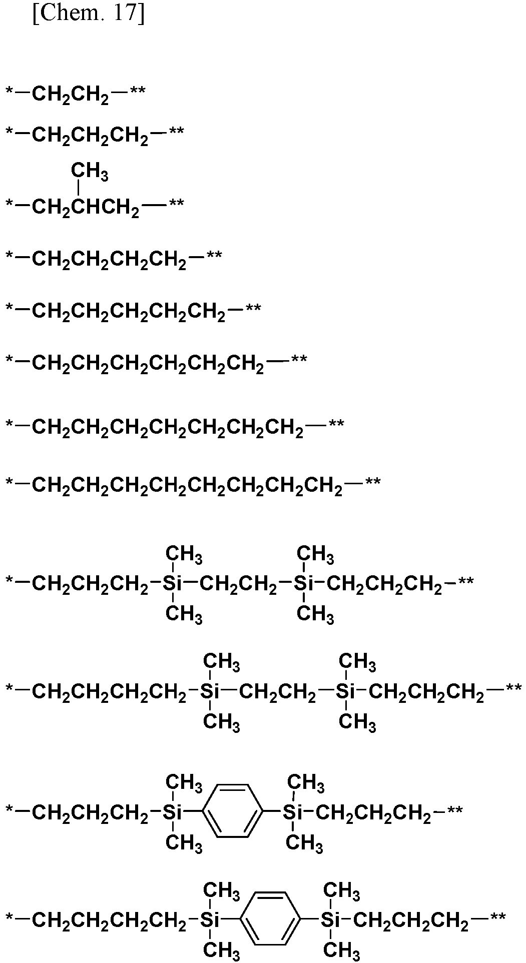 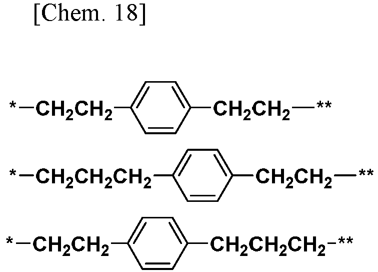 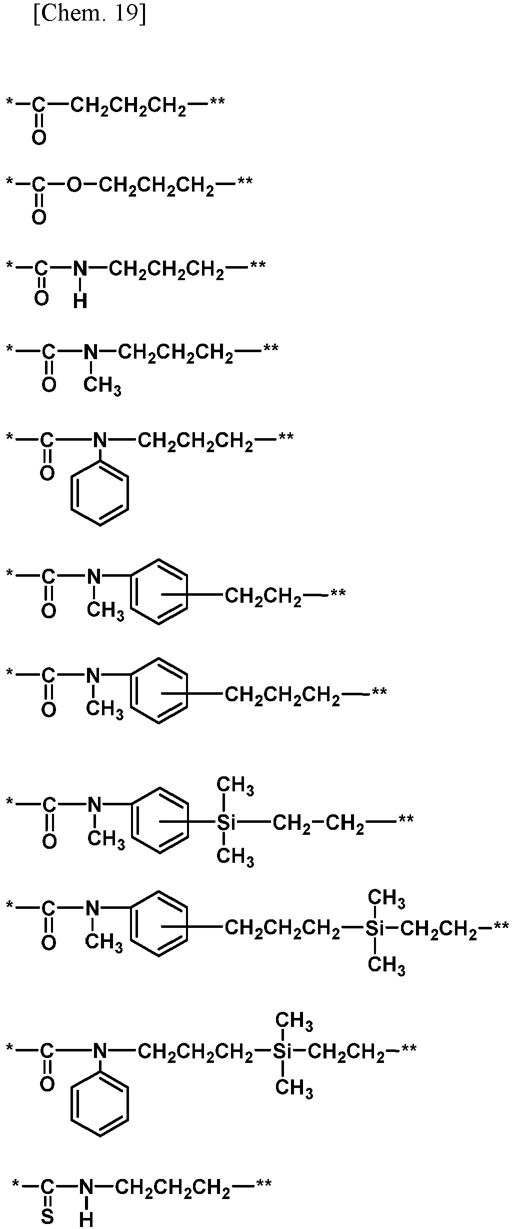 wherein * is a bond bonded to X in the formula (1), and ** is a bond bonded to Z in the formula (1).

Y is more preferably one described below. 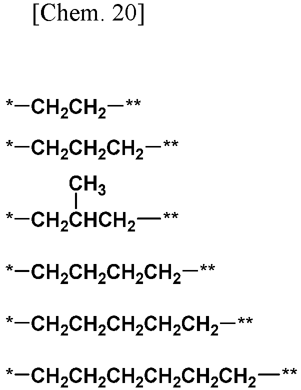 wherein * is a bond bonded to X in the formula (1), and ** is a bond bonded to Z in the formula (1).

In the formula (1), Z is independently an (m+1)-valent (i.e., di to dodeca-valent) linking group having a siloxane structure, and is preferably a linear tri to deca-valent organopolysiloxane residue of 2 to 10 silicon atoms, or a branched or cyclic tri to deca-valent organopolysiloxane residue of 3 to 10 silicon atoms.

Specific examples of Z include the following groups: 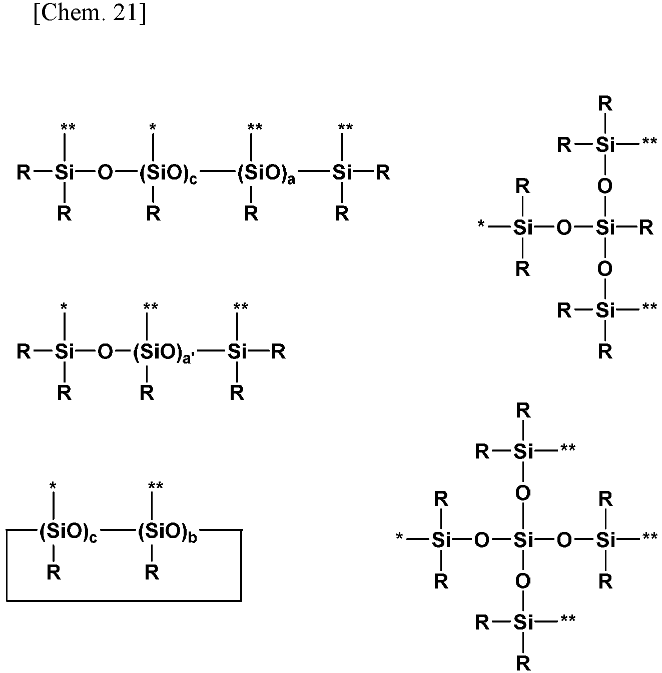 wherein * is a bond bonded to Y in the formula (1), ** is a bond bonded to Y² in the formula (1), R is independently a C₁-C₂₀ monovalent hydrocarbon group, a and a' are integers of 0 to 6, b is an integer of 2 to 9, c is 1, and individual repeat units shown in parentheses with a and c may be randomly bonded.

Among these, Z is preferably an (m'+1)-valent linking group represented by the following formula. 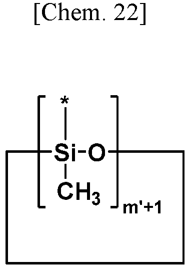 wherein * is a bond bonded to Y and Y² in the formula (1), one of * is a bond bonded to Y, and m' is an integer of 2 to 11.

In the formula (1), Y² is independently a single bond or a C₁-C₂₀ divalent hydrocarbon group which may contain one or more selected from an oxygen atom, a nitrogen atom, and a silicon atom, and is preferably a C₃-C₁₀ alkylene group which may contain an oxygen atom, or a C₃-C₁₀ alkylene group containing a C₆-C₈ arylene group (e.g., a C₉-C₁₈ alkylene arylene group). When Y² is a single bond, V is preferably a hydrogen atom.

Examples of more preferred structure of Y² include the following structures:

-CH₂CH₂CH₂-

-CH₂CH₂CH₂OCH₂-

-CH₂CH₂(OC₂H₄)_{k'}(OC₃H₆)_{j'}(OC₄H₈)_{i'}-

-CH₂CH₂CH₂(OC₂H₄)_{k'}(OC₃H₆)_{j'}(OC₄H₈)_{i'}-

wherein k' is an integer of 0 to 10, preferably an integer of 0 to 7, j' is an integer of 0 to 10, preferably an integer of 0 to 7, i' is an integer of 0 to 10, preferably an integer of 0 to 7, and the sum of k', j', and i' is 1 to 17, preferably 1 to 7, individual repeat units shown in parentheses with k', j', and i' may be randomly bonded, and the (OC₃H₆) unit and the (OC₄H₈) unit may be independently linear or branched.

Examples of particularly preferred structure of Y² include the following structures:

*-CH₂CH₂CH₂(OC₂H₄)_{k''-}**

*-CH₂CH₂CH₂(OC₃H₆)_{j''}-**

wherein * is a bond bonded to Z in the formula (1), and ** is a bond bonded to V in the formula (1), wherein k" is an integer of 1 to 4, and j" is an integer of 1 to 4, and the (OC₃H₆) unit may be independently linear or branched.

**In** the formula (1), V is independently a hydrogen atom, or a monovalent organic group containing an acryloyl group or an α-substituted acryloyl group which may contain at least one selected from an oxygen atom and a nitrogen atom, and at least one, preferably 2 to 40, and more preferably 2 to 18 acryloyl group or α-substituted acryloyl group being contained per molecule on average.

V is preferably a monovalent group represented by the following formula. 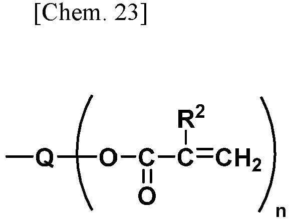 wherein R² is independently a hydrogen atom, a fluorine atom, a methyl group, or a trifluoromethyl group, Q is a single bond or a divalent or trivalent hydrocarbon group which may contain one or more bonds selected from an ether bond, an ester bond, and a urethane bond, and n is 1 or 2.

Here, R² is independently a hydrogen atom, a fluorine atom, a methyl group, or a trifluoromethyl group, and a hydrogen atom and a methyl group are preferable.

In addition, Q is a single bond, or a divalent or trivalent hydrocarbon group which may contain one or more bonds selected from an ether bond, an ester bond, and a urethane bond.

Specific examples of Q include the following groups: 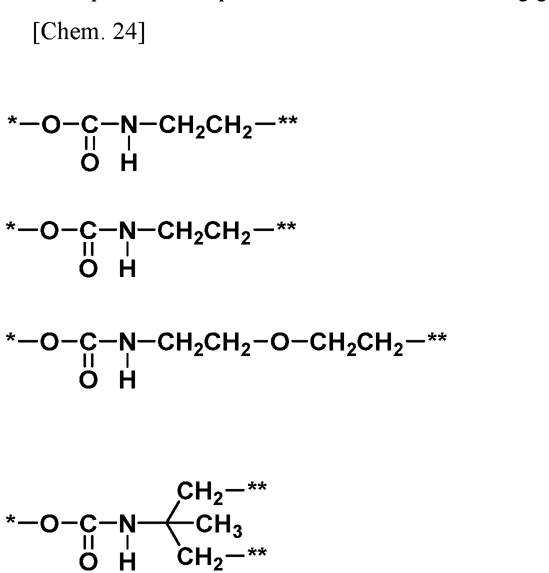 wherein * is a bond bonded to Y² in the formula (1), and ** is a bond bonded to an acryloyl group or an α-substituted acryloyl group.

Also, n is 1 or 2, preferably 1.

V is still more preferably a structure represented by the following formula.

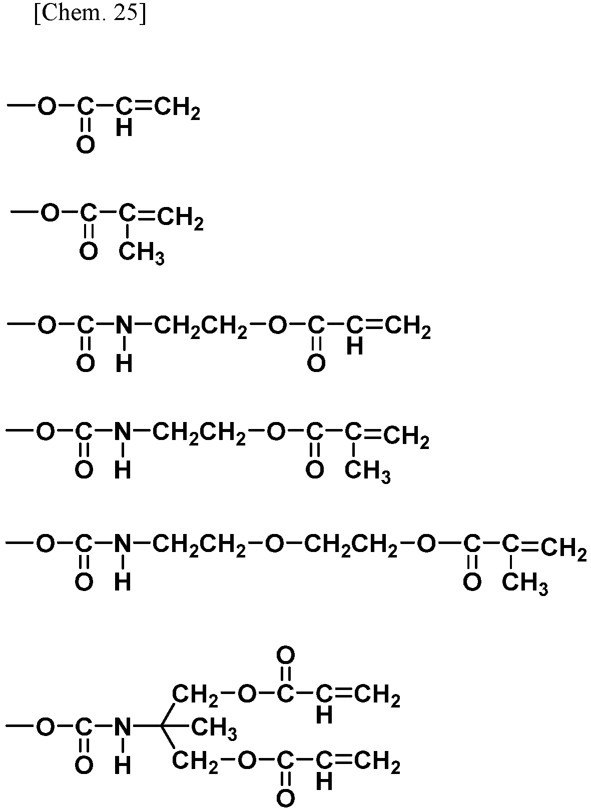

In the formula (1), m is an integer of 1 to 11, preferably an integer of 2 to 5. If it is less than 1, the adhesion to the substrate is deteriorated, and if it is more than 11, the acrylic value is too high and the performance is adversely affected.

As the fluoropolyether-containing acrylic compound represented by the formula (1), a compound represented by the following general formula (3) is most preferable. 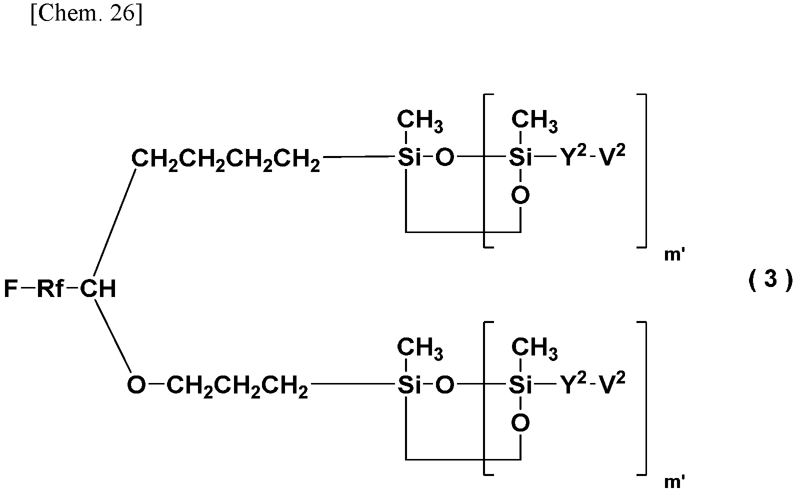 wherein Rf, Y², and m' are the same as described above, and V² has any one of the following formulae.

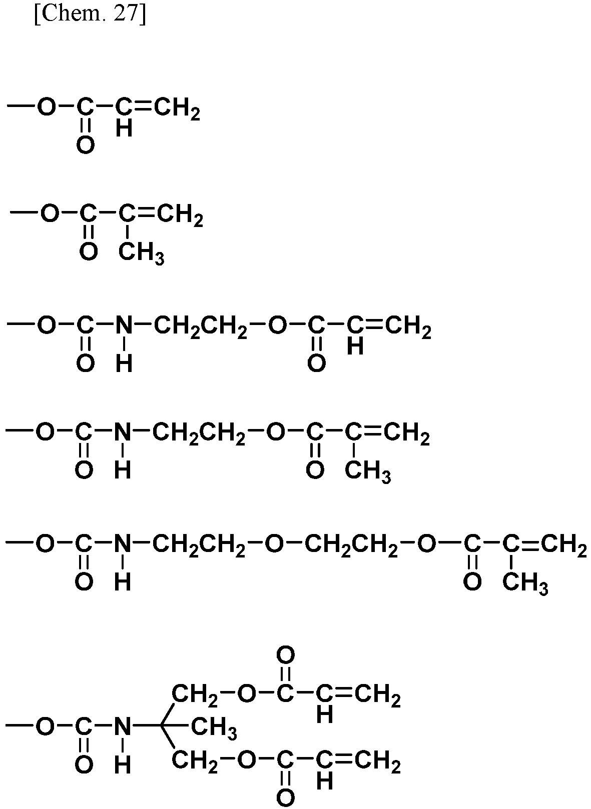

Examples of the fluoropolyether-containing acrylic compound represented by the formula (1) include those polymers represented by the following formulae: 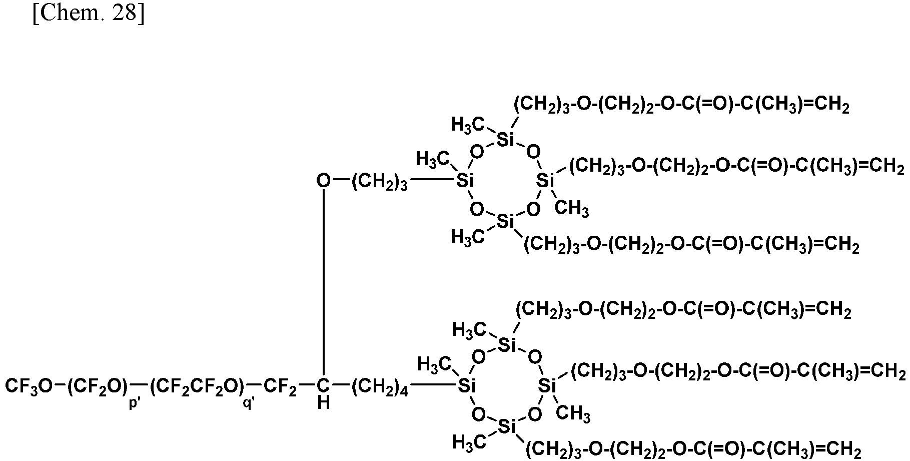 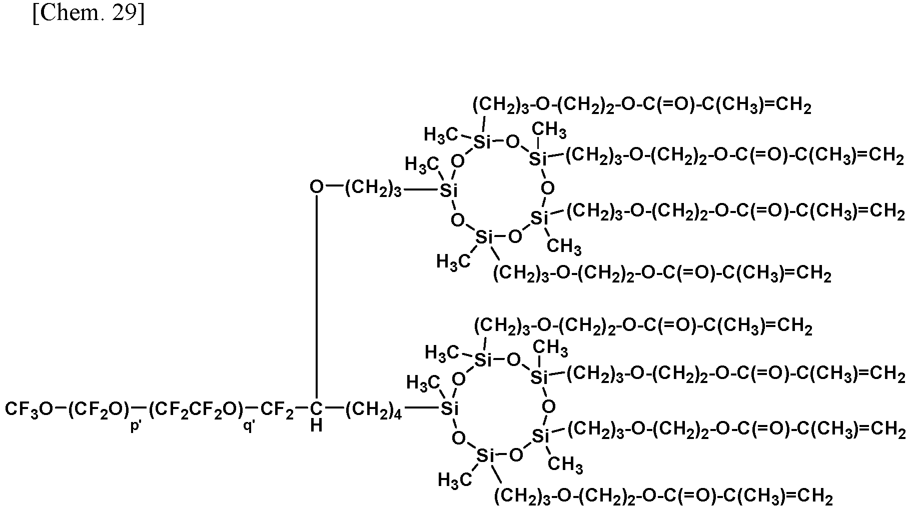 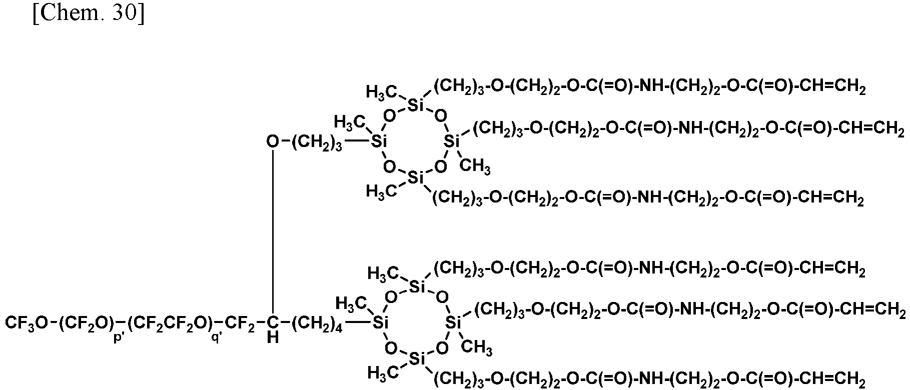 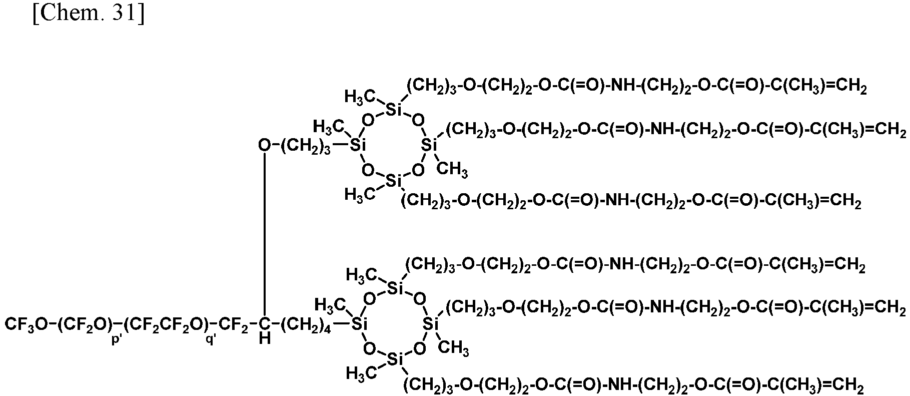 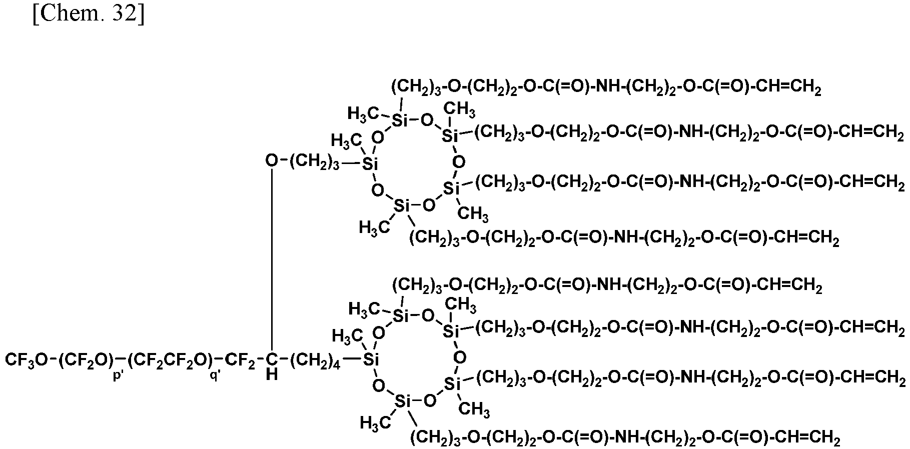 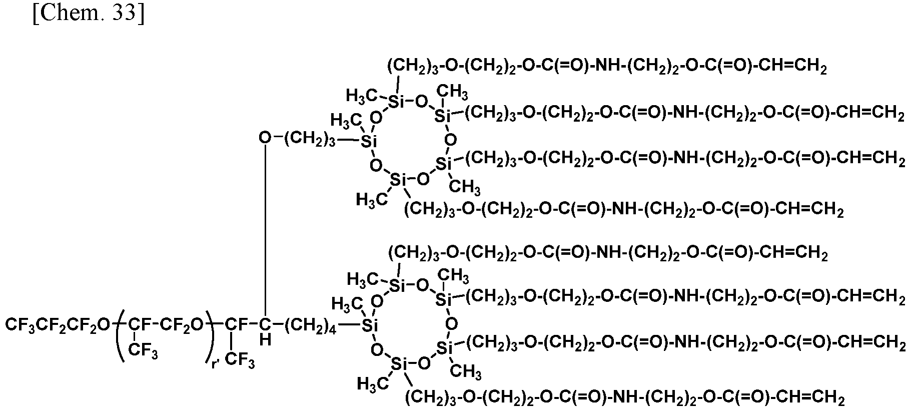 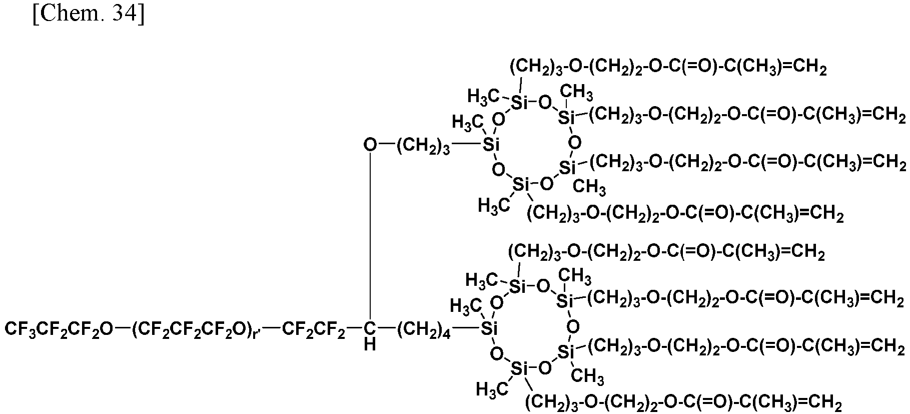 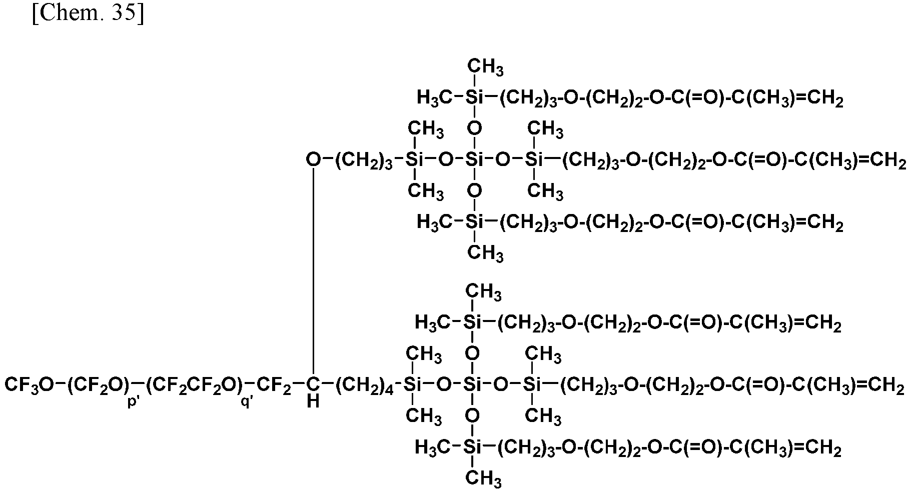 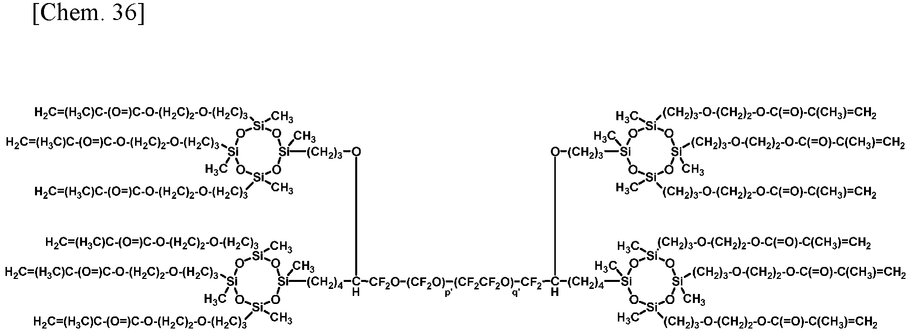 wherein p', q', r' and the sum thereof in each formula are the same as described above, and individual repeat units shown in parentheses with p', q', and r' may be randomly bonded.

A method for preparing the fluoropolyether-containing acrylic compound represented by the formula (1) is, for example, the method shown below.

First, a fluoropolyether-containing polymer having a carbonyl group at an end, represented by the following general formula (4): 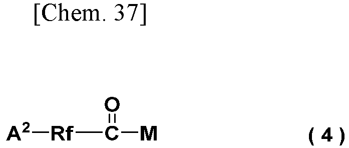 wherein Rf is the same as described above, A² is a hydrogen atom, a fluorine atom, a C₁-C₆ fluoroalkyl group, or a monovalent group represented by -C(=O)-M, and M is a detachable monovalent group
is reacted with an organic metal reagent having an aliphatic unsaturated double bond (olefin site) at an end and a β-hydrogen atom (i.e., hydrogen atom bonded to the carbon atom at β position relative to metal atom), preferably in the presence of a solvent.

Here, in the formula (4), A² is a hydrogen atom, a fluorine atom, a C₁-C₆ fluoroalkyl group, or a monovalent group represented by -C(=O)-M, and is preferably a fluorine atom or a C₁-C₆ perfluoroalkyl group.

In the formula (4), M is an eliminatable monovalent group, for example, a hydrogen atom, a halogen atom, hydroxy, alkoxy, amino, alkylamino, thiol, alkylthio or acyl group.

Examples of such M include the following groups.

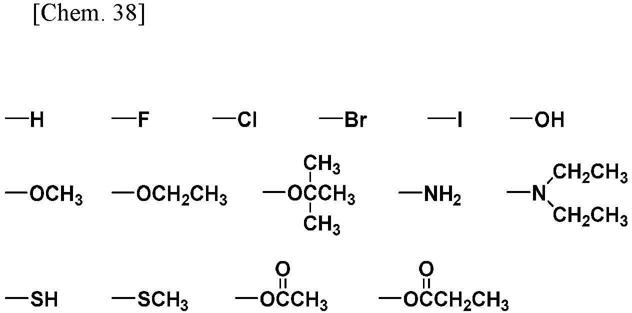

Examples of the fluoropolyether-containing polymer having a carbonyl group at an end, represented by the formula (4), are shown below. 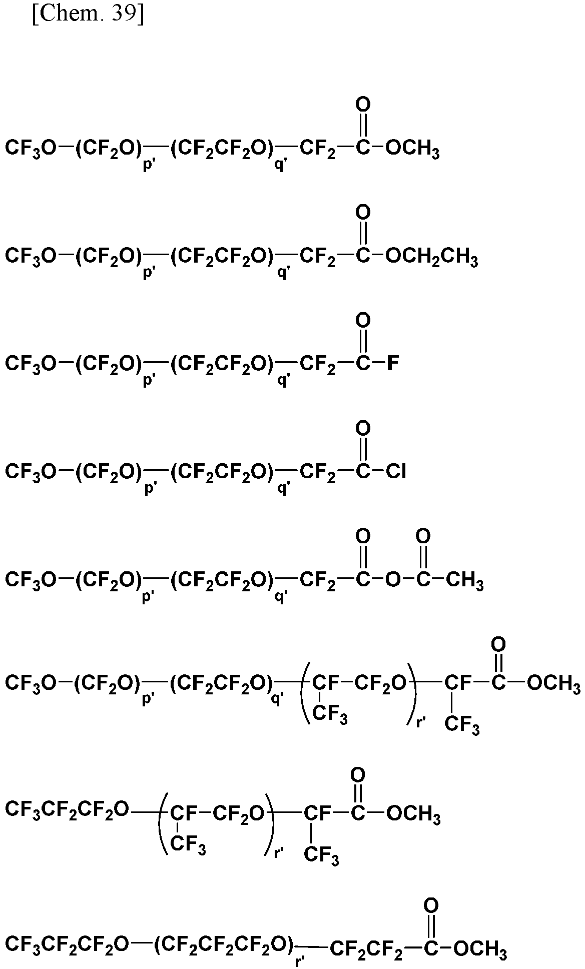 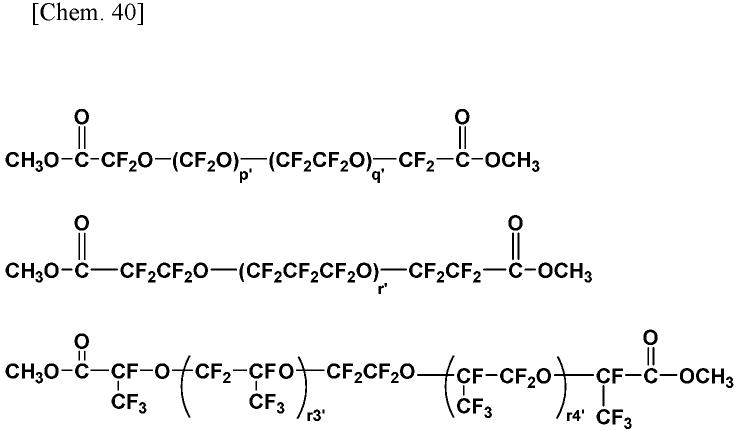 wherein p', q', r' and the sum thereof in each formula are the same as described above, and individual repeat units shown in parentheses with p', q', and r' may be randomly bonded, r3' and r4' each are an integer of 1 or more, and the sum of r3' and r4' is 2 to 199.

Illustrative of the organic metal reagent having an aliphatic unsaturated double bond at an end and a β-hydrogen atom are organolithium reagents, Grignard reagents, organozinc reagents, organoboron reagents, and organotin reagents. Inter alia, Grignard reagents and organozinc reagents are preferred for ease of handling. The following compounds are preferably used as the organic metal reagent.

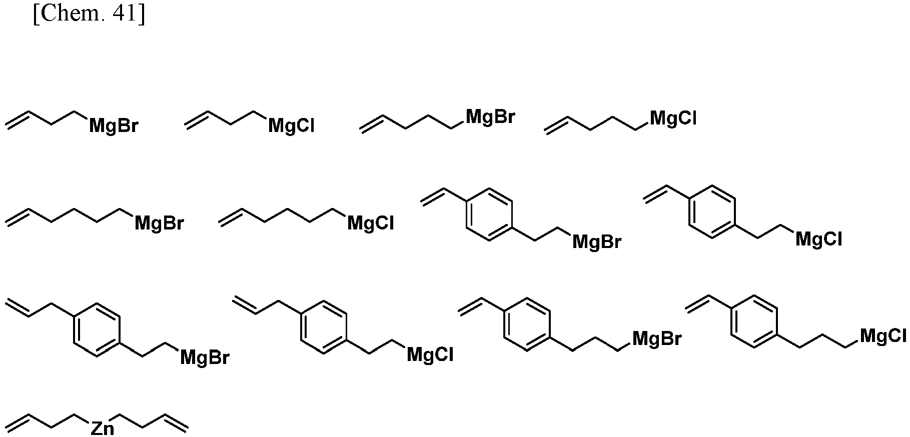

The amount of the organic metal reagent having an aliphatic unsaturated double bond at an end and a β-hydrogen atom is preferably 2 to 5 equivalents, more preferably 2.5 to 3.5 equivalents, still more preferably about 3 equivalents per equivalent of reactive end group (eliminatable monovalent group) in the fluoropolyether-containing polymer having a carbonyl group at an end, represented by the formula (4).

A solvent may be used in the reaction of the fluoropolyether-containing polymer having a carbonyl group at an end, represented by the formula (4), with the organic metal reagent having an aliphatic unsaturated double bond at an end and a β-hydrogen atom. Although the solvent used herein is not particularly limited, a fluorochemical solvent is preferably used because the reactant is a fluorine compound. Suitable fluorochemical solvents include 1,3-bistrifluoromethylbenzene, trifluoromethylbenzene, perfluoro solvents (Asahiklin AC2000, Asahiklin AC6000) marketed from AGC Inc., hydrofluoroether (HFE) solvents (NOVEC 7100: C₄F₉OCH₃, NOVEC 7200: C₄F₉OC₂H₅, NOVEC 7300: C₂F₅-CF(OCH₃)-CF(CF₃)₂) marketed from 3M, and perfluoro solvents (PF5080, PF5070, PF5060) marketed from 3M. The fluorochemical solvents may be used alone or in admixture.

Besides the fluorochemical solvent, an organic solvent may also be used as the solvent. Ether solvents such as tetrahydrofuran (THF), monoethylene glycol dimethyl ether, diethylene glycol dimethyl ether, triethylene glycol dimethyl ether, tetraethylene glycol dimethyl ether, and dioxane may be used as the organic solvent. The organic solvent may be used alone or in admixture with the fluorochemical solvent.

The amount of the solvent used is 10 to 600 parts by weight, preferably 50 to 400 parts by weight, and still more preferably about 200 to 350 parts by weight per 100 parts by weight of the fluoropolyether-containing polymer having a carbonyl group at an end, represented by the formula (4).

Conditions for the reaction of the fluoropolyether-containing polymer having a carbonyl group at an end, represented by the formula (4), with the organic metal reagent having an aliphatic unsaturated double bond at an end and a β-hydrogen atom include 0 to 80°C, preferably 45 to 70°C, more preferably about 50°C and 1 to 12 hours, preferably 5 to 7 hours.

After the reaction is performed under the above conditions, the reaction is stopped, and the solution is separated into a water layer and a fluorochemical solvent layer by separatory operation. The fluorochemical solvent layer is washed with an organic solvent, after which the solvent is distilled off, obtaining a fluoropolyether-containing polymer having a hydroxy group and an olefin site at an end of the molecular chain, represented by the following general formula (5). 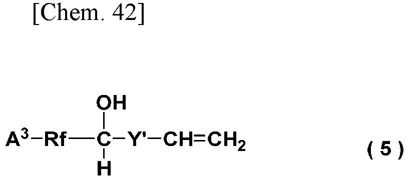 wherein Rf is the same as described above, Y' is independently a single bond or a C₁-C₁₈ divalent hydrocarbon group which may contain one or more selected from an oxygen atom, a nitrogen atom, a silicon atom, and a sulfur atom, and A³ is a hydrogen atom, a fluorine atom, a C₁-C₆ fluoroalkyl group, or a monovalent group represented by the following formula: 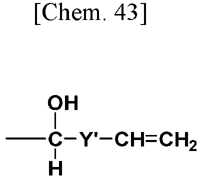 wherein, Y' is the same as described above.

Here, in the formula (5), A³ is a hydrogen atom, a fluorine atom, a C₁-C₆ fluoroalkyl group, or a monovalent group represented by the above formula, and is preferably a fluorine atom or a C₁-C₆ perfluoroalkyl group.

Also, in the formula (5), Y' is a single bond or a C₁-C₁₈, particularly C₁-C₁₂ divalent hydrocarbon group which may contain one or more selected from an oxygen atom, a nitrogen atom, a silicon atom, and a sulfur atom. Specific examples thereof include a single bond, C₁-C₈ alkylene groups such as methylene, ethylene, propylene (trimethylene, methylethylene), butylene (tetramethylene, methylpropylene), hexamethylene, and octamethylene, and C₁-C₁₀ alkylene groups containing a C₆-C₈ arylene group such as phenylene (e.g., C₇-C₁₈ alkylene arylene groups). Y' is preferably a C₁-C₄ straight alkylene group.

Examples of such Y' include the following groups: 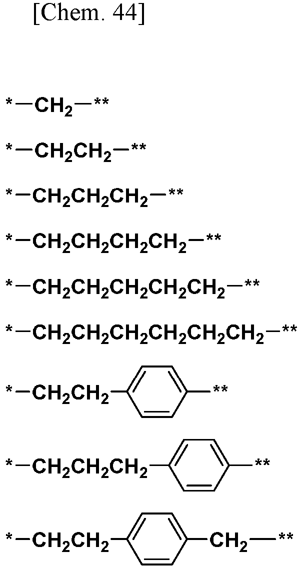 wherein * is a bond bonded to a carbon atom bonded to Rf in the formula (5), and ** is a bond bonded to a vinyl group in the formula (5).

Examples of the fluoropolyether-containing polymer having a hydroxy group and an olefin site at the end of the molecular chain, represented by the formula (5), are shown below. 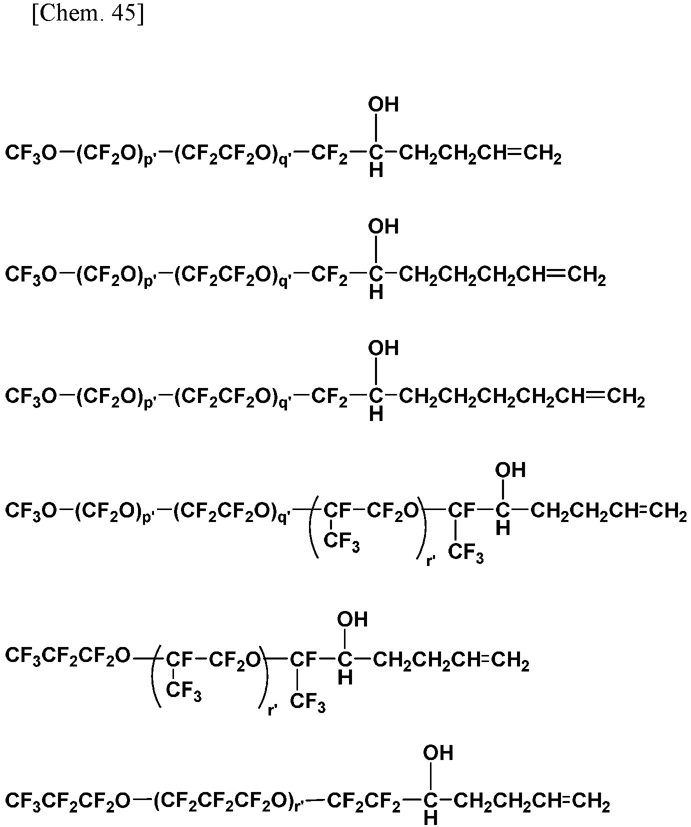 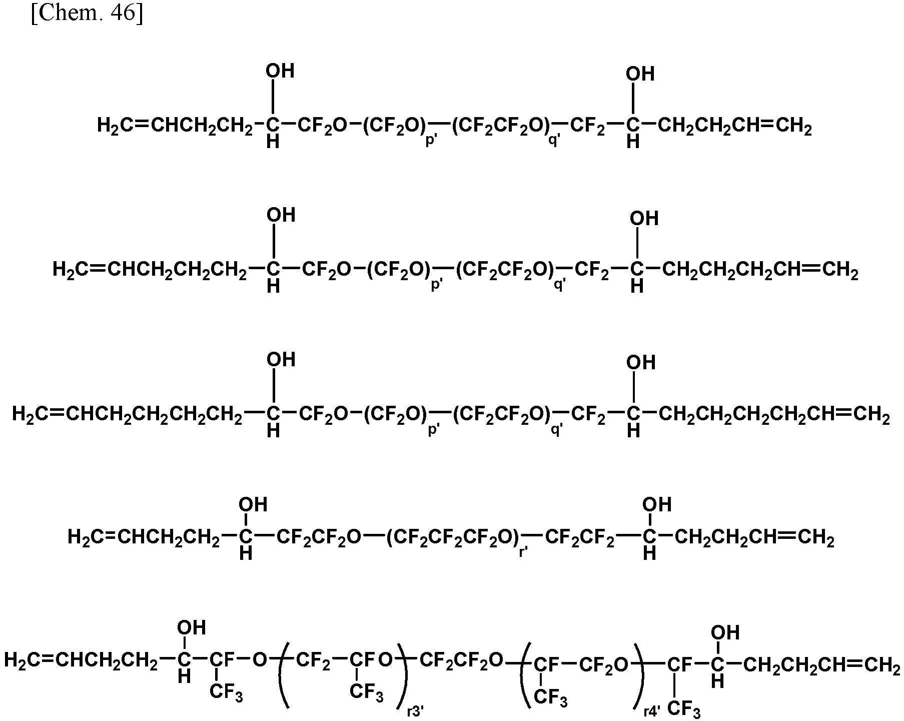 wherein p', q', r', r3', and r4' and the sum thereof in each formula are the same as described above, and individual repeat units shown in parentheses with p', q', and r' may be randomly bonded.

Next, the fluoropolyether-containing polymer having a hydroxy group and an olefin site at the end of the molecular chain, represented by the formula (5), obtained above, and an olefin-introducing agent are aged in the presence of a base at a temperature of 0 to 90°C, preferably 40 to 60°C, more preferably about 50°C for 1 to 48 hours, preferably 10 to 40 hours, more preferably about 24 hours, optionally along with an additive for enhancing reactivity and a solvent.

Here, as the olefin-introducing agent to be reacted with the fluoropolyether-containing polymer having a hydroxy group and an olefin site at the end of the molecular chain, represented by the formula (5), for example, a halide or the like can be used, and specific examples thereof include allyl bromide, allyl chloride, and 3-butenyl bromide.

The amount of the olefin-introducing agent used is 1 to 15 equivalents, more preferably 3 to 6 equivalents, still more preferably about 4 equivalents per equivalent of the reactive end group (hydroxy group) in the fluoropolyether-containing polymer having a hydroxy group and an olefin site at the end of the molecular chain, represented by the formula (5).

Examples of the base used in the reaction of the fluoropolyether-containing polymer having a hydroxy group and an olefin site at the end of the molecular chain, represented by the formula (5), with the olefin-introducing agent include amines and alkali metal bases. Exemplary amines include triethylamine, diisopropylethylamine, pyridine, DBU, and imidazole. Exemplary alkali metal bases include sodium hydroxide, potassium hydroxide, sodium hydride, potassium hydride, alkyllithium, tert-butoxypotassium, lithium diisopropylamide, lithium bis(trimethylsilyl)amide, sodium bis(trimethylsilyl)amide, and potassium bis(trimethylsilyl)amide.

The amount of the base used is 1 to 20 equivalents, more preferably 4 to 8 equivalents, still more preferably about 6 equivalents per equivalent of the reactive end group (hydroxy group) in the fluoropolyether-containing polymer having a hydroxy group and an olefin site at the end of the molecular chain, represented by the formula (5).

For the reaction of the fluoropolyether-containing polymer having a hydroxy group and an olefin site at the end of the molecular chain, represented by the formula (5), with the olefin-introducing agent, an additive for enhancing reactivity such as tetrabutylammonium halide or alkali metal halide may be used. Exemplary additives include tetrabutylammonium chloride, tetrabutylammonium bromide, tetrabutylammonium iodide, tetrabutylammonium hydrogen sulfate, sodium iodide, potassium iodide, cesium iodide, and crown ethers. In the reaction system, catalytic halogen exchange takes place between the additive and the olefin-introducing agent to enhance reactivity whereas a crown ether coordinates with the metal to enhance reactivity.

The amount of the additive used is 0.005 to 0.1 equivalent, more preferably 0.01 to 0.05 equivalent, still more preferably about 0.02 equivalent per equivalent of the reactive end group (hydroxy group) in the fluoropolyether-containing polymer having a hydroxy group and an olefin site at the end of the molecular chain, represented by the formula (5).

**In** the reaction of the fluoropolyether-containing polymer having a hydroxy group and an olefin site at the end of the molecular chain, represented by the formula (5), with the olefin-introducing agent, a solvent may be used. Although the solvent is not essential, a fluorochemical solvent is typically used as the solvent. Suitable fluorochemical solvents include fluorinated aromatic hydrocarbon solvents such as 1,3-bis(trifluoromethyl)benzene and trifluoromethylbenzene, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M). Organic solvents may also be used, for example, dimethylforamide, dimethylacetamide, dimethyl sulfoxide, acetonitrile, and tetrahydrofuran (THF).

The amount of the solvent used is 10 to 300 parts by weight, preferably 30 to 150 parts by weight, and still more preferably about 50 parts by weight per 100 parts by weight of the fluoropolyether-containing polymer having a hydroxy group and an olefin site at the end of the molecular chain, represented by the formula (5).

By the reaction of the fluoropolyether-containing polymer having a hydroxy group and an olefin site at the end of the molecular chain, represented by the formula (5), with the olefin-introducing agent, a fluoropolyether-containing polymer having two olefin sites at an end of the molecular chain, represented by the following general formula (6), is obtained. 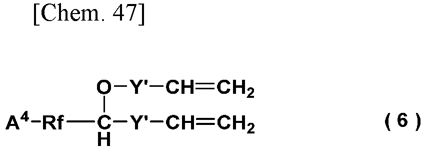 wherein Rf and Y' are the same as described above, and A⁴ is a hydrogen atom, a fluorine atom, a C₁-C₆ fluoroalkyl group, or a monovalent group represented by the following formula: 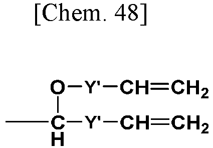 wherein, Y' is the same as described above.

Here, in the formula (6), A⁴ is a hydrogen atom, a fluorine atom, a C₁-C₆ fluoroalkyl group, or a monovalent group represented by the above formula, and is preferably a fluorine atom or a C₁-C₆ perfluoroalkyl group.

Preferable examples of the fluoropolyether-containing polymer having two olefin sites at the end of the molecular chain, represented by the formula (6), are shown below. 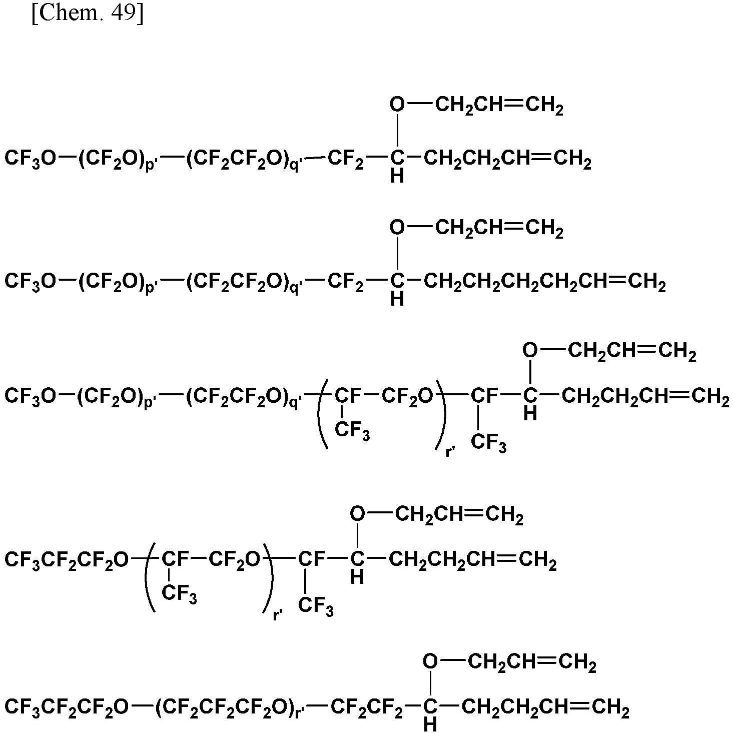 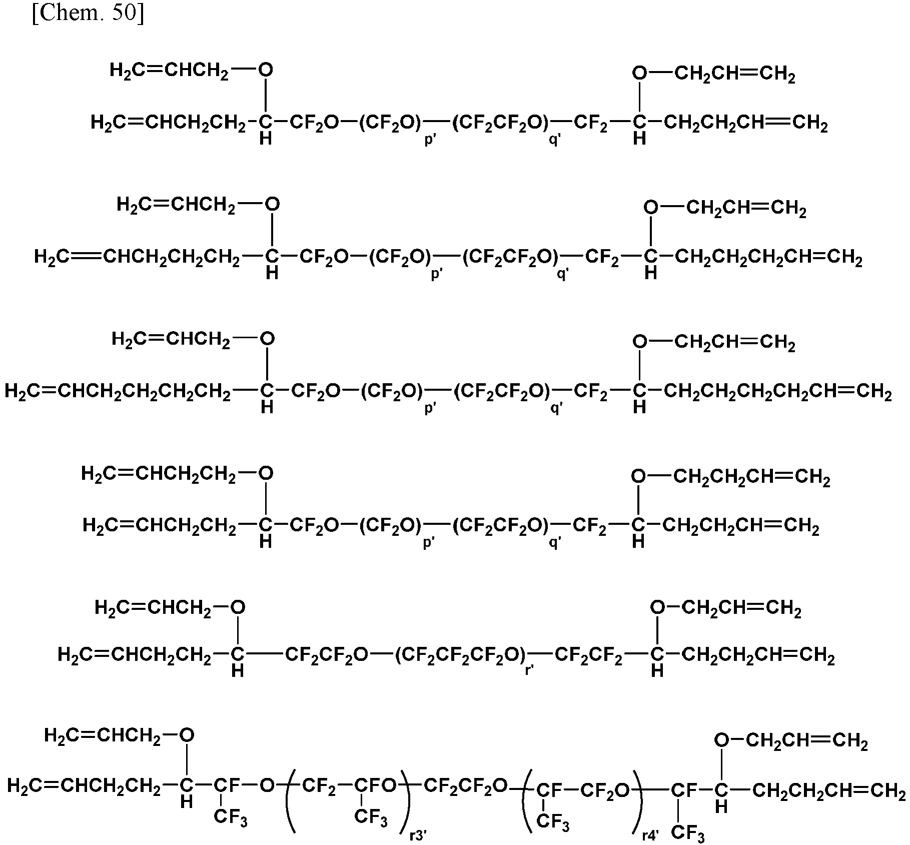 wherein p', q', r', r3', and r4' and the sum thereof in each formula are the same as described above, and individual repeat units shown in parentheses with p', q', and r' may be randomly bonded.

Next, the fluoropolyether-containing polymer having two olefin sites at the end of the molecular chain, represented by the formula (6), obtained above is dissolved in a solvent such as fluorochemical solvent, typically 1,3-bis(trifluoromethyl)benzene. An organosilicon compound having two or more SiH groups in the molecule such as 2,4,6,8-tetramethylcyclotetrasiloxane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for 1 to 72 hours, preferably 20 to 36 hours, more preferably about 24 hours.

Here, as the organosilicon compound having two or more SiH groups in the molecule to be reacted with the fluoropolyether-containing polymer having two olefin sites at the end of the molecular chain, represented by the above formula (6), a compound represented by the following formula is preferable. 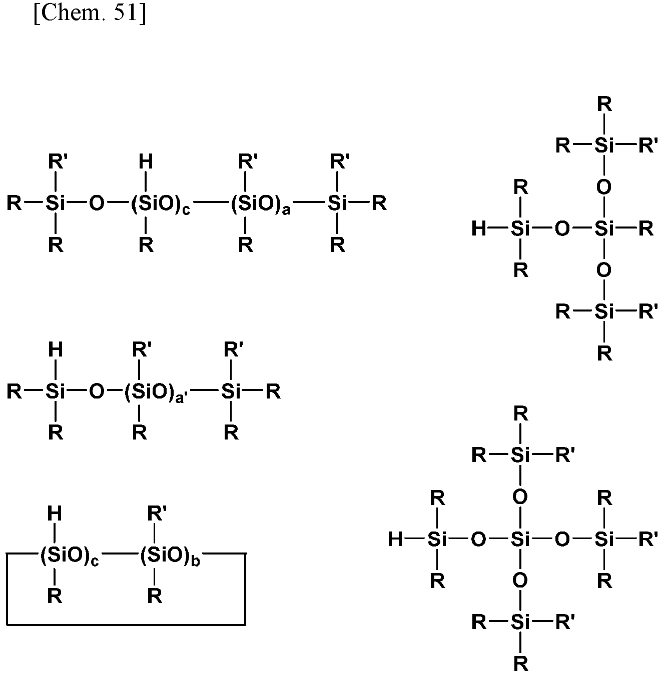 wherein R, a, a', b, and c are the same as described above, R' is independently a hydrogen atom or a C₁-C₂₀ monovalent hydrocarbon group, at least one R' is a hydrogen atom, and individual repeat units shown in parentheses with a and c may be randomly bonded.

Here, R' is a hydrogen atom or a C₁-C₂₀ monovalent hydrocarbon group, preferably a hydrogen atom or a C₁-C₂₀ alkyl group such as methyl, ethyl, propyl or butyl, or a C₆-C₁₀ aryl group such as phenyl, and more preferably a hydrogen atom. R' may be the same or different, and at least one, preferably two to ten, more preferably all R's are hydrogen atoms.

Examples of the organosilicon compound having two or more SiH groups in the molecule include compounds such as 2,4,6,8-tetramethylcyclotetrasiloxane, 2,4,6,8,10-pentamethylcyclopentasiloxane, methyltris(dimethylsiloxy)silane, and tetrakis(dimethylsiloxy)silane.

In the addition reaction of the fluoropolyether-containing polymer having two olefin sites at the end of the molecular chain, represented by the formula (6), with an organosilicon compound having at least two SiH groups in the molecule, the amount of organosilicon compound having two or more SiH groups in the molecule used is 2 to 10 equivalents, more preferably 3 to 6 equivalents, still more preferably about 5 equivalents per equivalent of the reactive end group (terminal olefin site) in the fluoropolyether-containing polymer having two olefin sites at an end of the molecular chain.

As the solvent used in the reaction between the fluoropolyether-containing polymer having two olefin sites at the end of the molecular chain, represented by the formula (6), and the organosilicon compound having two or more SiH groups in the molecule, fluorochemical solvents are preferred. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 200 parts by weight, and still more preferably about 100 to 150 parts by weight per 100 parts by weight of the fluoropolyether-containing polymer having two olefin sites at the end of the molecular chain, represented by the formula (6).

Examples of the hydrosilylation catalyst used in the reaction between the fluoropolyether-containing polymer having two olefin sites at the end of the molecular chain, represented by the formula (6), and the organosilicon compound having two or more SiH groups in the molecule include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The amount of the hydrosilylation catalyst is used in an amount to provide preferably 0.01 to 100 ppm, and more preferably 0.1 to 50 ppm of transition metal based on the weight of the fluoropolyether-containing polymer having two olefin sites at the end of the molecular chain, represented by the formula (6).

By the reaction of the fluoropolyether-containing polymer having two olefin sites at the end of the molecular chain, represented by the formula (6), with the organosilicon compound having two or more SiH groups in the molecule, a fluoropolyether-containing polymer having two monovalent groups having one or more SiH groups at an end of the molecular chain, represented by the following formula (7), is obtained. 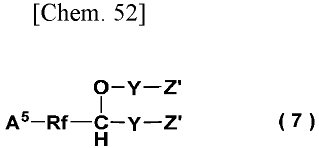 wherein Rf and Y are the same as described above, Z' is independently a monovalent organopolysiloxane residue having one or more silicon-hydrogen bonds (SiH groups) at an end, and A⁵ is a hydrogen atom, a fluorine atom, a C₁-C₆ fluoroalkyl group, or a monovalent group represented by the following formula: 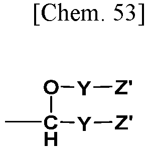 wherein Y and Z' are the same as described above.

Here, in the formula (7), A⁵ is a hydrogen atom, a fluorine atom, a C₁-C₆ fluoroalkyl group, or a monovalent group represented by the above formula, and is preferably a fluorine atom or a C₁-C₆ perfluoroalkyl group.

Also, in the formula (7), Z' is a monovalent organopolysiloxane residue having one or more silicon-hydrogen bonds (SiH groups) at and end, and is preferably a linear organopolysiloxane residue of 2 to 10 silicon atoms having 1 to 9, particularly 2 to 7 silicon-hydrogen bonds (SiH groups) at an end, or a branched or cyclic monovalent organopolysiloxane residue of 3 to 10 silicon atoms having 1 to 9, particularly 2 to 7 silicon-hydrogen bonds (SiH groups) at an end.

Specific examples of Z' include the following groups: 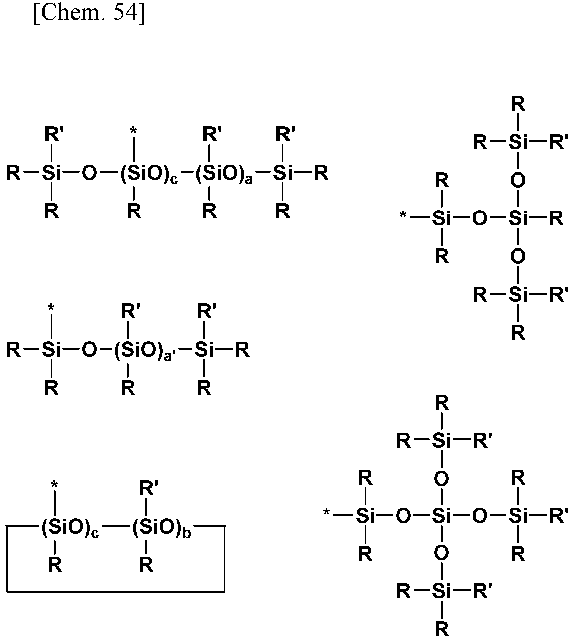 wherein * is a bond bonded to Y in the formula (7), and R, R', a, a', b, and c are the same as described above, and individual repeat units shown in parentheses with a and c may be randomly bonded.

Preferable examples of the fluoropolyether-containing polymer having two monovalent groups having one or more SiH groups at the end of the molecular chain, represented by the formula (7), are shown below. 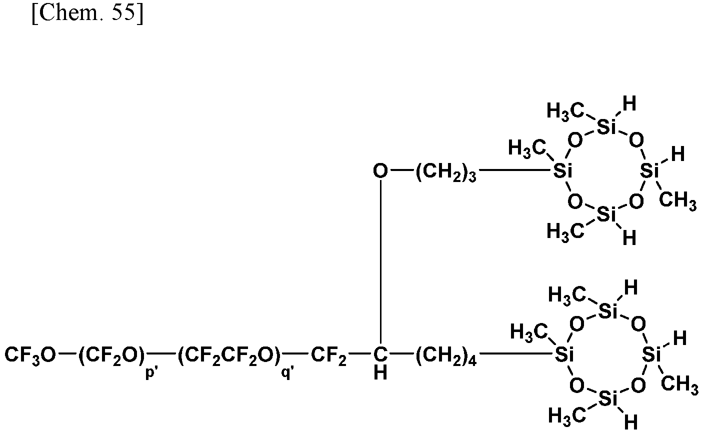 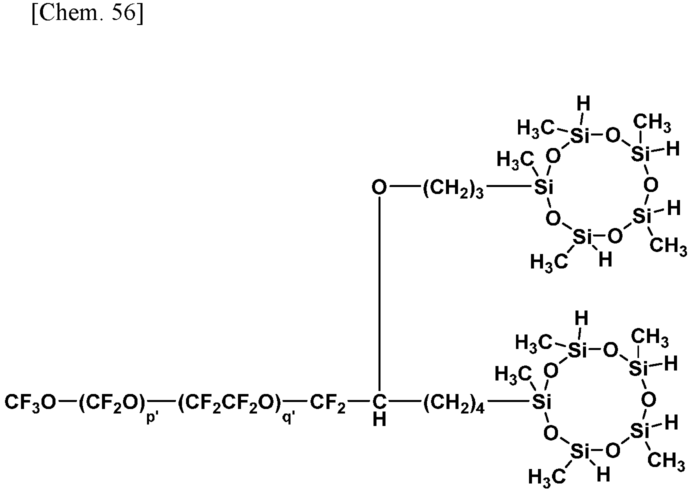 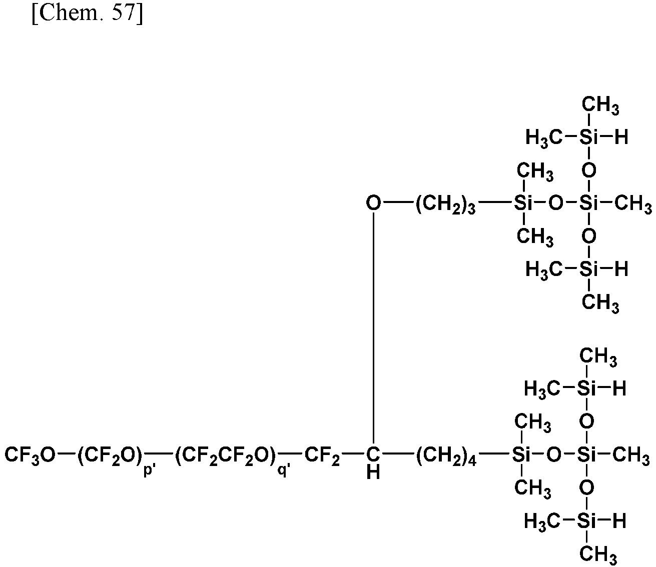 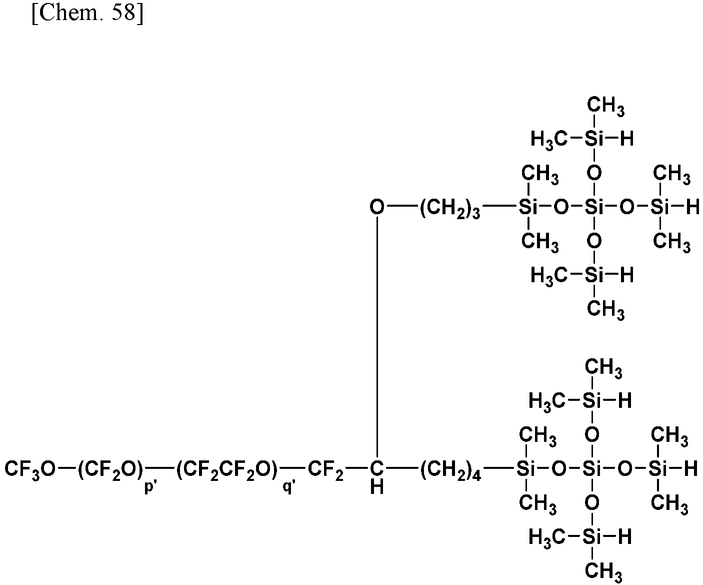 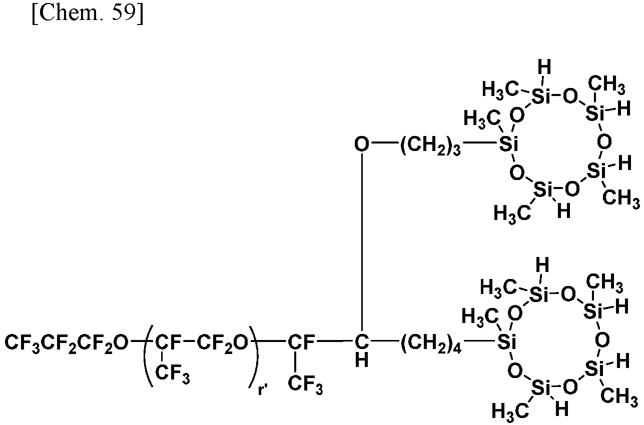 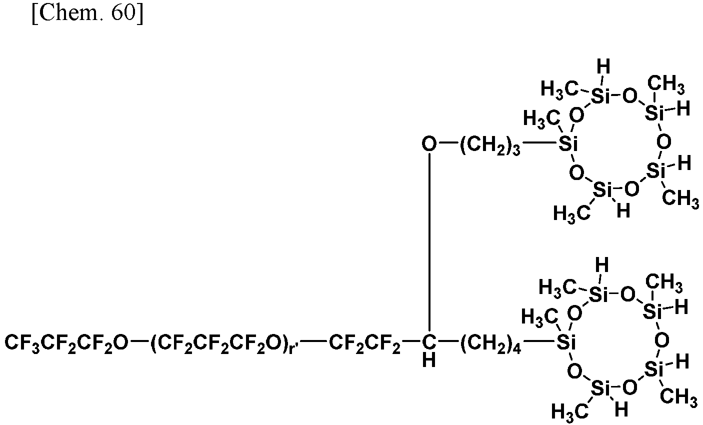 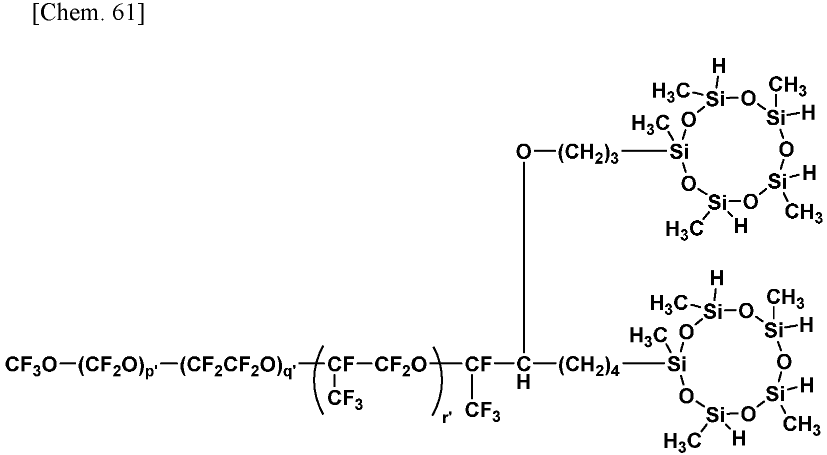 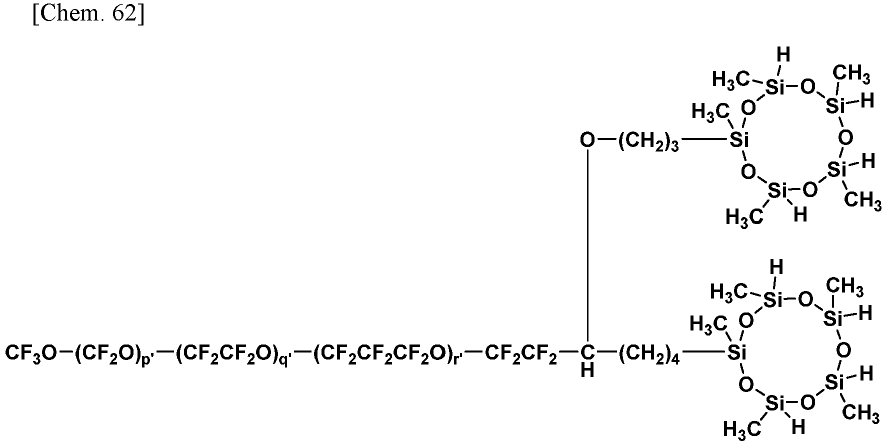 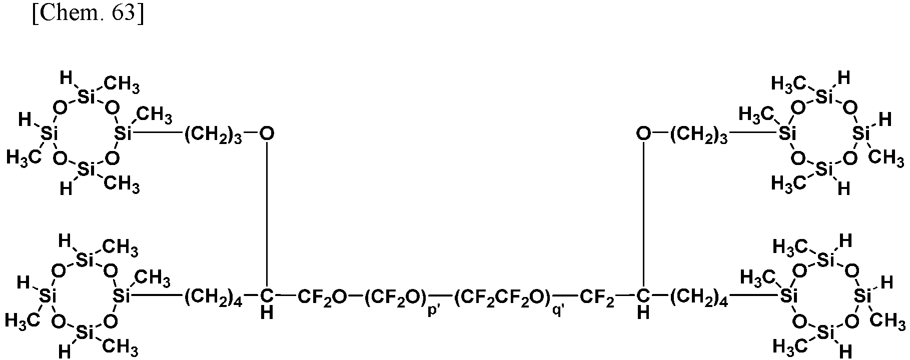 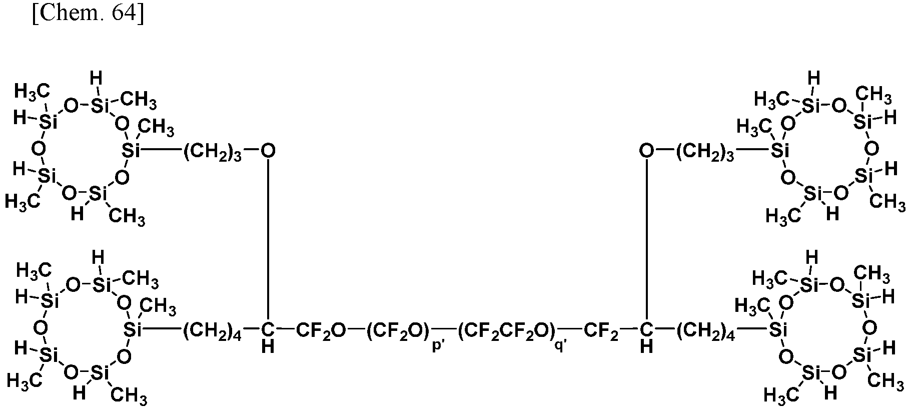 wherein p', q', r' and the sum thereof in each formula are the same as described above, and individual repeat units shown in parentheses with p', q', and r' may be randomly bonded.

Next, the fluoropolyether-containing polymer having two monovalent groups having one or more SiH groups at the end of the molecular chain, represented by the formula (7), is dissolved in a solvent such as fluorochemical solvent, typically 1,3-bis(trifluoromethyl)benzene. A compound containing an olefin site (e.g., an alkyl group containing an aliphatic unsaturated double bond at an end, such as an alkenyl group) and an acryloyl group or an α-substituted acryloyl group are mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for 1 to 72 hours, preferably 20 to 36 hours, more preferably about 24 hours. There is obtained a fluoropolyether-containing acrylic compound represented by the formula (1).

Here, examples of the compound containing an olefin site and an acryloyl group or an α-substituted acryloyl group are shown below.

CH₂=CH-O-CH₂CH₂-O-C(=O)-CH=CH₂

CH₂=CHCH₂-O-CH₂CH₂-O-C(=O)-CH=CH₂

CH₂=CH-O-CH₂CH₂-O-C(=O)-C(CH₃)=CH₂

CH₂=CHCH₂-O-CH₂CH₂-O-C(=O)-C(CH₃)=CH₂

CH₂=CHCH₂(OC₂H₄)_{k'}(OC₃H₆)_{j'}(OC₄H₈)i,-O-C(=O)-CH=CH₂

CH₂=CHCH₂(OC₂H₄)_{k'}(OC₃H₆)_{j'}(OC₄H₈)_{i'}-O-C(=O)-C(CH₃)CH₂

CH₂=CH(OC₂H₄)_{k'}(OC₃H₆)_{j'}(OC₄H₈)_{i'}-O-C(=O)-CH=CH₂

CH₂=CH(OC₂H₄)_{k'}(OC₃H₆)_{j'}(OC₄H₈)_{i'}-O-C(=O)-C(CH₃)CH₂

wherein the sum of k', j', i', k', and j' and i' is the same as described above, and individual repeat units shown in parentheses with k', j', and i' may be randomly bonded, and the (OC₃H₆) unit and the (OC₄H₈) unit may be independently linear or branched.

In the reaction between the fluoropolyether-containing polymer having two monovalent groups having one or more SiH groups at the end of the molecular chain, represented by the formula (7), and the compound containing an olefin site and an acryloyl group or an α-substituted acryloyl group in the molecule, the amount of the compound containing an olefin site and an acryloyl group or an α-substituted acryloyl group in the molecule used is 1 to 5 equivalents, more preferably 1 to 3 equivalents, still more preferably about 1.2 to 1.5 equivalents per equivalent of the reactive end group (Si-H site) in the fluoropolyether-containing polymer having two monovalent groups having one or more SiH groups at the end of the molecular chain.

As the solvent used in the reaction between the fluoropolyether-containing polymer having two monovalent groups having one or more SiH groups at the end of the molecular chain, represented by the formula (7), and the compound containing an olefin site and an acryloyl group or an α-substituted acryloyl group in the molecule, fluorochemical solvents are preferred. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 200 parts by weight, and still more preferably about 150 parts by weight per 100 parts by weight of the fluoropolyether-containing polymer having two monovalent groups having one or more SiH groups at the end of the molecular chain, represented by the formula (7).

Examples of the hydrosilylation catalyst used in the reaction between the fluoropolyether-containing polymer having two monovalent groups having one or more SiH groups at the end of the molecular chain, represented by the formula (7), and the compound containing an olefin site and an acryloyl group or an α-substituted acryloyl group in the molecule include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The amount of the hydrosilylation catalyst is used in an amount to provide preferably 0.01 to 100 ppm, and more preferably 0.1 to 50 ppm of transition metal based on the weight of the fluoropolyether-containing polymer having two monovalent groups having one or more SiH groups at the end of the molecular chain, represented by the formula (7).

Also, in the reaction, a polymerization inhibitor may be added as necessary. The polymerization inhibitor is not particularly limited, but one usually used as a polymerization inhibitor for an acrylic compound can be used. Specific examples thereof include hydroquinone, hydroquinone monomethyl ether, 4-tert-butylcatechol, and dibutylhydroxytoluene.

The amount of the polymerization inhibitor used may be determined by the reaction conditions, purification conditions after the reaction, and final use conditions, and is not particularly limited, but is usually 0.01 to 5,000 ppm, and particularly preferably 0.1 to 500 ppm, based on the total weight of the reaction components.

Thereafter, the solvent and unreacted reactants are distilled off in vacuum, obtaining the target compound.

In one example, when the fluoropolyether-containing polymer having two monovalent groups having one or more SiH groups at the end of the molecular chain, represented by the formula (7), is a compound represented by the following formula: 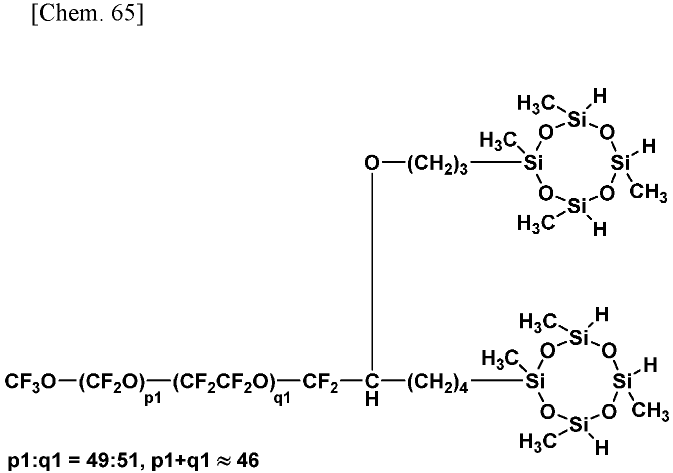 and the compound containing an olefin site and an acryloyl group or an α-substituted acryloyl group is a compound represented by CH₂=CH-CH₂-O-CH₂CH₂-O-C(=O)-C(CH₃)=CH₂, a compound represented by the following formula is obtained.

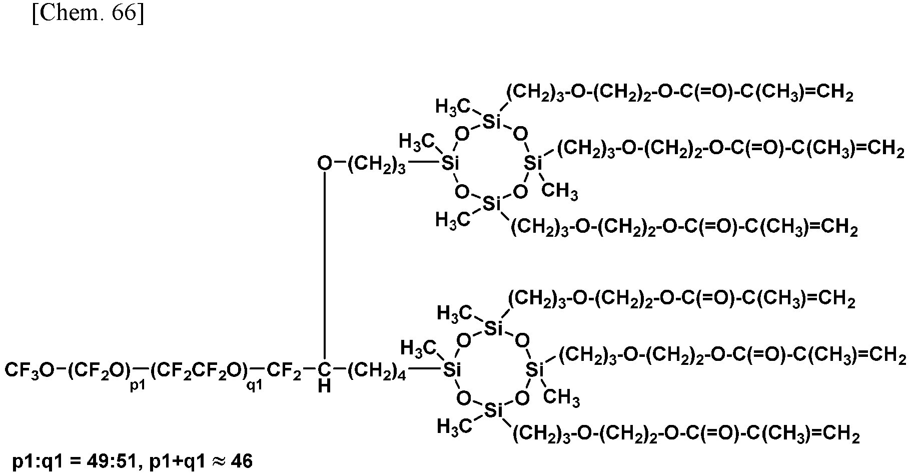

Also, an alternative method for preparing the fluoropolyether-containing polymer represented by formula (1) is, for example, the method shown below.

A fluoropolyether-containing polymer having a terminal hydroxyl group can be obtained using a compound having an olefin site and a terminal hydroxyl group in the molecule in place of the compound containing an olefin site and an acryloyl group or an α-substituted acryloyl group in the molecule.

For example, the fluoropolyether-containing polymer having two monovalent groups having one or more SiH groups at the end of the molecular chain, represented by the formula (7), obtained above is dissolved in a solvent such as fluorochemical solvent, typically 1,3-bis(trifluoromethyl)benzene. A compound having an olefin site and a terminal hydroxyl group in the molecule, such as allyl alcohol or ethylene glycol monoallyl ether, is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for 1 to 72 hours, preferably 20 to 36 hours, more preferably about 24 hours.

Examples of such a compound having an olefin site and a terminal hydroxyl group in the molecule include those shown below.

CH₂=CH-CH₂-OH

CH₂=CH-CH₂-OCH₂CH₂-OH

CH₂=CH-CH₂-OCH₂CH(CH₃)-OH

CH₂=CH-CH₂-(OC₃H₆)₂-OCH₂CH(CH₃)-OH

CH₂=CH-CH₂-(OC₃H₆)₄-OCH₂CH(CH₃)-OH

CH₂=CH-CH₂-(OC₃H₆)₉-OCH₂CH(CH₃)-OH

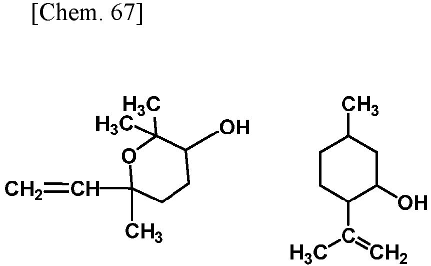

wherein the (OC₃H₆) unit may be independently linear or branched.

In the preparation of the fluoropolyether-containing polymer having a terminal hydroxyl group, in the addition reaction of the fluoropolyether-containing polymer having two monovalent groups having one or more SiH groups at the end of the molecular chain, represented by the formula (7), with the compound having an olefin site and a terminal hydroxyl group in the molecule, the amount of the compound having an olefin site and a terminal hydroxyl group in the molecule used is 1 to 5 equivalents, more preferably 1 to 3 equivalents, still more preferably about 1.0 to 1.5 equivalents per equivalent of the reactive end group (Si-H site) in the fluoropolyether-containing polymer having two monovalent groups having one or more SiH groups.

As the solvent used in the preparation of the fluoropolyether-containing polymer having a terminal hydroxyl group, fluorochemical solvents are preferred. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 200 parts by weight, and still more preferably about 150 parts by weight per 100 parts by weight of the fluoropolyether-containing polymer having two monovalent groups having one or more SiH groups at the end of the molecular chain, represented by the formula (7).

Examples of the hydrosilylation catalyst in the preparation of the fluoropolyether-containing polymer having a terminal hydroxyl group include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The amount of the hydrosilylation catalyst is used in an amount to provide preferably 0.01 to 100 ppm, and more preferably 0.1 to 50 ppm of transition metal based on the weight of the fluoropolyether-containing polymer having two monovalent groups having one or more SiH groups at the end of the molecular chain, represented by the formula (7).

By the reaction of the fluoropolyether-containing polymer having two monovalent groups having one or more SiH groups at the end of the molecular chain, represented by the formula (7), with the compound having an olefin site and a terminal hydroxyl group in the molecule, a fluoropolyether-containing polymer having a terminal hydroxyl group, represented by the following formula (8), is obtained. 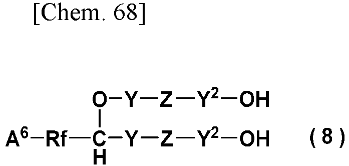 wherein Rf, Y, Z, and Y² are the same as described above, and A⁶ is a hydrogen atom, a fluorine atom, a C₁-C₆ fluoroalkyl group, or a monovalent group represented by the following formula: 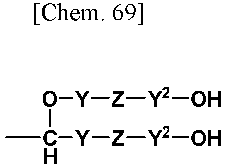 wherein, Y² is the same as described above.

Here, in the formula (8), A⁶ is a hydrogen atom, a fluorine atom, a C₁-C₆ fluoroalkyl group, or a monovalent group represented by the above formula, and is preferably a fluorine atom or a C₁-C₆ perfluoroalkyl group.

Preferable examples of the fluoropolyether-containing polymer having a terminal hydroxyl group, represented by formula (8), are shown below. 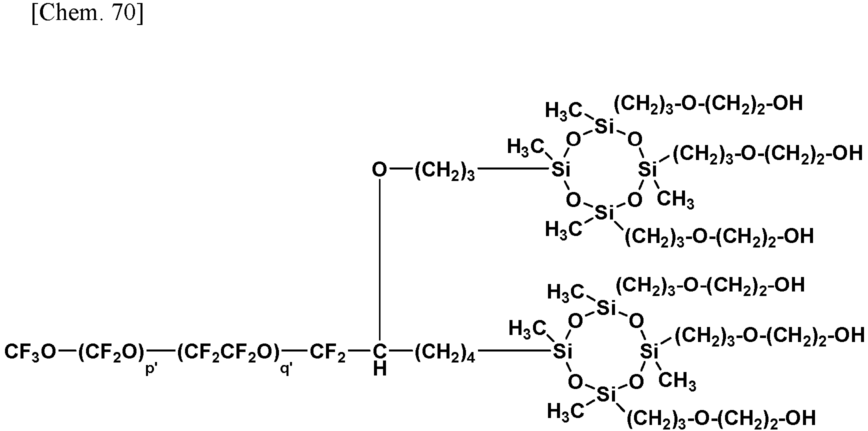 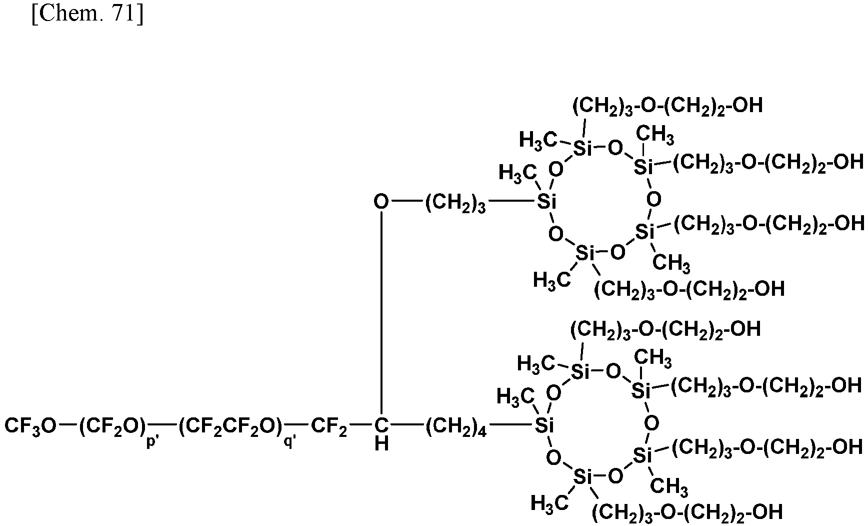 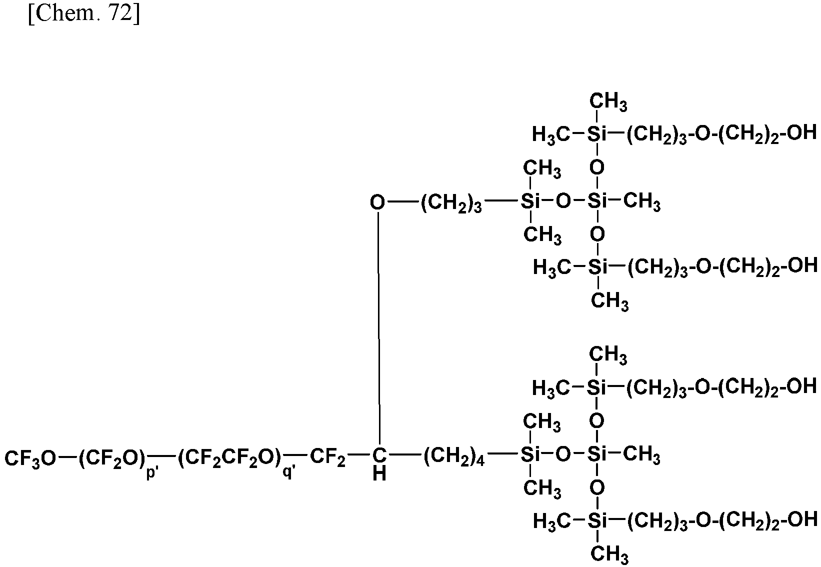 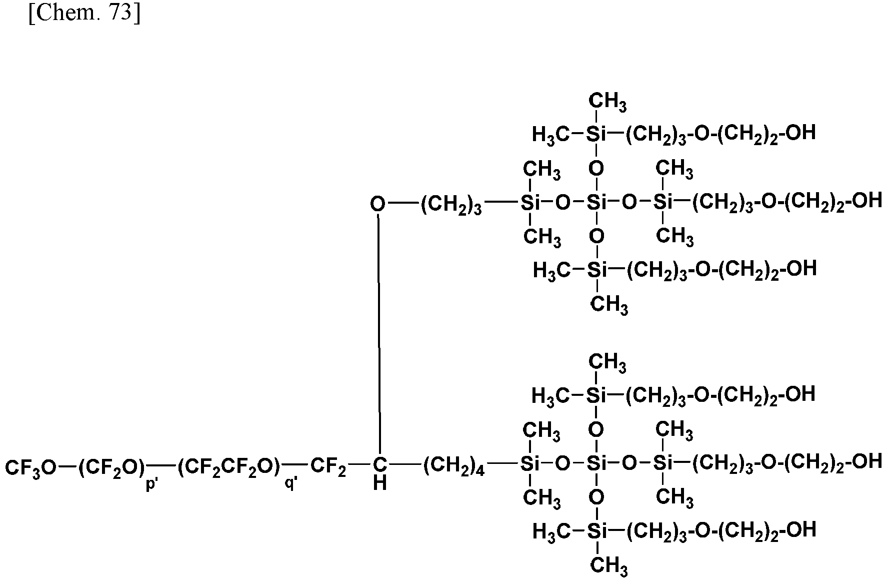 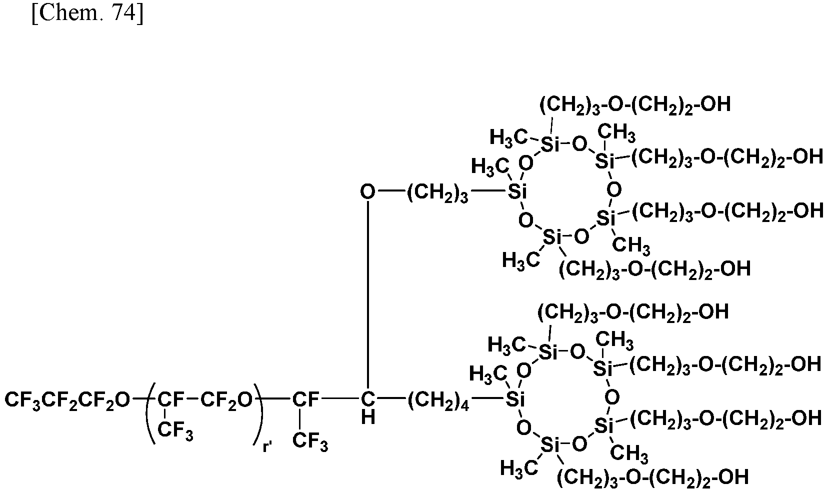 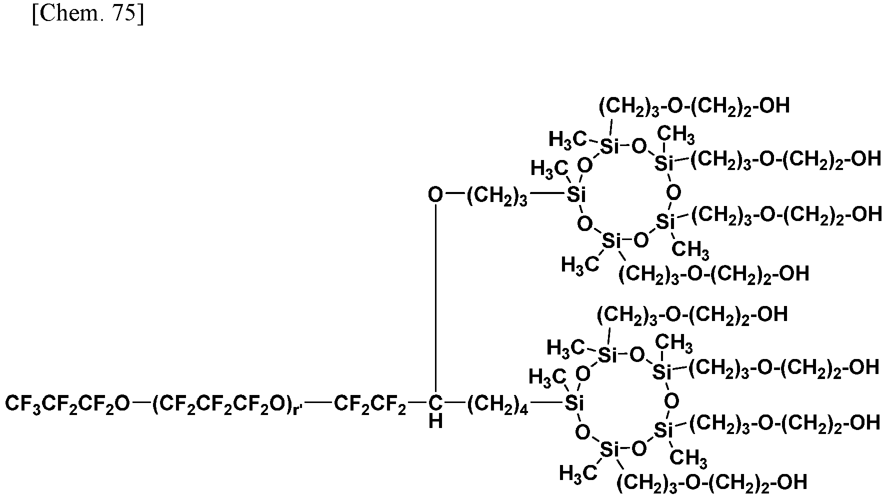 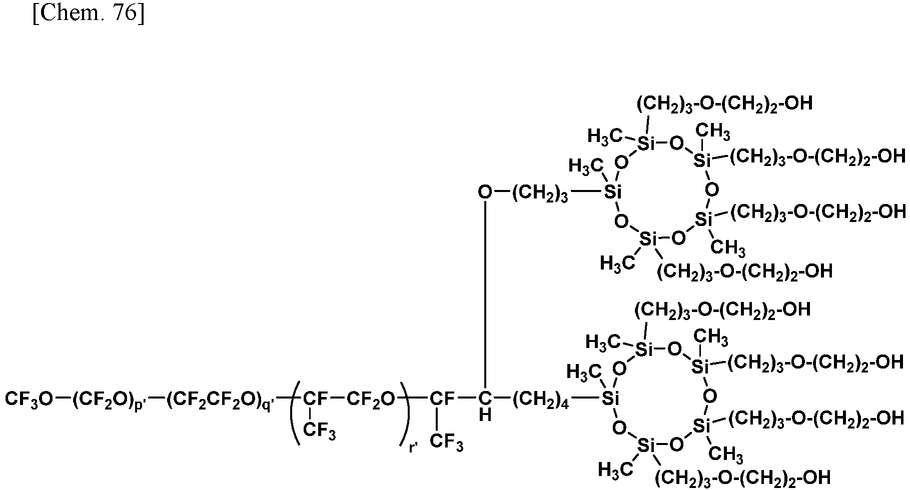 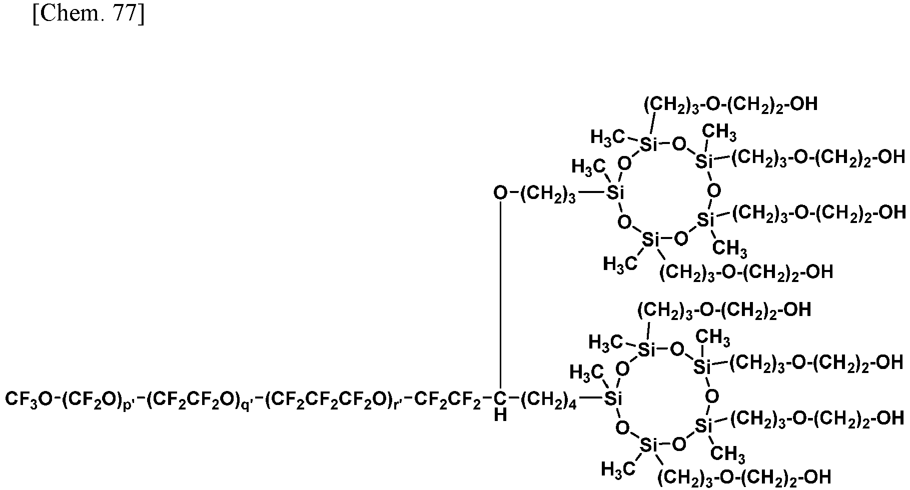 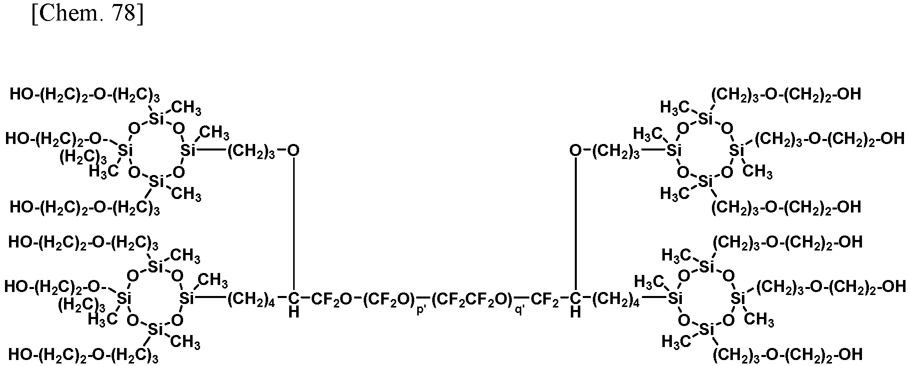 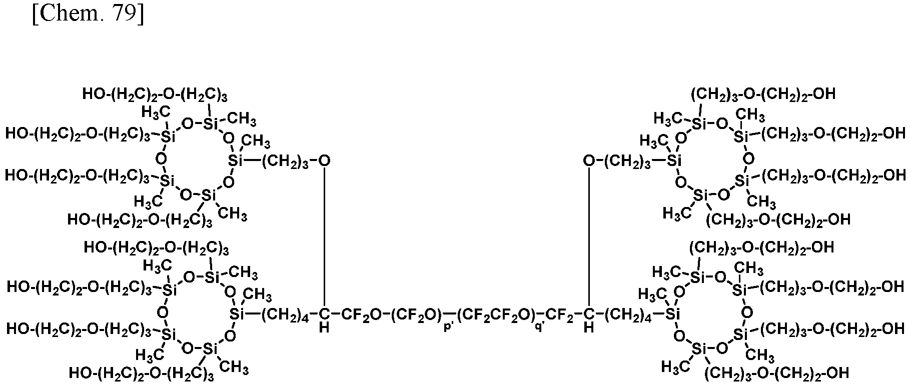 wherein p', q', r' and the sum thereof in each formula are the same as described above, and individual repeat units shown in parentheses with p', q', and r' may be randomly bonded.

Subsequently, by introducing a (meth)acryloyl group into the fluoropolyether-containing polymer having a terminal hydroxyl group, represented by the formula (8), obtained above, the intended fluoropolyether-containing acrylic compound can be obtained.

As a method of introducing a (meth)acryloyl group into the fluoropolyether-containing polymer having a terminal hydroxyl group, represented by the formula (8), one is a method of reacting with a (meth)acrylic acid halide, represented by the following general formula (9), to form an ester, and the other is a method of reacting with an isocyanate compound containing a (meth)acryloyl group, represented by the following general formula (10). By these methods, a fluoropolyether-containing acrylic compound represented by the above formula (1) can be obtained.

X⁹C(=O)CR²=CH₂ (9)

O=C=N-CH₂CH₂OC(=O)CR²=CH₂ (10)

wherein, R² is the same as described above, and X⁹ is a halogen atom such as a fluorine atom, a chlorine atom, or a bromine atom.

Here, examples of the (meth)acrylic acid halide represented by the formula (9) include those shown below.

X⁹C(=O)CH=CH₂

X⁹C(=O)C(CH₃)=CH₂

wherein X⁹ is the same as described above.

Particularly, acrylic acid chloride and methacrylic acid chloride are preferable.

Examples of the isocyanate compound containing a (meth)acryloyl group, represented by the formula (10), include those shown below.

O=C=N-CH₂CH₂OC(=O)CH=CH₂

O=C=N-CH₂CH₂OC(=O)C(CH₃)=CH₂

These (meth)acrylic acid halides or isocyanate compounds containing a (meth)acryloyl group may be charged in an amount of equimolar or more with respect to the total amount of hydroxyl groups of the fluoropolyether-containing polymer having a terminal hydroxyl group and reacted to react all the hydroxyl groups, but it is only required to introduce 1 mol or more of a (meth)acryloyl group on average with respect to 1 mol of the fluoropolyether-containing polymer having a terminal hydroxyl group, and the unreacted (meth)acrylic acid halide or the isocyanate compound containing a (meth)acryloyl group may not remain by making the hydroxyl group excessive. Specifically, when the amount of the fluoropolyether-containing polymer having a terminal hydroxyl group in the reaction system is x mol and the total amount of hydroxyl groups of the fluoropolyether-containing polymer having a terminal hydroxyl group is y mol, the (meth)acrylic acid halide or the isocyanate compound containing a (meth)acryloyl group is desirably x mol or more and 2y mol or less, and particularly preferably 0.6y mol or more and 1.4y mol or less. When the amount is too small, there is a high possibility that a fluoropolyether-containing polymer having a terminal hydroxyl group into which no (meth)acryloyl group is introduced remains, and there is a possibility that the solubility of the intended fluoropolyether-containing acrylic compound in the polymerization initiator and/or the non-fluorine-based acrylic compound is lowered. When the amount is too large, it is difficult to remove the unreacted (meth)acrylic acid halide or the isocyanate compound containing a (meth)acryloyl group.

These reactions may be performed by diluting them with an appropriate solvent as necessary. Such a solvent can be used without particular limitation as long as it does not react with the hydroxyl group of the fluoropolyether-containing polymer having a terminal hydroxyl group, the halogen atom of the (meth)acrylic acid halide, or the isocyanate group of the isocyanate compound containing a (meth)acryloyl group. Specific examples thereof include hydrocarbon-based solvents such as toluene, xylene, and isooctane; ether-based solvents such as tetrahydrofuran (THF), diisopropyl ether, and dibutyl ether; ketone-based solvents such as acetone, methyl ethyl ketone, methyl butyl ketone, methyl isobutyl ketone, and cyclohexanone; fluorine-modified aromatic hydrocarbon-based solvents such as m-xylene hexafluoride and benzotrifluoride; and fluorine-modified ether-based solvents such as methyl perfluorobutyl ether. This solvent may be removed by a known method such as distillation under reduced pressure after the reaction, or may be used as a diluted solution as it is according to the intended use.

The amount of the solvent used is not particularly limited, but is preferably 10 times or less the total weight of the reaction components. If the amount of the solvent used is too large, the reaction rate may be significantly reduced.

Also, in the reaction, a polymerization inhibitor may be added as necessary. The polymerization inhibitor is not particularly limited, but one usually used as a polymerization inhibitor for an acrylic compound can be used. Specific examples thereof include hydroquinone, hydroquinone monomethyl ether, 4-tert-butylcatechol, and dibutylhydroxytoluene.

The amount of the polymerization inhibitor used may be determined by the reaction conditions, purification conditions after the reaction, and final use conditions, and is not particularly limited, but is usually 0.01 to 5,000 ppm, and particularly preferably 0.1 to 500 ppm, based on the total weight of the reaction components.

When a (meth)acrylic acid halide is reacted with a fluoropolyether-containing polymer having a terminal hydroxyl group, it is particularly preferable to react acrylic acid chloride and methacrylic acid chloride to form an ester. The ester formation reaction is performed by adding dropwise a (meth)acrylic acid halide while mixing and stirring the reaction intermediate (fluoropolyether-containing polymer having a terminal hydroxyl group) and an acid acceptor. As the acid acceptor, triethylamine, pyridine, urea, or the like can be used.

The amount of the acid acceptor used is desirably about 0.9 to 3 times the number of moles of the (meth)acrylic acid halide charged. If the amount is too small, a large amount of acid that is not trapped remains, and if the amount is too large, it is difficult to remove an excessive acid acceptor.

The dropwise addition of the (meth)acrylic acid halide is performed over 20 to 60 minutes while maintaining the temperature of the reaction mixture at 0 to 35°C. Thereafter, stirring is further continued for 30 minutes to 10 hours. After completion of the reaction, the unreacted (meth)acrylic acid halide, a salt generated by the reaction, the reaction solvent, and the like are removed by methods such as distillation, adsorption, filtration, and washing, whereby a fluoropolyether-containing acrylic compound represented by the formula (1) can be obtained.

Also, when the reaction is stopped, an alcohol compound such as methanol or ethanol may be added into the system to esterify the unreacted (meth)acrylic acid halide. The formed (meth)acrylic acid esters can be removed in the same manner as in the removal of unreacted (meth)acrylic acid halide, but can be used as they remain.

In the case of the reaction between the fluoropolyether-containing polymer having a terminal hydroxyl group and the isocyanate compound containing a (meth)acryloyl group, the fluoropolyether-containing polymer having a terminal hydroxyl group and the isocyanate compound containing a (meth)acryloyl group are stirred together with a solvent as necessary to allow the reaction to proceed.

In this reaction, an appropriate catalyst may be added to increase the rate of the reaction. Examples of the catalyst include alkyltin ester compounds such as dibutyltin diacetate, dibutyltin dilaurate, dibutyltin dioctoate, dioctyltin diacetate, dioctyltin dilaurate, dioctyltin dioctoate, and stannous dioctoate, titanates or titanium chelate compounds such as tetraisopropoxytitanium, tetra n-butoxytitanium and tetrakis(2-ethylhexyl)titanium [also referred to as tetrakis(2-ethylhexyl)orthotitanate], dipropoxybis(acetylacetona)titanium, and titanium isopropoxyoctylene glycol, zirconium tetraacetylacetonate, zirconium tributoxymonoacetylacetonate, zirconium monobutoxyacetylacetonate bis(ethylacetoacetate), zirconium dibutoxybis(ethylacetoacetate), zirconium tetraacetylacetonate, and zirconium chelate compounds. These are not limited to one thereof, and can be used as a mixture of two or more thereof.

The reaction rate can be increased by adding these catalysts in an amount of 0.01 to 2 wt%, preferably 0.05 to 1 wt%, based on the total weight of the reaction components.

The reaction is performed at a temperature of 0 to 120°C, preferably 10 to 70°C, for 1 minute to 500 hours, preferably 10 minutes to 48 hours. If the reaction temperature is too low, the reaction rate may be too slow, and if the reaction temperature is too high, polymerization of the (meth)acryloyl group may occur as a side reaction.

After completion of the reaction, the unreacted isocyanate compound, the reaction solvent, and the like are removed by methods such as distillation, adsorption, filtration, and washing, whereby a fluoropolyether-containing acrylic compound represented by the formula (1) can be obtained.

Also, when the reaction is stopped, an alcohol compound such as methanol or ethanol may be added into the system to form a urethane bond with the unreacted isocyanate compound. The formed urethane (meth)acrylates can be removed in the same manner as in the case of the unreacted isocyanate compound, but can be used as they remain.

For example, when the fluoropolyether-containing polymer having a terminal hydroxyl group, represented by the formula (8), is a compound represented by the following formula: 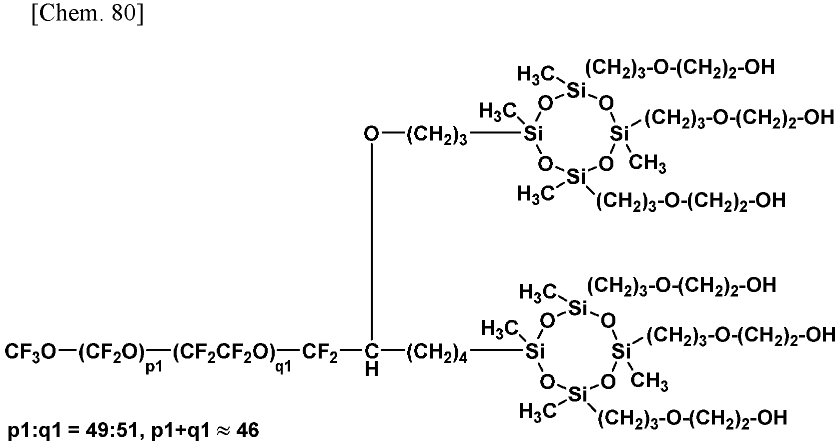 and when the isocyanate compound containing a (meth)acryloyl group is a compound represented by O=C=N-CH₂CH₂OC(=O)CH=CH₂, a compound represented by the following formula is obtained.

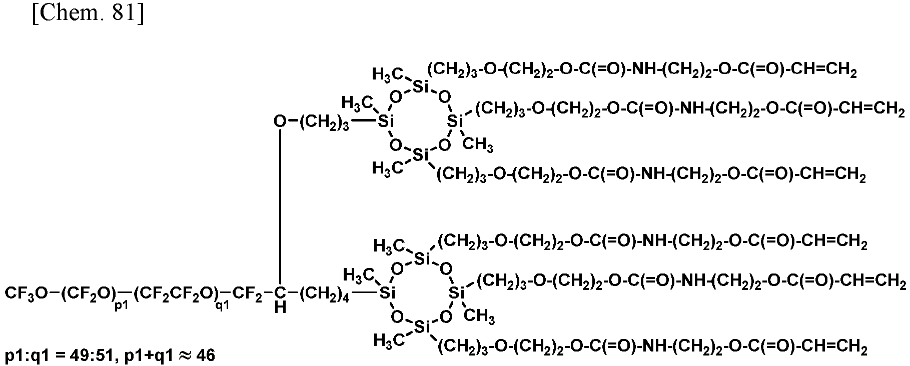

The fluoropolyether-containing acrylic compound represented by the formula (1) can be obtained by subjecting the solution obtained in the above reaction to purification and isolation operations such as concentration, column purification, distillation, and extraction. In addition, the solution obtained in the reaction can also be used as it is as a mixture containing the fluoropolyether-containing acrylic compound represented by the formula (1) in the active energy ray-curable composition described later.

The fluoropolyether-containing acrylic compound represented by the formula (1) of the present invention is useful as an anti-fouling additive for imparting liquid repellency, anti-fouling property, and abrasion resistance to compositions for ultraviolet-curable or thermosetting hard coating agent, for coating material, for a resin, for antireflection coating, and the like.

A further embodiment of the present invention is an active energy ray-curable composition containing, as essential components, the fluoropolyether-containing acrylic compound represented by the formula (1), which is the first embodiment of the present invention, and a polymerization initiator.

In the active energy ray-curable composition, the fluoropolyether-containing acrylic compound represented by the formula (1) may be used singly or in combination of two or more thereof.

The compounding amount of the fluoropolyether-containing acrylic compound represented by the formula (1) is preferably 0.005 wt% or more and 99.9 wt% or less in all components of the active energy ray-curable composition excluding the solvent. Particularly, when used for a thick film (for example, a cured film of 0.5 to 100 µm), the compounding amount is preferably 0.005 wt% or more and less than 50 wt% in all components of the active energy ray-curable composition excluding the solvent, and when used for a thin film (for example, a cured film of 1 to 500 nm), the compounding amount is preferably 50 wt% or more and 99.9 wt% or less in all components of the active energy ray-curable composition excluding the solvent.

Particularly by containing a photopolymerization initiator as the polymerization initiator, a curable composition having enhanced curability when ultraviolet rays are used as active energy rays can be obtained.

The photopolymerization initiator is not particularly limited as long as it can cure the acrylic compound by ultraviolet irradiation, and preferably, examples thereof include acetophenone, benzophenone, 2,2-dimethoxy-1,2-diphenylethan-1-one, 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, 2-methyl-1-(4-methylthiophenyl)-2-morpholinopropan-1-one, 2-benzyl-2-dimethylamino-1-(4-morpholinophenyl)butanone-1,2-(dimethylamino)-2-[(4-methylphenyl)methyl]-1-[4-(4-morpholinyl)phenyl]-1-butanone, 2,4,6-trimethylbenzoyl-diphenyl-phosphine oxide, bis(2,4,6-trimethylbenzoyl)-phenylphosphine oxide, 1,2-octanedione-1-[4-(phenylthio)-2-(o-benzoyloxime)], ethanone-1-[9-ethyl-6-(2-methylbenzoyl)-9H-carbazol-3-yl]-1-(O-acetyloxime), 2-hydroxy-1-{4-[4-(2-hydroxy-2-methylpropionyl)benzyl]phenyl}-2-methylpropan-1-one, and the like, and one kind thereof may be used alone or two or more kinds thereof may be used in combination.

The content of the polymerization initiator can be appropriately determined according to curing conditions and physical properties of the cured product of the intended active energy ray-curable composition, but for example, it is desirable that the content be 0.001 to 15 parts by weight, particularly 0.01 to 10 parts by weight per 100 parts by weight of the total of the nonvolatile components in the active energy ray-curable composition excluding the solvent. If the added amount is smaller than this, curability may be deteriorated, and if it is larger than this, an influence on physical properties after curing may be increased.

The active energy ray-curable composition of the present invention preferably further contains a solvent. By containing a solvent, the curable composition has reduced viscosity, and is easily handled.

Specific examples of the solvent include alcohols such as 1-propanol, 2-propanol, isopropanol, n-butanol, isobutanol, tert-butanol, and diacetone alcohol; ketones such as methyl propyl ketone, diethyl ketone, methyl ethyl ketone, methyl isobutyl ketone, and cyclohexanone; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; esters such as propyl acetate, butyl acetate, and cyclohexyl acetate, and aromatics such as toluene, xylene, triethylbenzene, and alkylbenzene.

The amount of the solvent used is not particularly limited, but is preferably 20 to 1,000,000 parts by weight, particularly preferably 100 to 500,000 parts by weight per 100 parts by weight of the total of all components of the active energy ray-curable composition excluding the solvent.

The active energy ray-curable composition of the present invention is not particularly limited as long as it gives a cured product by irradiation with an active energy ray such as an ultraviolet ray or an electron beam as other optional components, and it is particularly preferable to contain a non-fluorine-based acrylic compound. By containing the non-fluorine-based acrylic compound, a cured film obtained by curing the active energy ray-curable composition can exhibit excellent film properties such as high hardness in addition to liquid repellency, anti-fouling property, and abrasion resistance.

The non-fluorine-based acrylic compound can be used regardless of whether it is monofunctional or polyfunctional. In particular, it is preferable to contain an acrylic compound having two or more acryloyl groups in one molecule.

As such an acrylic compound, one having two or more acryloyl groups or α-substituted acryloyl groups in one molecule can be used, and examples thereof include di- to hexa-functional (meth)acrylic compounds such as 1,6-hexanediol di(meth)acrylate, neopentyl glycol di(meth)acrylate, ethylene glycol di(meth)acrylate, ethylene oxide isocyanurate-modified di(meth)acrylate, EO-isocyanurate modified tri(meth)acrylate, trimethylolpropane tri(meth)acrylate, pentaerythritol tri(meth)acrylate, glycerol tri(meth)acrylate, tris(meth)acryloyloxyethyl phosphate, (2,2,2-tri-(meth)acryloyloxymethyl)ethyl hydrogen phthalate, glycerol tri(meth)acrylate, pentaerythritol tetra(meth)acrylate, ditrimethylolpropane tetra(meth)acrylate, dipentaerythritol penta(meth)acrylate, dipentaerythritol hexa(meth)acrylate and sorbitol hexa(meth)acrylate, epoxy acrylates obtained by adding these (meth)acrylic compounds to ethylene oxide, propylene oxide, epichlorohydrin, fatty acid, alkyl-modified products, or an epoxy resin, copolymers obtained by introducing a (meth)acryloyl group into a side chain of an acrylic acid ester copolymer, and the like.

Moreover, urethane acrylates, those obtained by reacting polyisocyanate with a (meth)acrylate having a hydroxyl group, those obtained by reacting polyisocyanate and a polyester of a terminal diol with a (meth)acrylate having a hydroxyl group, those obtained by reacting polyisocyanate obtained by reacting a polyol with an excess amount of diisocyanate with a (meth)acrylate having a hydroxyl group, and the like can also be used. Among them, urethane acrylates obtained by reacting a (meth)acrylate having a hydroxyl group selected from 2-hydroxyethyl(meth)acrylate, 2-hydroxy-3-acryloyloxypropylmethacrylate, and pentaerythritol triacrylate with a polyisocyanate selected from hexamethylene diisocyanate, isophorone diisocyanate, tolylene diisocyanate, lysine diisocyanate, norbornane diisocyanate, 1,3-bis(isocyanatomethyl) cyclohexane, methylene bis(4-cyclohexyl isocyanate), 2-methyl-1,3-diisocyanatocyclohexane, 2-methyl-1,5-diisocyanatocyclohexane, and diphenylmethane diisocyanate, and the like are preferable.

In addition, it may be a mixture of at least two kinds of acrylic compounds including a polyfunctional acrylic compound having two or more acryloyl groups or α-substituted acryloyl groups in one molecule and having no urethane bond, or polyfunctional urethane acrylates having three or more acryloyl groups or α-substituted acryloyl groups in one molecule obtained by reacting an aliphatic polyisocyanate with an acrylic compound having a hydroxyl group.

In this case, examples of the polyfunctional acrylic compound having two or more acryloyl groups or α-substituted acryloyl groups in one molecule and having no urethane bond include trimethylolpropane tri(meth)acrylate, pentaerythritol tri(meth)acrylate, glycerol tri(meth)acrylate, pentaerythritol tetra(meth)acrylate, ditrimethylolpropane tetra(meth)acrylate, dipentaerythritol penta(meth)acrylate, dipentaerythritol hexa(meth)acrylate, sorbitol hexa(meth)acrylate, and compounds obtained by modifying these with ethylene oxide or propylene oxide.

In addition, as the polyfunctional urethane acrylates having three or more acryloyl groups or α-substituted acryloyl groups in one molecule obtained by reacting an aliphatic polyisocyanate with an acrylic compound having a hydroxyl group, those obtained by reacting a bifunctional or more polyisocyanate obtained by reacting hexamethylene diisocyanate, norbornane diisocyanate, isophorone diisocyanate and trimerized products thereof, and bifunctional and trifunctional isocyanates with an aliphatic diol, an aliphatic polyol and polyacrylates having a hydroxyl group in a side chain, with trimethylolpropane di(meth)acrylate, glycerin di(meth)acrylate, bis(2-(meth)acryloyloxyethyl) hydroxyethyl isocyanurate, pentaerythritol tri(meth)acrylate, ditrimethylolpropane tri(meth)acrylate, dipentaerythritol penta(meth)acrylate, ethylene oxide thereof, or a propylene oxide modified product, and those obtained by reacting an aliphatic polyol and polyacrylates having a hydroxyl group in a side chain with an acrylic compound having an isocyanate group such as 2-isocyanatoethyl (meth)acrylate or 1,1-(bisacryloyloxymethyl)ethyl isocyanate can be shown.

Furthermore, the non-fluorine-based acrylic compound may include, in addition to the above compound, a component obtained by modifying a surface of a particulate high-molecular-weight body or a surface of inorganic filler fine particles with an acryloyl group.

The non-fluorine-based acrylic compound as described above can be used alone, but it can also be used by blending a plurality of corresponding compounds in order to enhance coatability and properties of the coating film after curing.

The compounding amount in the case of blending the non-fluorine-based acrylic compound is preferably 20 to 1,000,000 parts by weight, particularly preferably 100 to 100,000 parts by weight per 100 parts by weight of the fluoropolyether-containing acrylic compound of the present invention.

To the active energy ray-curable composition of the present invention, an active energy ray-reactive compound other than acrylic compounds, such as thiol and maleimide compounds, a polymerization inhibitor, an antistatic agent, an antifoaming agent, a viscosity modifier, a light resistant stabilizer, a heat resistant stabilizer, an antioxidant, a surfactant, a colorant, a polymer or inorganic filler, and the like can be also blended. The structure thereof is not particularly limited, and known ones can be used without impairing the object of the present invention.

Also, as the active energy ray-curable composition, existing compositions commercially available in classification of paint, ink, hard coating agent and the like from each company, as an active energy ray-curable composition in which various additives are blended, may be used as a part or whole of the active energy ray-curable composition. Even when a commercially available hard coating agent is used as described above, a polymerization inhibitor, an antistatic agent, an antifoaming agent, a viscosity modifier, a light resistant stabilizer, a heat resistant stabilizer, an antioxidant, a surfactant, a colorant, a filler, and the like can be additionally blended according to the purpose.

Furthermore, in the active energy ray-curable composition of the present invention, since the fluoropolyether-containing acrylic compound represented by the formula (1) is excellent in compatibility with a non-fluorine-based organic solvent, it is not necessary to add a volatile fluorine compound as a compatibilizer. Therefore, even when the content of the volatile fluorine compound in the active energy ray-curable composition is 1 wt% or less (0 to 1 wt%), particularly 0.1 wt% or less (0 to 0.1 wt%), a uniform active energy ray-curable composition can be prepared.

Since the active energy ray-curable composition of the present invention obtained as described above contains a fluoropolyether-containing acrylic compound having a specific structure that has a perfluoropolyether group as a water/oil-repellent group, an acryloyl group or an α-substituted acryloyl group as an active energy ray-curable group, and further has a flexible siloxane structure in a linking group between the perfluoropolyether group and the acryloyl group or the α-substituted acryloyl group, a cured film excellent in water repellency, oil repellency, slip property, anti-fouling property, fingerprint wiping property, low refractive index property, solvent resistance, chemical resistance, and the like, and further excellent in abrasion resistance is obtained.

Furthermore, the present invention provides a cured film obtained by applying the above-described active energy ray-curable composition of the present invention to a substrate surface and curing the composition, and an article having the cured film on a surface thereof. As described above, if the active energy ray-curable composition of the present invention is used, a cured film (cured resin layer) having excellent surface properties can be formed on the surface of the substrate. In particular, it is useful for imparting water repellency, oil repellency, and anti-fouling property to a surface of acrylic hard coat. This makes it difficult for human fat such as fingerprints, sebum and sweat, stain due to cosmetics and the like to adhere, and a hard coat surface excellent in wiping property can be provided to a substrate (article). Therefore, the active energy ray-curable composition of the present invention can be used for the use of a coating film or a protective film for a surface of a substrate (article) that may be stained by human fat, cosmetics or the like when touched by a human body.

The cured film (cured resin layer) formed using the active energy ray-curable composition of the present invention can impart properties to various articles by directly applying the composition to the surface of an article to which properties are imparted and curing the composition, or by applying the active energy ray-curable composition of the present invention on various substrate films (for example, a film of polyethylene, polypropylene, polyethylene terephthalate, polyethylene naphthalate, a vinyl chloride resin, polystyrene, an acrylic resin, polycarbonate, polyphenylene sulfide, polyether ether ketone, polyether sulfone, aramid, polyimide, or the like) to prepare a cured film and attaching the film to the surface of a target article.

Here, the method for applying the active energy ray-curable composition of the present invention is not particularly limited, and for example, a known coating method such as roll coating, gravure coating, flow coating, dip coating, spray coating, spin coating, bar coating, or screen printing can be used. After coating, the coating film is irradiated with an active energy ray to be cured. Here, as the active energy ray, any beam such as an electron beam or an ultraviolet ray can be used, and an ultraviolet ray is particularly preferable. As an ultraviolet ray source, a mercury lamp, a metal halide lamp, and an LED lamp are suitable. An ultraviolet irradiation dose is desirably in the range of 10 to 10,000 mJ/cm², particularly 20 to 4,000 mJ/cm², because if it is too small, an uncured component remains, and if it is too large, the coating film and the substrate may be deteriorated. In addition, in order to prevent curing inhibition by oxygen, irradiation atmosphere may be replaced with an inert gas free of oxygen molecules such as nitrogen, carbon dioxide or argon at the time of ultraviolet irradiation, the surface of the coating film may be covered with an ultraviolet-permeable protective layer having releasability, and the coating film surface may be irradiated with ultraviolet ray from above, or in a case where the substrate has ultraviolet permeability, the surface of the coating film may be covered with a releasable protective layer, and then the coating film surface may be irradiated with ultraviolet ray from the side opposite to the coated surface of the substrate. In order to effectively perform leveling of the coating film or polymerization of the acryloyl groups in the coating film, the coating film and the substrate may be heated by an arbitrary method such as a hot air drying furnace before and during ultraviolet irradiation.

In addition, the appropriate thickness of the cured film (cured resin layer) formed using the active energy ray-curable composition of the present invention varies greatly depending on the method of use and thus is not limited by the thickness.

For example, when a large amount of the non-fluorine acrylic compound is blended in the active energy ray-curable composition, specifically, in a case where a ratio of the fluoropolyether-containing acrylic compound of the present invention is 0.005 parts by weight or more and less than 50 parts by weight in 100 parts by weight of all components of the active energy ray-curable composition of the present invention excluding the solvent, the preferred thickness of the cured film is 0.5 to 100 µm. On the other hand, when a large amount of the fluoropolyether-containing acrylic compound of the present invention is blended in the active energy ray-curable composition, specifically, in a case where a ratio of the fluoropolyether-containing acrylic compound of the present invention is 50 parts by weight or more and 99.9 parts by weight or less in 100 parts by weight of all components of the active energy ray-curable composition of the present invention excluding the solvent, the preferred thickness of the cured film is 1 to 500 nm.

In the present invention, the film thickness can be measured by a thin film thickness measurement device based on an optical interference method (optical interference type film thickness meter, reflection spectroscopic film thickness meter), a thin film thickness measurement device based on spectroscopic ellipsometry (spectroscopic ellipsometer), or the like.

Furthermore, the cured film (cured resin layer) formed using the active energy ray-curable composition of the present invention desirably has a water contact angle at a temperature of 25°C and a relative humidity of 40% of 90° or more, preferably 95° or more. In the present invention, the water contact angle is a value measured under a condition of droplet: 2 µl using a contact angle meter Drop Master (manufactured by Kyowa Interface Science Co., Ltd.). Also, in order to obtain the above water contact angle, it is preferable that the active energy ray-curable composition is uniformly mixed.

The article of the present invention has a cured film formed by the active energy ray-curable composition of the present invention on a substrate surface, and the cured film functions as a coating film or a surface protective film of the article.

Examples of the article of the present invention include housings of various devices carried by a person's hand, such as tablet computers, portable (communication) information terminals such as mobile phones and smartphones, notebook PCs, digital media players, watch-type and glasses-type wearable computers, digital cameras, digital video cameras, and electronic book readers; various flat panel displays such as liquid crystal displays, plasma displays, organic EL displays, back projection displays, vacuum fluorescent displays (VFD), field emission projection displays, CRT, and toner-based displays, and display operation device surfaces such as screens of TVs, exterior of automobiles, glossy surfaces of piano and furniture, surfaces of building stone such as marble, decorative building materials of water section such as toilet, bath, and washroom, protective glass for art exhibition, window glass for show windows, showcases, covers for photo frames, glass for wristwatch, automobile windows, window glass for trains, aircrafts and the like, transparent glass or transparent plastic (acryl, polycarbonate, and the like) members such as automobile headlights and tail lamps, various mirror members, and the like.

In particular, examples thereof include various devices having a display input device that performs an operation on a screen with a finger or a palm of a person, such as touch panel displays, for example, tablet computers, notebook PCs, watch-type wearable computers, activity meters, portable (communication) information terminals such as mobile phones and smartphones, digital media players, electronic book readers, digital photo frames, game machines or controllers of game machines, digital cameras, digital video cameras, navigation devices for automobiles and the like, automated teller machines, automatic cash dispensers, automatic vending machines, digital signage (electronic signage), security system terminals, POS terminals, various controllers such as remote controllers, display input devices such as panel switches for in-vehicle devices, and the like.

Furthermore, examples of the article of the present invention include optical recording media such as magneto-optical disk or optical disk; optical components and optical devices such as eyeglass lenses, camera lenses, projector lens prisms, lens sheets, pellicle films, polarizing plates, optical filters, lenticular lenses, Fresnel lenses, antireflection films, optical fibers and optical couplers, or various protective components of these devices.

### EXAMPLES

Hereinafter, the present invention is described more specifically with reference to Synthesis Examples, Comparative Synthesis Examples, Examples, and Comparative Examples, but the present invention is not limited by the following Examples. In the following Examples, each repeat units shown in parentheses in the fluoropolyether group in the formula may be randomly bonded. The numerical average molecular weight of the fluoropolyether group is a value calculated from the characteristic peak intensity ratio in ¹⁹F-NMR analysis. Also, the film thickness is a value measured by a spectroscopic ellipsometer.

### [Synthesis Example 1] Synthesis of fluoropolyether-containing acrylic compound (A)

A reactor was charged with 272 ml of a 0.5 M THF solution of 3-butenylmagnesium bromide (1.4×10⁻¹ mol). With stirring, a mixture of 200 g (4.5×10⁻² mol) of a compound represented by the following formula (a): 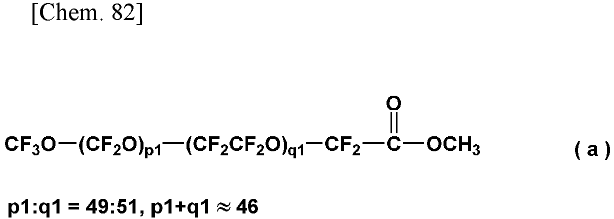 400 g of Asahiklin AC6000, and 200 g of PF5060 was added dropwise to the reactor and thereafter heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 193 g of a fluoropolyether-containing polymer represented by the following formula (b).

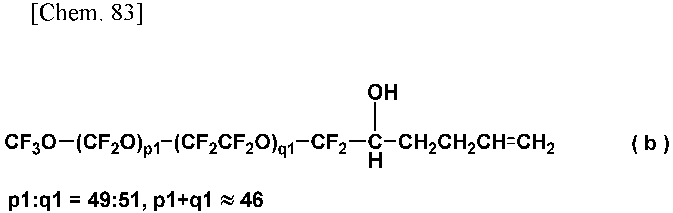

In a reactor, 100 g (2.3×10⁻² mol) of the compound represented by the formula (b) obtained above, 11 g (9.1×10⁻² mol) of allyl bromide and 0.17 g (4.6× 10⁻⁴ mol) of tetrabutylammonium iodide were mixed. Subsequently, 18 g (1.4×10⁻¹ mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 97 g of a fluoropolyether-containing polymer represented by the following formula (c).

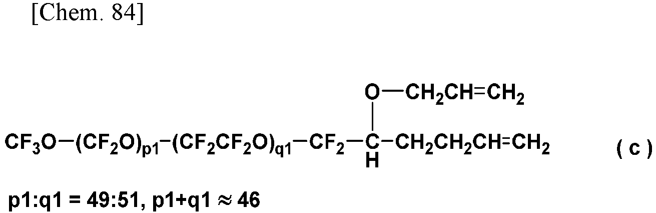

In a reactor, 80 g (1.8×10⁻² mol) of the compound represented by the formula (c) obtained above, 120 g of 1,3-bis(trifluoromethyl)benzene, 43 g (1.8×10⁻¹ mol) of 2,4,6,8-tetramethylcyclotetrasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (d).

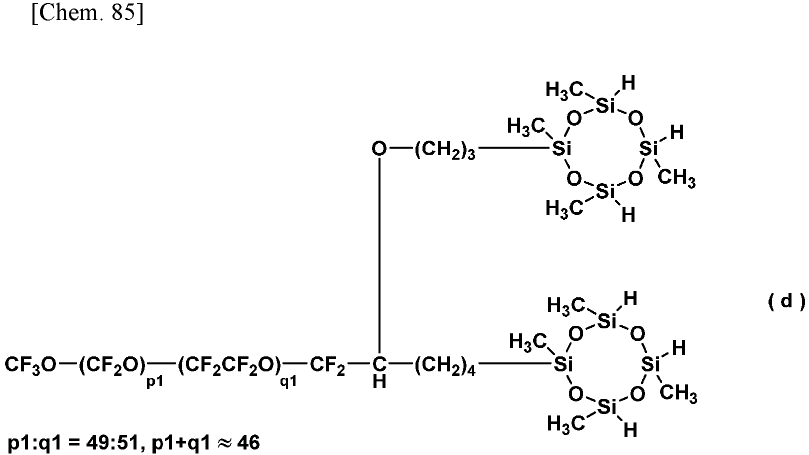

In a reactor, 80 g (1.6×10⁻² mol) of the compound represented by the formula (d) obtained above, 120 g of 1,3-bis(trifluoromethyl)benzene, 13 g (1.3×10⁻¹ mol) of ethylene glycol monoallyl ether, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (e).

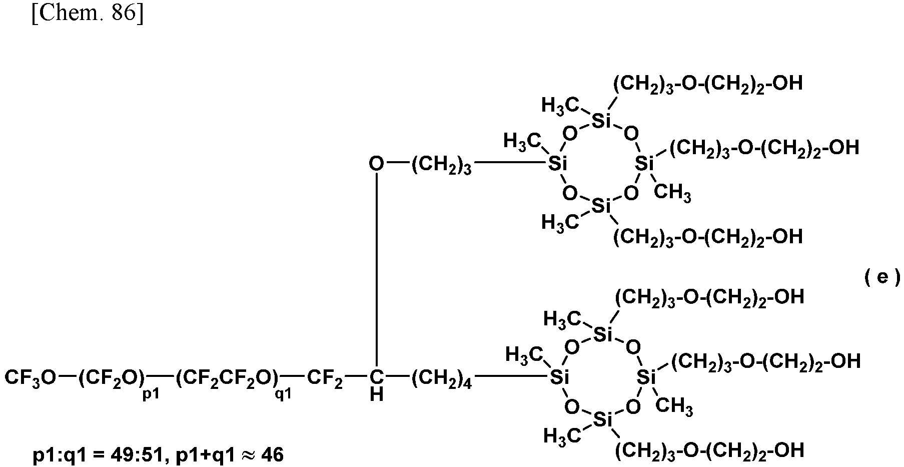

In a reactor, 24 g (4.4×10⁻³ mol) of the compound represented by the formula (e) obtained above, 50.0 g of THF and 3.7 g (2.6×10⁻² mol) of acryloyloxyethyl isocyanate were mixed, and the mixture was heated to 50°C. 0.02 g of tetrakis(2-ethylhexyl)orthotitanate was added thereto, and the mixture was stirred at 50°C for 24 hours. After completion of heating, distillation under reduced pressure was performed to obtain 22 g of a fluoropolyether-containing acrylic compound (A) (numerical average molecular weight of fluoropolyether group: 4,400) represented by the following formula (A).

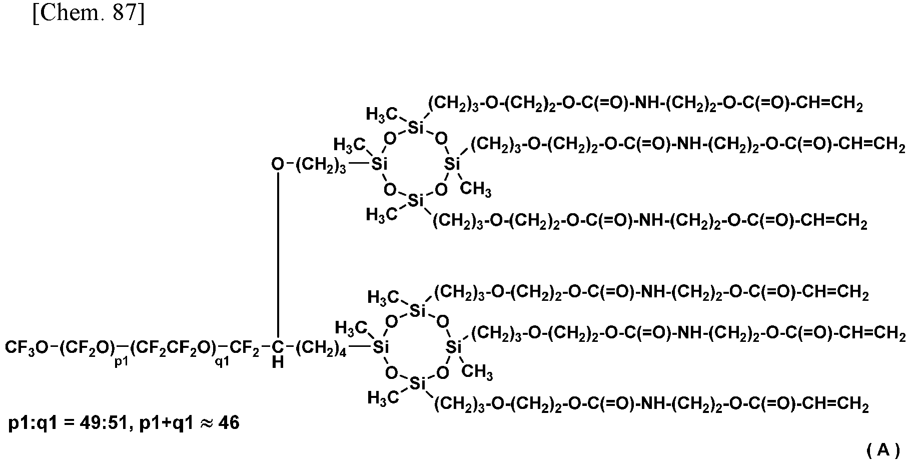

### [Synthesis Example 2] Synthesis of fluoropolyether-containing acrylic compound (B)

In a reactor, 24 g (4.4×10⁻³ mol) of the compound represented by the following formula (e): 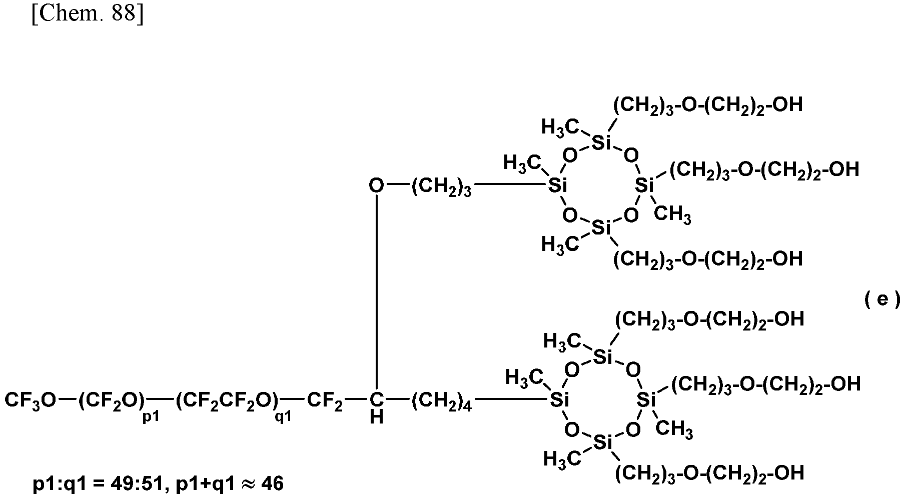 obtained in the same manner as in Synthesis Example 1, 50.0 g of THF and 4.1 g (2.6× 10⁻² mol) of methacryloyloxyethyl isocyanate were mixed, and the mixture was heated to 50°C. 0.02 g of tetrakis(2-ethylhexyl)orthotitanate was added thereto, and the mixture was stirred at 50°C for 24 hours. After completion of heating, distillation under reduced pressure was performed to obtain 20 g of a fluoropolyether-containing acrylic compound (B) (numerical average molecular weight of fluoropolyether group: 4,400) represented by the following formula (B).

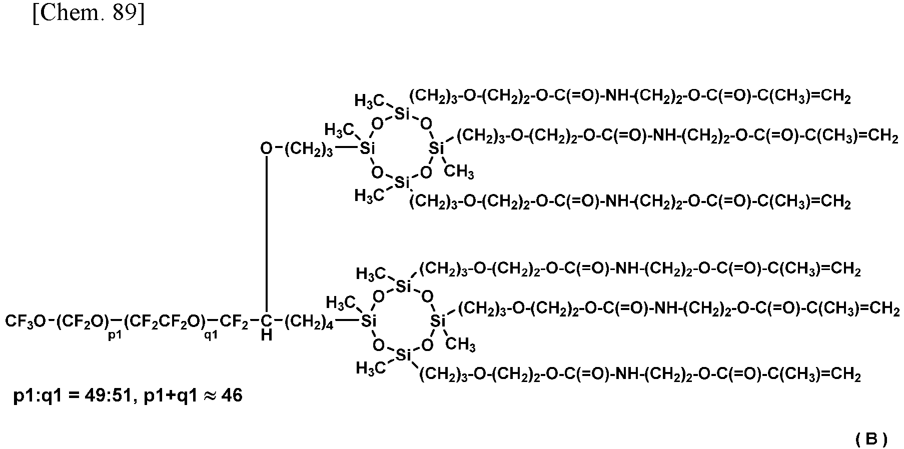

### [Synthesis Example 3] Synthesis of fluoropolyether-containing acrylic compound (C)

In a reactor, 80 g (1.6×10⁻² mol) of the compound represented by the following formula (d): 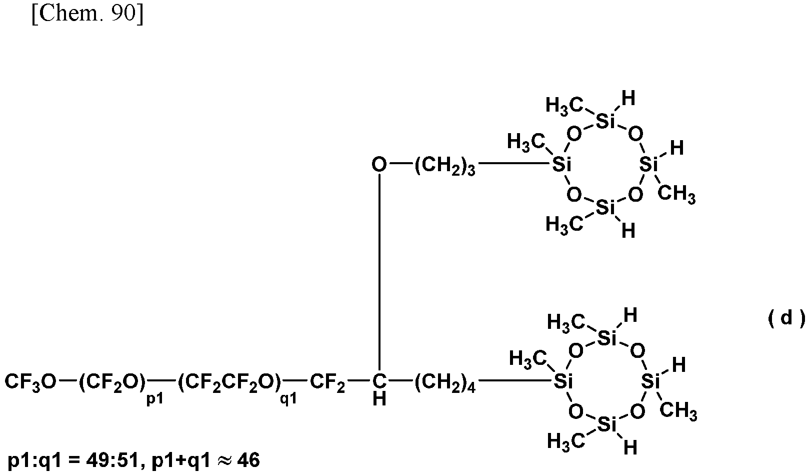 obtained in the same manner as in Synthesis Example 1, 120 g of 1,3-bis(trifluoromethyl)benzene, 22 g (1.3×10⁻¹ mol) of allyloxyethylmethacrylate, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 70 g of a fluoropolyether-containing acrylic compound (C) (numerical average molecular weight of fluoropolyether group: 4,400) represented by the following formula (C).

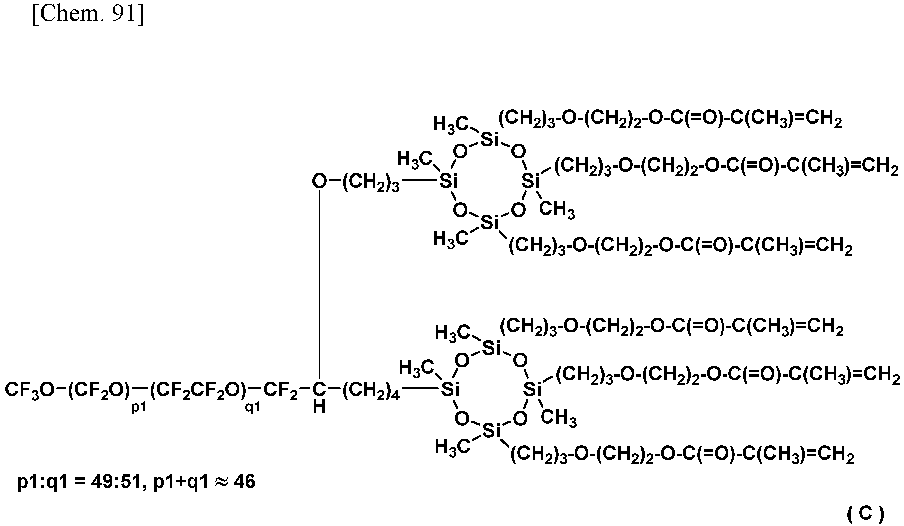

### [Synthesis Example 4] Synthesis of fluoropolyether-containing acrylic compound (D)

In a reactor, 80 g (1.8×10⁻² mol) of the compound represented by the following formula (c): 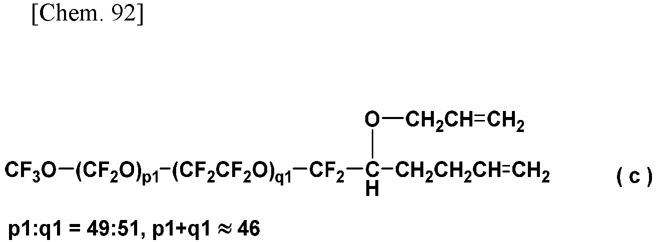 obtained in the same manner as in Synthesis Example 1, 120 g of 1,3-bis(trifluoromethyl)benzene, 54 g (1.8×10⁻¹ mol) of 2,4,6,8,10-pentamethylcyclopentasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 88 g of a fluoropolyether-containing polymer represented by the following formula (f).

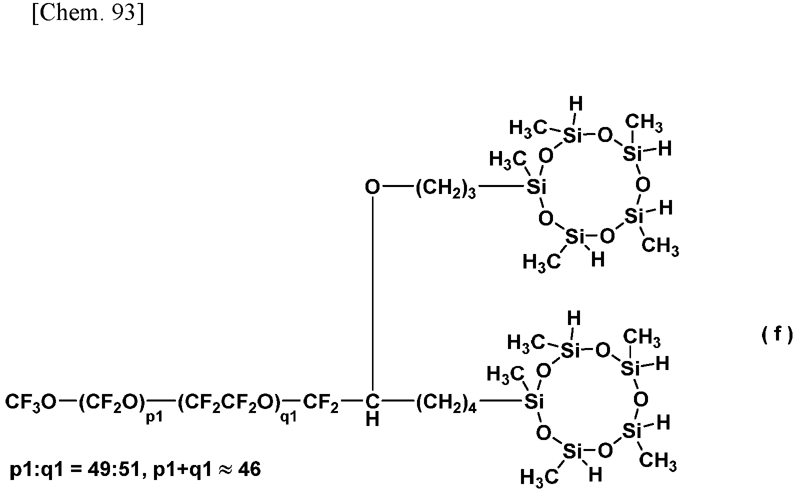

In a reactor, 80 g (1.6×10⁻² mol) of the compound represented by the formula (f) obtained above, 120 g of 1,3-bis(trifluoromethyl)benzene, 17 g (1.7×10⁻¹ mol) of ethylene glycol monoallyl ether, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 75 g of a fluoropolyether-containing polymer represented by the following formula (f').

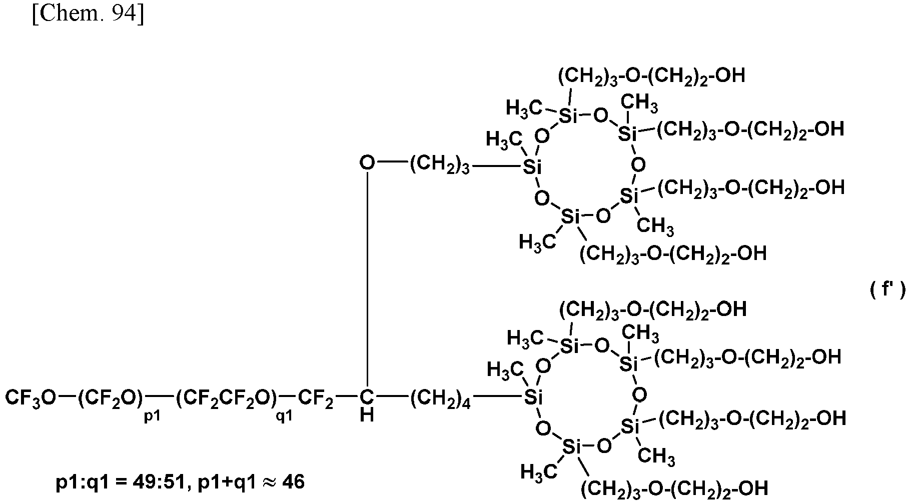

In a reactor, 24 g (4.1×10⁻³ mol) of the compound represented by the formula (f') obtained above, 50.0 g of THF and 4.6 g (3.3×10⁻² mol) of acryloyloxyethyl isocyanate were mixed, and the mixture was heated to 50°C. 0.02 g of tetrakis(2-ethylhexyl)orthotitanate was added thereto, and the mixture was stirred at 50°C for 24 hours. After completion of heating, distillation under reduced pressure was performed to obtain 20 g of a fluoropolyether-containing acrylic compound (D) (numerical average molecular weight of fluoropolyether group: 4,400) represented by the following formula (D).

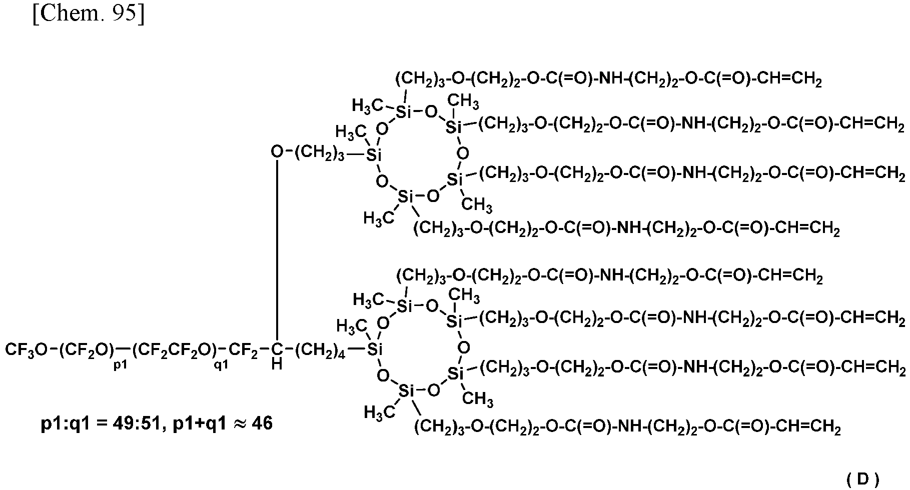

### [Synthesis Example 5] Synthesis of fluoropolyether-containing acrylic compound (E)

In a reactor, 80 g (1.6×10⁻² mol) of the compound represented by the following formula (f): 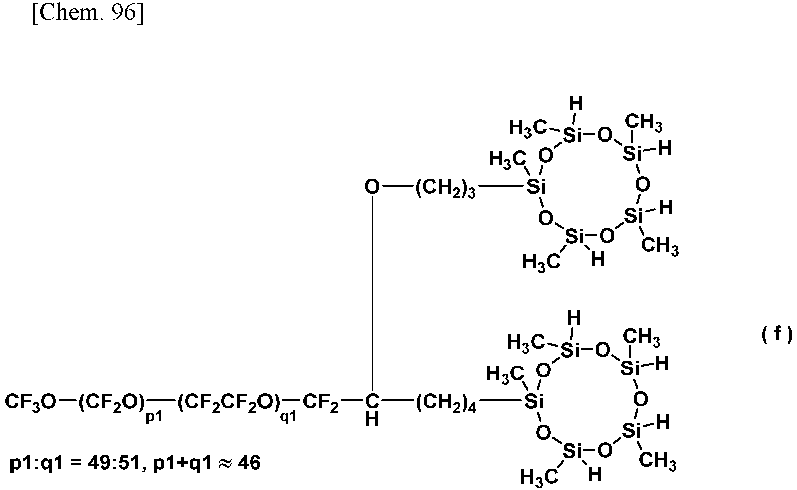 obtained in the same manner as in Synthesis Example 4, 120 g of 1,3-bis(trifluoromethyl)benzene, 28 g (1.6×10⁻¹ mol) of allyloxyethylmethacrylate, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 70 g of a fluoropolyether-containing acrylic compound (E) (numerical average molecular weight of fluoropolyether group: 4,400) represented by the following formula (E).

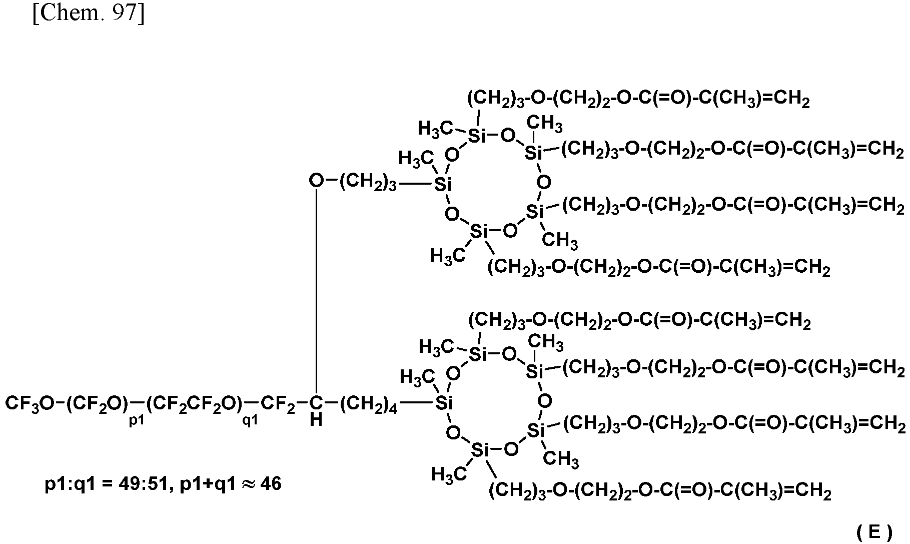

### [Synthesis Example 6] Synthesis of fluoropolyether-containing acrylic compound (F)

A reactor was charged with 282 ml of a 0.5 M THF solution of 3-butenylmagnesium bromide (1.4×10⁻¹ mol). With stirring, a mixture of 100 g (2.4×10⁻² mol) of a compound represented by the following formula (g): 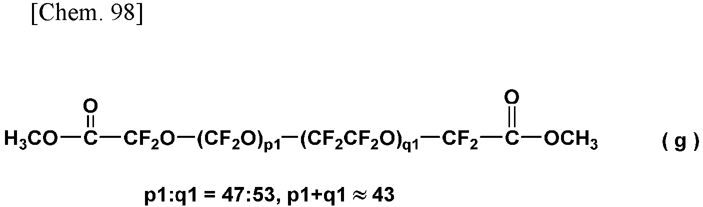 200 g of Asahiklin AC6000, and 100 g of PF5060 was added dropwise to the reactor and thereafter heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 94 g of a fluoropolyether-containing polymer represented by the following formula (h).

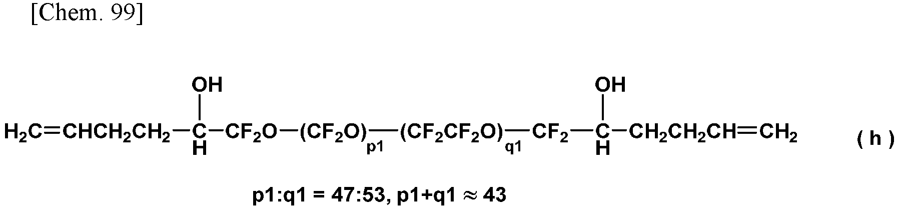

In a reactor, 20 g (4.3×10⁻³ mol) of the compound represented by the formula (h) obtained above, 4.4 g (3.6×10⁻² mol) of allyl bromide and 0.06 g (1.6×10⁻⁴ mol) of tetrabutylammonium iodide were mixed. Subsequently, 7.2 g (5.4×10⁻² mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 21 g of a fluoropolyether-containing polymer represented by the following formula (i).

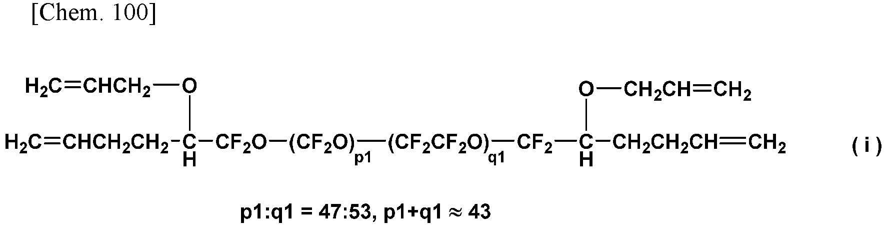

In a reactor, 20 g (4.3×10⁻³ mol) of the compound represented by the formula (i) obtained above, 30 g of 1,3-bis(trifluoromethyl)benzene, 22 g (9.1×10⁻² mol) of 2,4,6,8-tetramethylcyclotetrasiloxane, and 4.8×10⁻² g of a toluene solution of platinum-1,3-divinyl-tetramethyldisiloxane complex (chloroplatinic acid/vinyl siloxane complex) (containing 1.4×10⁻⁷ mol of Pt) were mixed. The solution was aged at 80°C for 24 hours. Thereafter, the solvent and unreacted reactants were distilled off in vacuum, obtaining 22 g of a fluoropolyether-containing polymer represented by the following formula (j).

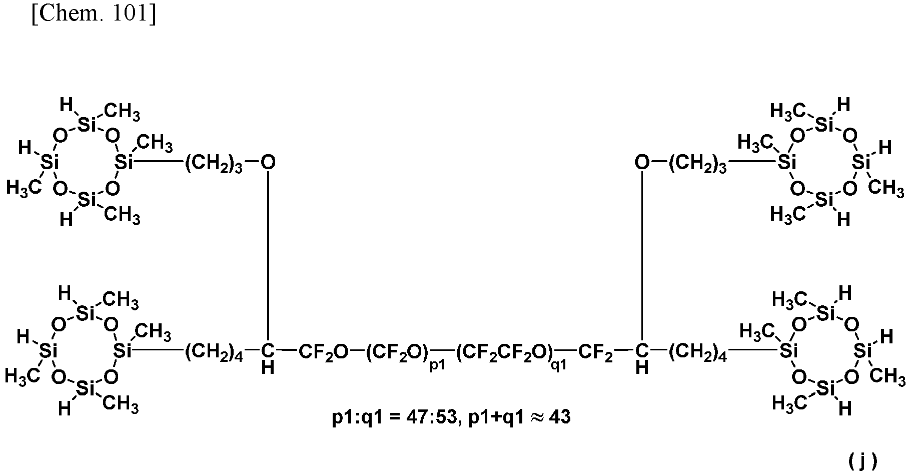

In a reactor, 20 g (3.8×10⁻³ mol) of the compound represented by the formula (j) obtained above, 30 g of 1,3-bis(trifluoromethyl)benzene, 11 g (6.5×10⁻² mol) of allyloxyethylmethacrylate, and 2.0×10⁻² g of a toluene solution of platinum-1,3-divinyl-tetramethyldisiloxane complex (chloroplatinic acid/vinyl siloxane complex) (containing 6.0×10⁻⁸ mol of Pt) were mixed. The solution was aged at 80°C for 24 hours. Thereafter, the solvent and unreacted reactants were distilled off in vacuum, obtaining 18 g of a fluoropolyether-containing acrylic compound (F) (numerical average molecular weight of fluoropolyether group: 4,400) represented by the following formula (F).

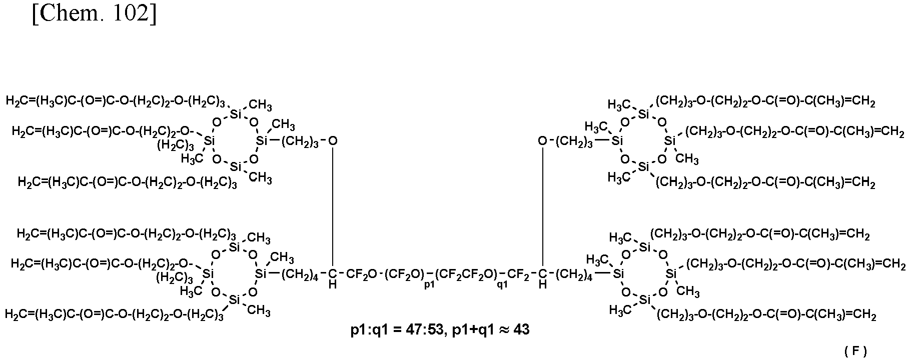

### [Synthesis Example 7] Synthesis of fluoropolyether-containing acrylic compound (G)

A reactor was charged with 507 ml of a 0.5 M THF solution of 3-butenylmagnesium bromide (2.6×10⁻¹ mol). With stirring, a mixture of 200 g (8.7×10⁻² mol) of a compound represented by the following formula (k): 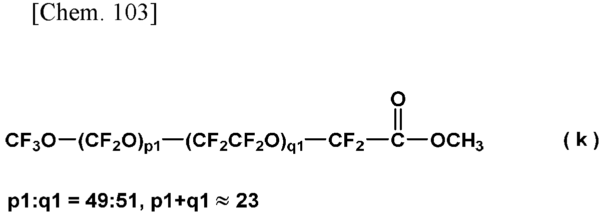 400 g of Asahiklin AC6000, and 200 g of PF5060 was added dropwise to the reactor and thereafter heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 193 g of a fluoropolyether-containing polymer represented by the following formula (I).

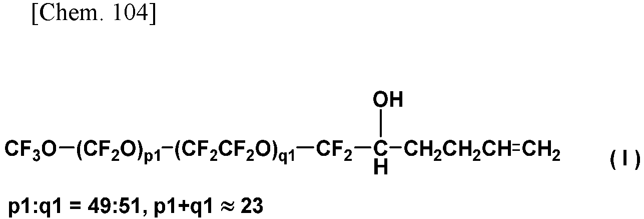

In a reactor, 100 g (4.3×10⁻² mol) of the compound represented by the formula (I) obtained above, 21 g (1.7×10⁻¹ mol) of allyl bromide and 0.33 g (8.9×10⁻⁴ mol) of tetrabutylammonium iodide were mixed. Subsequently, 33 g (2.5×10⁻¹ mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 97 g of a fluoropolyether-containing polymer represented by the following formula (m).

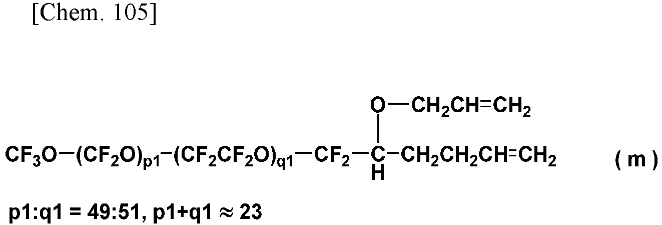

In a reactor, 80 g (3.3×10⁻² mol) of the compound represented by the formula (m) obtained above, 120 g of 1,3-bis(trifluoromethyl)benzene, 86 g (3.6×10⁻¹ mol) of 2,4,6,8-tetramethylcyclotetrasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (n).

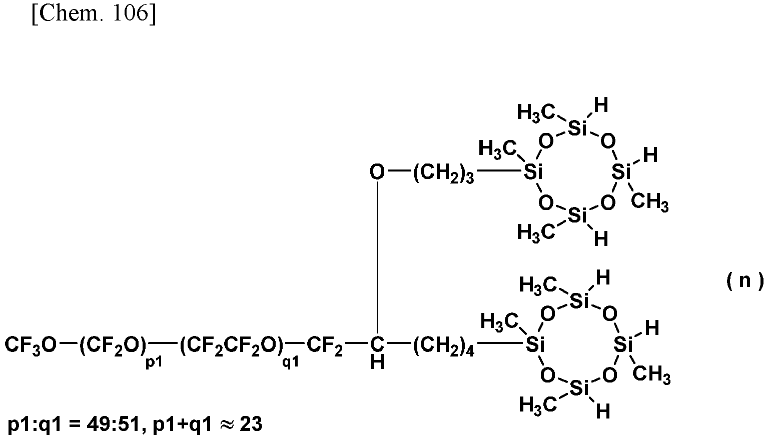

In a reactor, 80 g (3.0×10⁻² mol) of the compound represented by the formula (n) obtained above, 120 g of 1,3-bis(trifluoromethyl)benzene, 40 g (2.4×10⁻¹ mol) of allyloxyethylmethacrylate, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 89 g of a fluoropolyether-containing acrylic compound (G) (numerical average molecular weight of fluoropolyether group: 2,300) represented by the following formula (G).

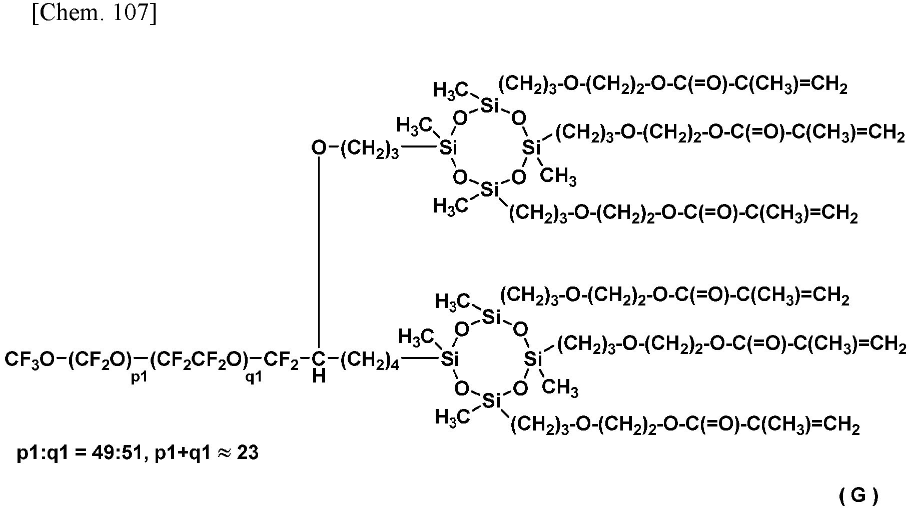

### [Synthesis Example 8] Synthesis of fluoropolyether-containing acrylic compound (H)

A reactor was charged with 186 ml of a 0.5 M THF solution of 3-butenylmagnesium bromide (9.3×10⁻² mol). With stirring, a mixture of 200 g (3.1×10⁻² mol) of a compound represented by the following formula (o): 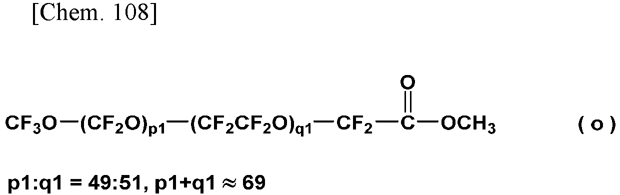 400 g of Asahiklin AC6000, and 200 g of PF5060 was added dropwise to the reactor and thereafter heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 193 g of a fluoropolyether-containing polymer represented by the following formula (p).

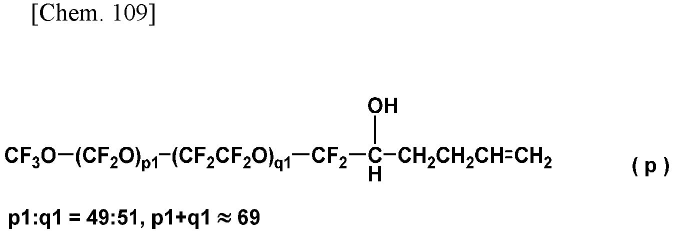

In a reactor, 100 g (1.5×10⁻² mol) of the compound represented by the formula (p) obtained above, 7 g (5.8× 10⁻² mol) of allyl bromide and 0.11 g (3.0×10⁻⁴ mol) of tetrabutylammonium iodide were mixed. Subsequently, 12 g (9.0×10⁻² mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 97 g of a fluoropolyether-containing polymer represented by the following formula (q).

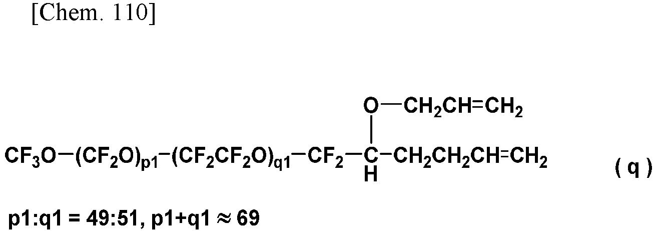

In a reactor, 80 g (1.2×10⁻² mol) of the compound represented by the formula (q) obtained above, 120 g of 1,3-bis(trifluoromethyl)benzene, 36 g (1.2×10⁻¹ mol) of 2,4,6,8,10-pentamethylcyclopentasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (r).

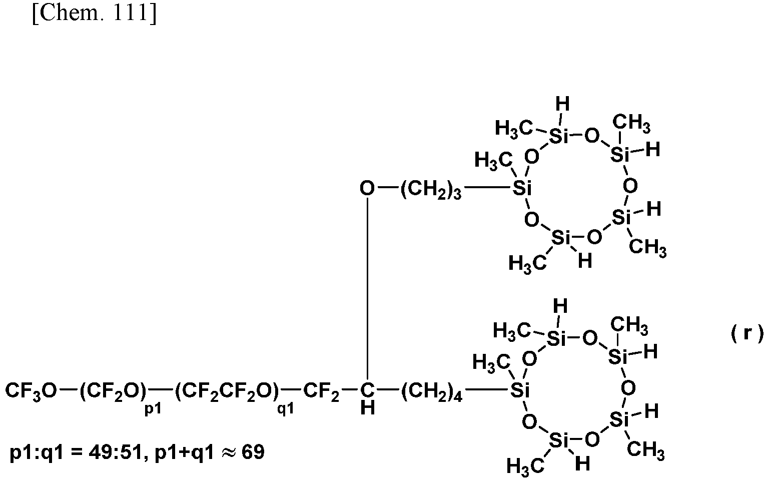

In a reactor, 80 g (1.1×10⁻² mol) of the compound represented by the formula (r) obtained above, 120 g of 1,3-bis(trifluoromethyl)benzene, 13 g (1.3×10⁻¹ mol) of ethylene glycol monoallyl ether, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 72 g of a fluoropolyether-containing polymer represented by the following formula (s).

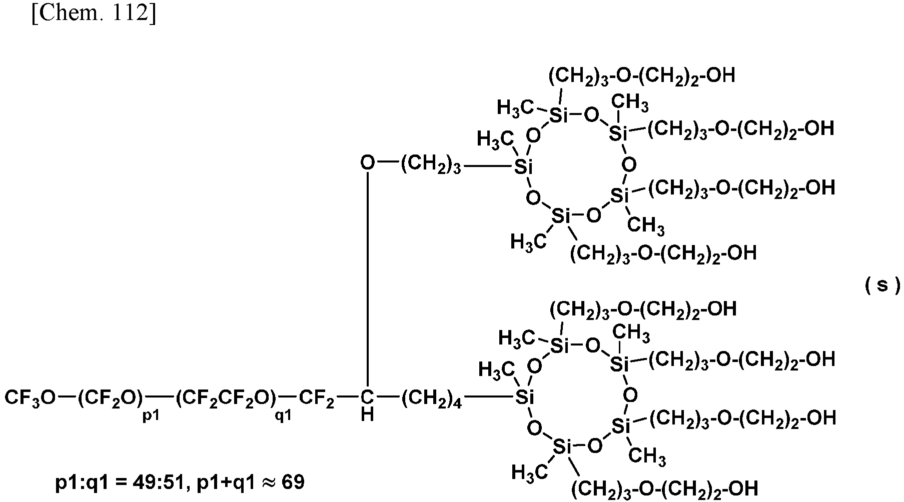

In a reactor, 24 g (3.0×10⁻³ mol) of the compound represented by the formula (s) obtained above, 50.0 g of THF and 4.0 g (2.8× 10⁻² mol) of acryloyloxyethyl isocyanate were mixed, and the mixture was heated to 50°C. 0.02 g of tetrakis(2-ethylhexyl)orthotitanate was added thereto, and the mixture was stirred at 50°C for 24 hours. After completion of heating, distillation under reduced pressure was performed to obtain 18 g of a fluoropolyether-containing acrylic compound (H) (numerical average molecular weight of fluoropolyether group: 6,500) represented by the following formula (H).

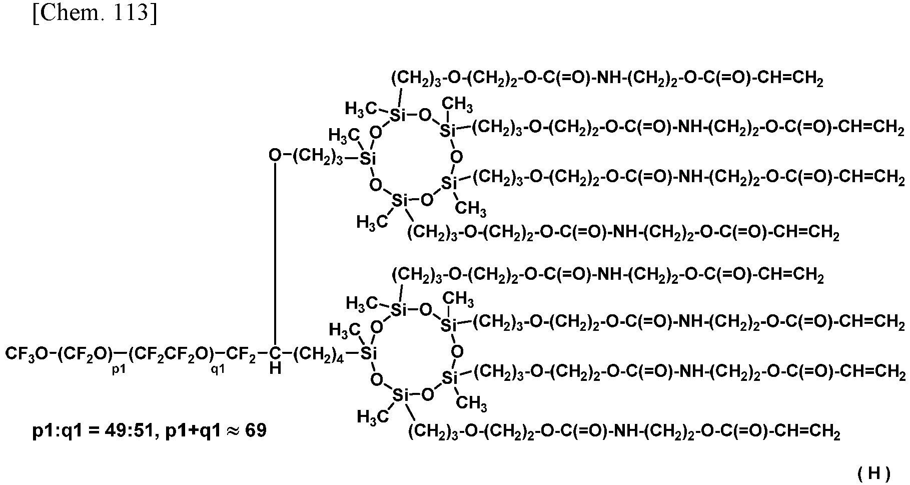

### [Synthesis Example 9] Synthesis of fluoropolyether-containing acrylic compound (I)

A reactor was charged with 126 ml of a 0.5 M THF solution of 3-butenylmagnesium bromide (6.3×10⁻² mol). With stirring, a mixture of 100 g (2.3×10⁻² mol) of a compound represented by the following formula (t): 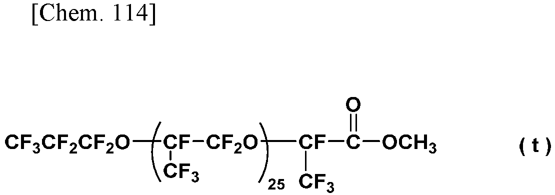 200 g of Asahiklin AC6000, and 100 g of PF5060 was added dropwise to the reactor and thereafter heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 96 g of a fluoropolyether-containing polymer represented by the following formula (u).

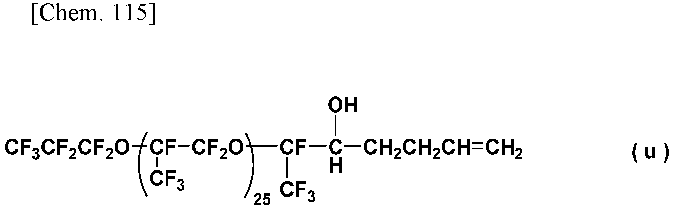

In a reactor, 20 g (4.5×10⁻³ mol) of the compound represented by the formula (u) obtained above, 2.1 g (1.7×10⁻² mol) of allyl bromide and 0.03 g (8.1×10⁻⁵ mol) of tetrabutylammonium iodide were mixed. Subsequently, 3.4 g (2.6×10⁻² mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 19 g of a fluoropolyether-containing polymer represented by the following formula (v).

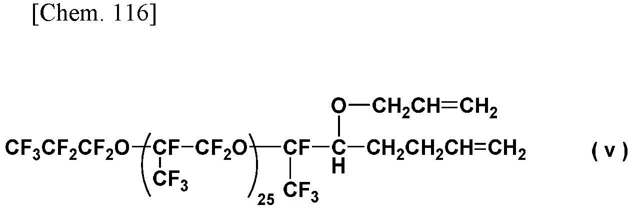

In a reactor, 10 g (2.2×10⁻³ mol) of the compound represented by the formula (v) obtained above, 15 g of 1,3-bis(trifluoromethyl)benzene, 6.6 g (2.2× 10⁻² mol) of 2,4,6,8,10-pentamethylcyclopentasiloxane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 11 g of a fluoropolyether-containing polymer represented by the following formula (w).

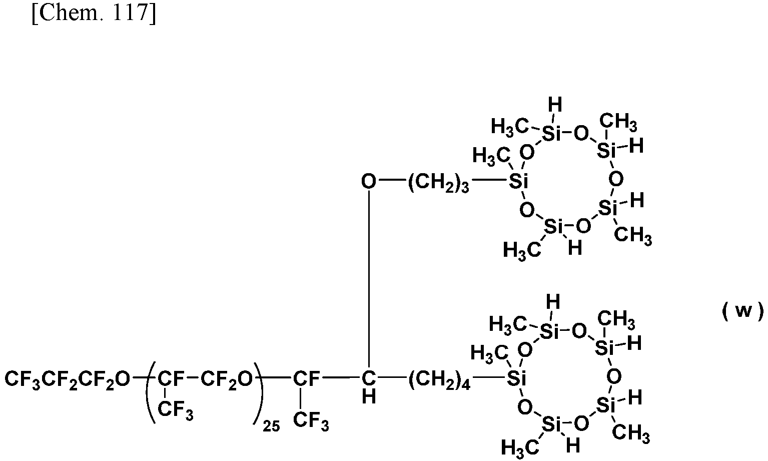

In a reactor, 10 g (1.9×10⁻³ mol) of the compound represented by the formula (w) obtained above, 15 g of 1,3-bis(trifluoromethyl)benzene, 2.0 g (2.0× 10⁻² mol) of ethylene glycol monoallyl ether, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (x).

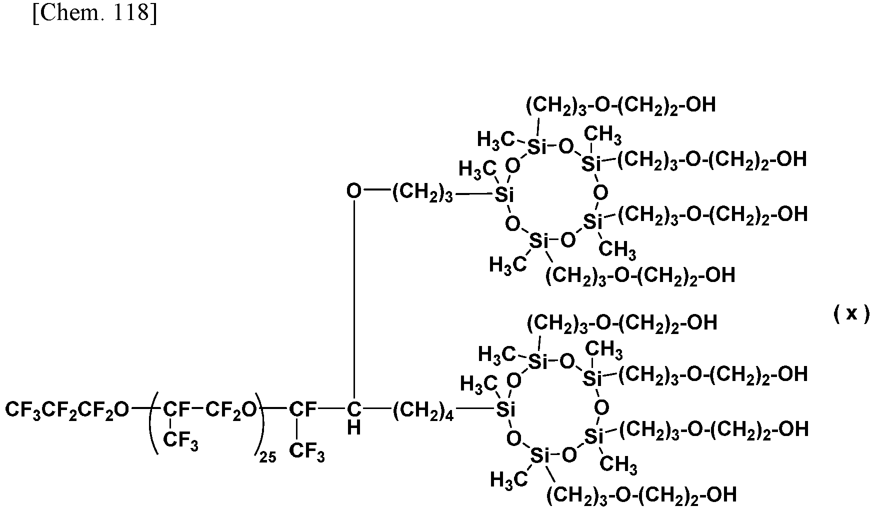

In a reactor, 2.4 g (4.1×10⁻⁴ mol) of the compound represented by the formula (x) obtained above, 5.0 g of THF and 0.46 g (3.3×10⁻³ mol) of acryloyloxyethyl isocyanate were mixed, and the mixture was heated to 50°C. 0.002 g of tetrakis(2-ethylhexyl)orthotitanate was added thereto, and the mixture was stirred at 50°C for 24 hours. After completion of heating, distillation under reduced pressure was performed to obtain 18 g of a fluoropolyether-containing acrylic compound (I) (numerical average molecular weight of fluoropolyether group: 4,400) represented by the following formula (I).

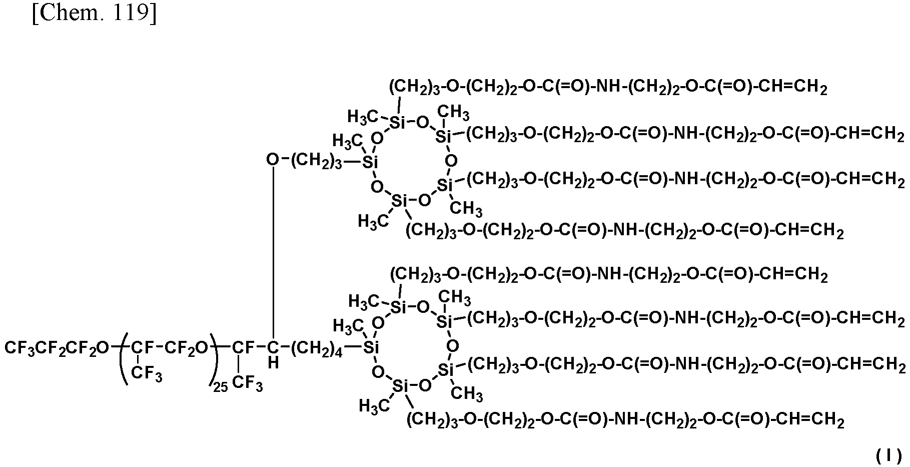

### [Synthesis Example 10] Synthesis of fluoropolyether-containing acrylic compound (J)

A reactor was charged with 126 ml of a 0.5 M THF solution of 3-butenylmagnesium bromide (6.3×10⁻² mol). With stirring, a mixture of 100 g (2.2×10⁻² mol) of a compound represented by the following formula (y): 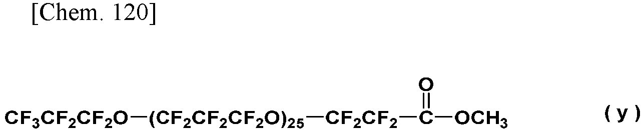 200 g of Asahiklin AC6000, and 100 g of PF5060 was added dropwise to the reactor and thereafter heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 96 g of a fluoropolyether-containing polymer represented by the following formula (z).

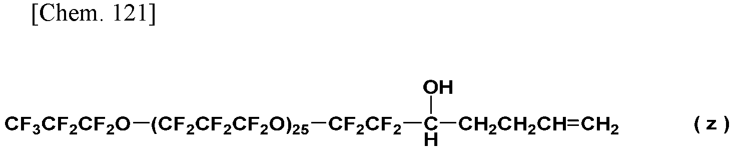

In a reactor, 20 g (4.4×10⁻³ mol) of the compound represented by the formula (z) obtained above, 2.1 g (1.7×10⁻² mol) of allyl bromide and 0.03 g (8.1×10⁻⁵ mol) of tetrabutylammonium iodide were mixed. Subsequently, 3.4 g (2.6×10⁻² mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 19 g of a fluoropolyether-containing polymer represented by the following formula (aa).

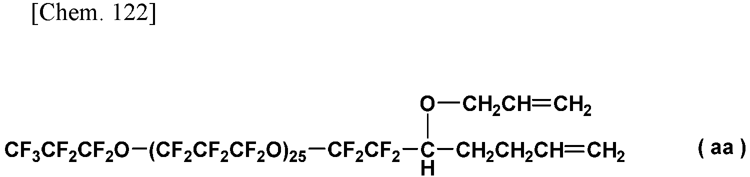

In a reactor, 10 g (2.2×10⁻³ mol) of the compound represented by the formula (aa) obtained above, 15 g of 1,3-bis(trifluoromethyl)benzene, 6.6 g (2.2×10⁻² mol) of 2,4,6,8,10-pentamethylcyclopentasiloxane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 12 g of a fluoropolyether-containing polymer represented by the following formula (ab).

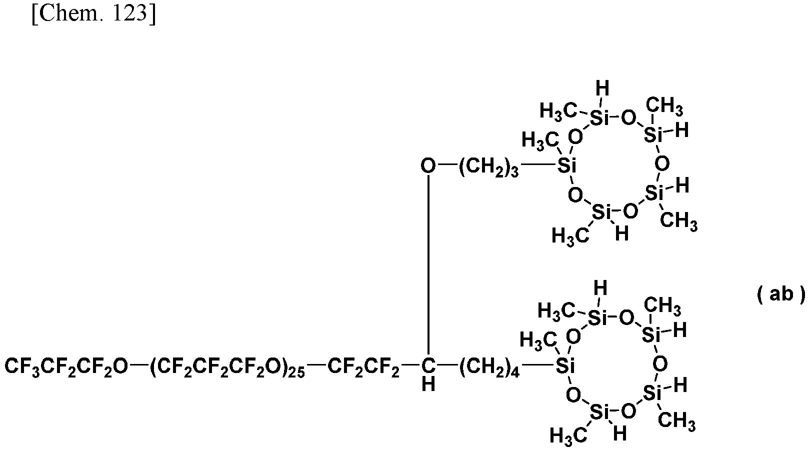

In a reactor, 10 g (1.9×10⁻³ mol) of the compound represented by the formula (ab) obtained above, 15 g of 1,3-bis(trifluoromethyl)benzene, 3.4 g (2.0× 10⁻² mol) of allyloxyethylmethacrylate, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 12 g of a fluoropolyether-containing acrylic compound (J) (numerical average molecular weight of fluoropolyether group: 4,400) represented by the following formula (J).

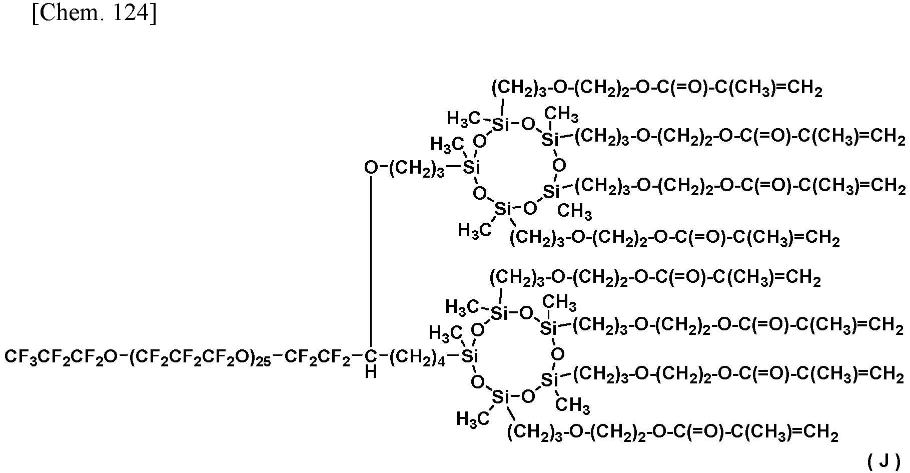

### [Synthesis Example 11] Synthesis of fluoropolyether-containing acrylic compound (K)

In a reactor, 80 g (1.8×10⁻² mol) of the compound represented by the following formula (c): 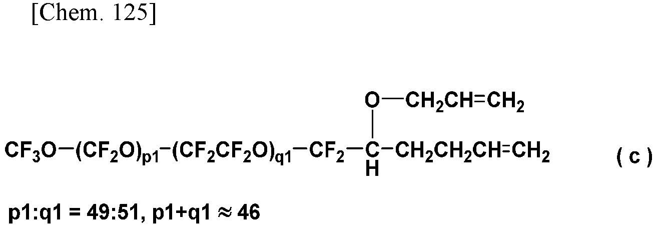 obtained in the same manner as in Synthesis Example 1, 120 g of 1,3-bis(trifluoromethyl)benzene, 59 g (1.8×10⁻¹ mol) of tetrakis(dimethylsiloxy)silane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (ac).

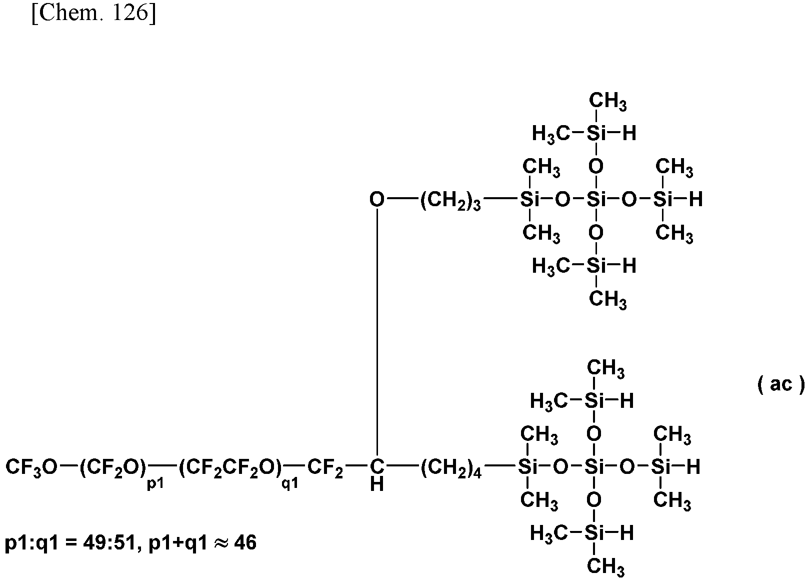

In a reactor, 80 g (1.6×10⁻² mol) of the compound represented by the formula (ac) obtained above, 120 g of 1,3-bis(trifluoromethyl)benzene, 21 g (1.2×10⁻¹ mol) of allyloxyethylmethacrylate, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing acrylic compound (K) (numerical average molecular weight of fluoropolyether group: 4,400) represented by the following formula (K).

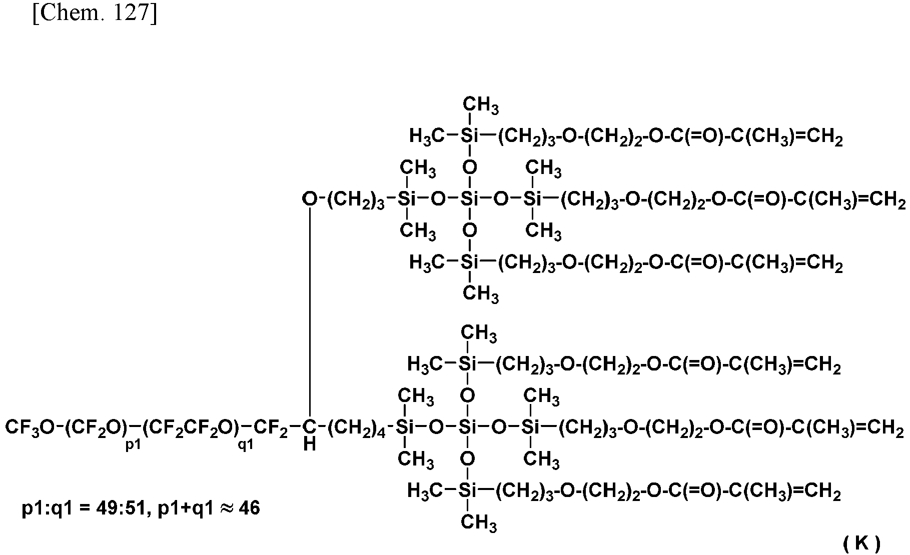

### [Comparative Synthesis Example 1] Synthesis of fluoropolyether-containing acrylic compound (X)

A 5,000 mL three-necked flask equipped with a reflux device and a stirrer was charged under a dry nitrogen atmosphere with 1,000 g (0.25 mol) of perfluoropolyether represented by the following formula:

CH₂=CH-CH₂-O-CH₂-Rf^{B1}-CH₂-O-CH₂-CH=CH₂

Rf^{B1}:-CF₂O(CF₂CF₂O)₂₁(CF₂O)₂₁CF₂-

1,400 g of m-xylene hexafluoride, and 722 g (3.0 mol) of 2,4,6,8-tetramethylcyclotetrasiloxane, and heated to 90°C while stirring the mixture. Thereto was charged 0.884 g of a toluene solution of a platinum/1,3-divinyl-tetramethyldisiloxane complex (containing 2.2×10⁻⁶ mol as Pt alone), and stirring was continued for 4 hours while internal temperature was maintained at 90°C or more. After confirming disappearance of the allyl group of raw material by ¹H-NMR, the solvent and excess 2,4,6,8-tetramethylcyclotetrasiloxane were distilled off under reduced pressure. Thereafter, activated carbon treatment was performed to obtain 993 g of a fluoropolyether-containing polymer (ad) represented by the following formula.

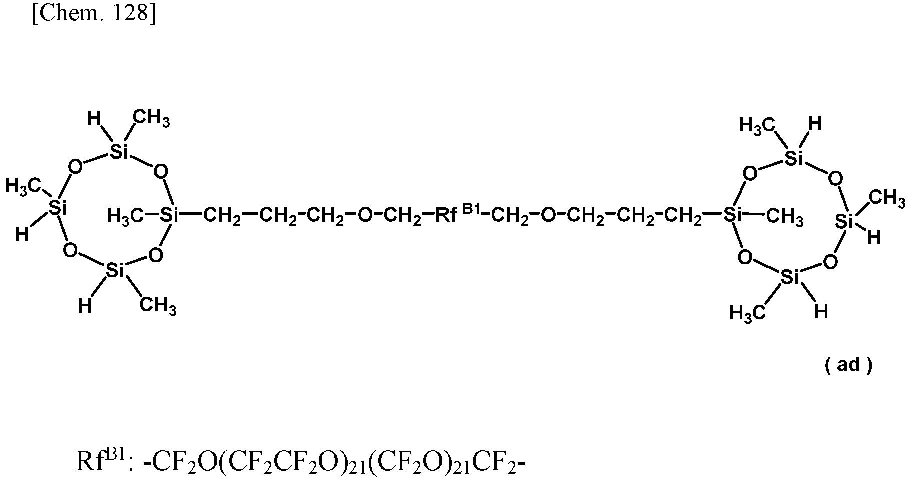

Under a dry air atmosphere, 7.05 g (0.069 mol) of ethylene glycol monoallyl ether, 50.0 g of m-xylene hexafluoride, and 0.0442 g of a toluene solution of platinum-1,3-divinyl-tetramethyldisiloxane complex (chloroplatinic acid/vinyl siloxane complex) (containing 1.1×10⁻⁷ mol of Pt) were mixed with 50.0 g (Si-H group amount: 0.066 mol) of the fluoropolyether-containing polymer (ad) obtained above, and the mixture was stirred at 100°C for 4 hours. After confirming disappearance of the Si-H group by ¹H-NMR and IR, the solvent and excess 2-allyloxyethanol were distilled off under reduced pressure, and activated carbon treatment was performed to obtain 54.9 g of a pale yellow transparent liquid fluoropolyether-containing polymer (ae) represented by the following formula.

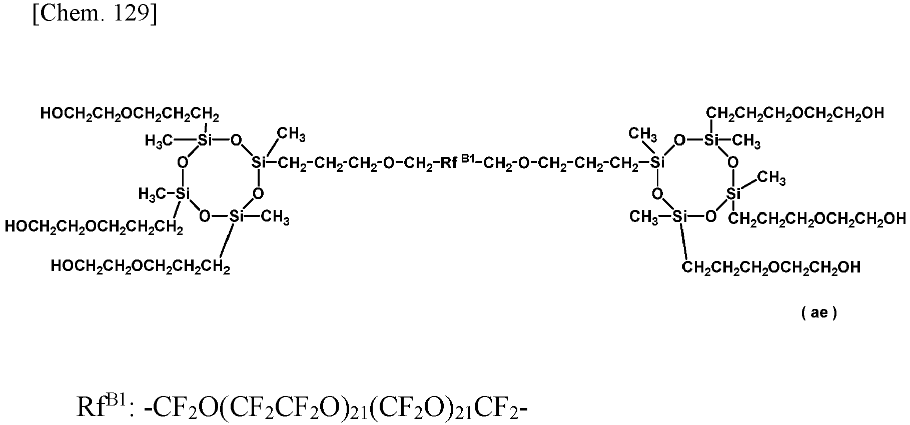

Under a dry air atmosphere, 50.0 g of THF and 9.0 g (0.064 mol) of acryloyloxyethyl isocyanate were mixed with 50.0 g (hydroxyl group amount: 0.058 mol) of the obtained fluoropolyether-containing polymer (ae), and the mixture was heated to 50°C. 0.15 g of tetrakis(2-ethylhexyl)orthotitanate was added thereto, and the mixture was stirred at 50°C for 24 hours. After completion of heating, distillation under reduced pressure was performed to obtain 58.5 g of a pale yellow paste-like substance. From the results of ¹H-NMR and IR, the obtained substance was confirmed to be a fluoropolyether-containing acrylic compound (X) (numerical average molecular weight of fluoropolyether group: 3,900) shown below.

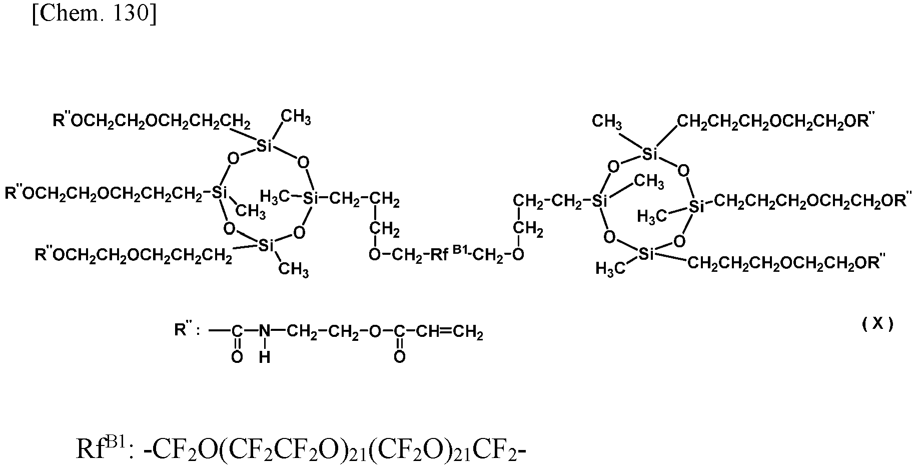

### [Examples 1 to 22, Comparative Examples 1, 2]

### Preparation of active energy ray-curable composition

Solutions (active energy ray-curable compositions) in which the compounds (A) to (K) synthesized in Synthesis Examples 1 to 11 and the compound (X) synthesized in Comparative Synthesis Example 1 were blended in the ratios shown in Tables 1 and 2 below were prepared.

**[Table 1]**

| Compounding amount (pbw) | Example | | | | | | | | | | | Comp. Ex. |
|---|---|---|---|---|---|---|---|---|---|---|---|---|
| | 1 | 2 | 3 | 4 | 5 | 6 | 7 | 8 | 9 | 10 | 11 | 1 |
| E-40 | 100 | 100 | 100 | 100 | 100 | 100 | 100 | 100 | 100 | 100 | 100 | 100 |
| IPA | 71 | 71 | 71 | 71 | 71 | 71 | 71 | 71 | 71 | 71 | 71 | 71 |
| AcBu | 71 | 71 | 71 | 71 | 71 | 71 | 71 | 71 | 71 | 71 | 71 | 71 |
| 1-184 | 3 | 3 | 3 | 3 | 3 | 3 | 3 | 3 | 3 | 3 | 3 | 3 |
| Compound A | 1 | | | | | | | | | | | |
| Compound B | | 1 | | | | | | | | | | |
| Compound C | | | 1 | | | | | | | | | |
| Compound D | | | | 1 | | | | | | | | |
| Compound E | | | | | 1 | | | | | | | |
| Compound F | | | | | | 1 | | | | | | |
| Compound G | | | | | | | 1 | | | | | |
| Compound H | | | | | | | | 1 | | | | |
| Compound I | | | | | | | | | 1 | | | |
| Compound J | | | | | | | | | | 1 | | |
| Compound K | | | | | | | | | | | 1 | |
| Compound X | | | | | | | | | | | | 1 |

**[Table 2]**

| Compounding amount (pbw) | Example | | | | | | | | | | | Comp. Ex. |
|---|---|---|---|---|---|---|---|---|---|---|---|---|
| | 12 | 13 | 14 | 15 | 16 | 17 | 18 | 19 | 20 | 21 | 22 | 2 |
| MEK | 100 | 100 | 100 | 100 | 100 | 100 | 100 | 100 | 100 | 100 | 100 | 100 |
| I-184 | 0.006 | 0.006 | 0.006 | 0.006 | 0.006 | 0.006 | 0.006 | 0.006 | 0.006 | 0.006 | 0.006 | 0.006 |
| Compound A | 0.2 | | | | | | | | | | | |
| Compound B | | 0.2 | | | | | | | | | | |
| Compound C | | | 0.2 | | | | | | | | | |
| Compound D | | | | 0.2 | | | | | | | | |
| Compound E | | | | | 0.2 | | | | | | | |
| Compound F | | | | | | 0.2 | | | | | | |
| Compound G | | | | | | | 0.2 | | | | | |
| Compound H | | | | | | | | 0.2 | | | | |
| Compound I | | | | | | | | | 0.2 | | | |
| Compound J | | | | | | | | | | 0.2 | | |
| Compound K | | | | | | | | | | | 0.2 | |
| Compound X | | | | | | | | | | | | 0.2 |

- E-40:: tetrafunctional acrylate (EBECRYL 40, manufactured by Daicel-Cytec Co., Ltd.)
- IPA:: solvent (isopropanol)
- AcBu:: solvent (butyl acetate)
- MEK:: solvent (methyl ethyl ketone)
- I-184:: 1-hydroxycyclohexyl phenyl ketone (IRGACURE 184, manufactured by Ciba Japan K.K.)

### Coating and preparation of cured film (1)

Each of the solutions (active energy ray-curable compositions) prepared in Examples 1 to 11 and Comparative Example 1 was applied onto a polycarbonate substrate by spin coating. After coating, the coating was heated at 80°C for 1 minute to volatilize the solvent and leveling was performed, and then the coated surface was irradiated with ultraviolet rays with an integrated irradiation dose of 1,600 mJ/cm² in a nitrogen atmosphere using a conveyor type metal halide UV irradiation device (manufactured by Panasonic Electric Works Co., Ltd.) to cure the composition, thereby obtaining a cured film with a thickness of 5 µm.

### Coating and preparation of cured film (2)

A solution prepared in a ratio of 100 parts by weight of A-9550: dipentaerythritol polyacrylate (manufactured by Shin-Nakamura Chemical Co., Ltd.), 142 parts by weight of AcBu, and 3 parts by weight of I-184 was applied onto a polycarbonate substrate by spin coating. After coating, the coating was heated at 80°C for 1 minute to volatilize the solvent and leveling was performed, and then the coated surface was irradiated with ultraviolet rays with an integrated irradiation dose of 1,600 mJ/cm² in an air using a conveyor type metal halide UV irradiation device (manufactured by Panasonic Electric Works Co., Ltd.) to cure the composition, thereby obtaining a cured film with a thickness of 5 µm.

Each of the solutions (active energy ray-curable compositions) prepared in Examples 12 to 22 and Comparative Example 2 was applied onto the obtained cured film by spin coating. After coating, the coating was heated at 80°C for 1 minute to volatilize the solvent and leveling was performed, and then the coated surface was irradiated with ultraviolet rays with an integrated irradiation dose of 1,600 mJ/cm² in a nitrogen atmosphere using a conveyor type metal halide UV irradiation device (manufactured by Panasonic Electric Works Co., Ltd.) to cure the composition, thereby obtaining a cured film with a thickness of 5 nm.

Appearance (transparency) of the cured film obtained above was visually measured, and water contact angle measurement, oleic acid contact angle measurement and evaluation of marker resistance were performed as evaluation of anti-fouling property by the following methods, and water contact angle measurement after abrasion test was performed as evaluation of abrasion resistance. These results are shown in Table 2. The cure film in which the appearance (transparency) was transparent was evaluated as "○", and the cure film in which the appearance (transparency) was not transparent was evaluated as "×".

### Evaluation of anti-fouling property

### [Water contact angle measurement, oleic acid contact angle measurement]

For the cured film prepared above, a contact angle of the cured film with respect to water and oleic acid was measured using a contact angle meter Drop Master (manufactured by Kyowa Interface Science Co., Ltd.) (droplet: 2 µl, temperature: 25°C, relative humidity: 40%).

### [Evaluation of marker resistance (marker ink repellency)]

For the cured film prepared above, a straight line was drawn with a marker pen (magic ink, large, manufactured by Teranishi Chemical Industry Co., Ltd.), and the cured film that repelled the ink was evaluated as "○", and the cured film that did not repel the ink was evaluated as "×".

### Evaluation of abrasion resistance

### [Evaluation of water contact angle after abrasion test]

A surface of the cured film was subjected to an abrasion test using a rubbing tester (manufactured by Shinto Scientific Co., Ltd.), and a water contact angle after the test was measured in the same manner as above. Evaluation was an average number of times performed at N = 4.

Test conditions are shown below.

| | |
|---|---|
| Eraser: | RUBBER STICK (manufactured by Minoan) |
| Moving distance (one way): | 40 mm |
| Moving speed: | 3,200 mm/min |
| Load: | 500 gf/6 mm²φ |
| Number of abrasion: | 5,000 times |

**[Table 3]**

| | Appearance | Water contact angle (°) | Oleic acid contact angle (°) | Magic ink repellency | Water contact angle after abrasion test (°) |
|---|---|---|---|---|---|
| Example 1 | ○ | 113 | 72 | ○ | 108 |
| Example 2 | ○ | 113 | 72 | ○ | 107 |
| Example 3 | ○ | 114 | 72 | ○ | 106 |
| Example 4 | ○ | 112 | 72 | ○ | 106 |
| Example 5 | ○ | 114 | 72 | ○ | 103 |
| Example 6 | ○ | 109 | 69 | ○ | 98 |
| Example 7 | ○ | 109 | 70 | ○ | 100 |
| Example 8 | ○ | 114 | 74 | ○ | 102 |
| Example 9 | ○ | 113 | 74 | ○ | 103 |
| Example 10 | ○ | 114 | 73 | ○ | 108 |
| Example 11 | ○ | 114 | 72 | ○ | 105 |
| Comparative Example 1 | ○ | 112 | 71 | ○ | 77 |

**[Table 4]**

| | Appearance | Water contact angle (°) | Oleic acid contact angle (°) | Magic ink repellency | Water contact angle after abrasion test (°) |
|---|---|---|---|---|---|
| Example 12 | ○ | 115 | 73 | ○ | 110 |
| Example 13 | ○ | 114 | 72 | ○ | 111 |
| Example 14 | ○ | 115 | 73 | ○ | 108 |
| Example 15 | ○ | 115 | 72 | ○ | 110 |
| Example 16 | ○ | 115 | 73 | ○ | 110 |
| Example 17 | ○ | 109 | 70 | ○ | 105 |
| Example 18 | ○ | 110 | 70 | ○ | 101 |
| Example 19 | ○ | 116 | 75 | ○ | 111 |
| Example 20 | ○ | 116 | 75 | ○ | 110 |
| Example 21 | ○ | 115 | 75 | ○ | 110 |
| Example 22 | ○ | 115 | 74 | ○ | 110 |
| Comparative Example 2 | ○ | 110 | 71 | ○ | 63 |

The cured films of the active energy ray-curable compositions (Examples 1 to 22) using the fluoropolyether-containing acrylic compounds of the present invention (compounds (A) to (K)) exhibited excellent anti-fouling property and smoothness of the coating film, and high abrasion resistance was confirmed. On the other hand, the cured films of the active energy ray-curable compositions (Comparative Examples 1 and 2) using the fluoropolyether-containing acrylic compound having a structure different from that of the fluoropolyether-containing acrylic compound of the present invention (compound (X)) exhibited excellent anti-fouling property and smoothness of the coating film, but the water contact angle was greatly reduced by the abrasion test, and low abrasion resistance was confirmed.

## Claims

1. A fluoropolyether-containing acrylic compound having the following general formula (1): 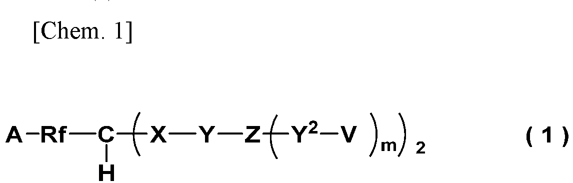 wherein A is a hydrogen atom, a fluorine atom, an unsubstituted or fluorine-substituted C₁-C₂₀ monovalent hydrocarbon group, or a monovalent group of -CH(X-Y-Z(Y²-V)ₘ)₂, Rf is a divalent fluoropolyether group, X is independently a single bond or a divalent heteroatom, Y is independently a C₁-C₂₀ divalent hydrocarbon group which may contain one or more selected from an oxygen atom, a nitrogen atom, a silicon atom, and a sulfur atom, Z is independently an (m+1)-valent linking group having a siloxane structure, Y² is independently a single bond or a C₁-C₂₀ divalent hydrocarbon group which may contain one or more selected from an oxygen atom, a nitrogen atom, and a silicon atom, V is independently a hydrogen atom, or a monovalent organic group containing an acryloyl group or an α-substituted acryloyl group which may contain at least one selected from an oxygen atom and a nitrogen atom, at least one acryloyl or α-substituted acryloyl group being contained per molecule on the average, and m is an integer of 1 to 11.

2. The fluoropolyether-containing acrylic compound of claim 1, wherein in the formula (1), Rf is a divalent fluoropolyether group having the following general formula (2): 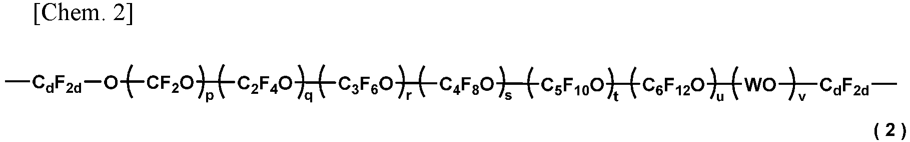 wherein W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.

3. The fluoropolyether-containing acrylic compound of claim 1, wherein in the formula (1), Rf is any one of divalent perfluoropolyether groups having the following formulae: 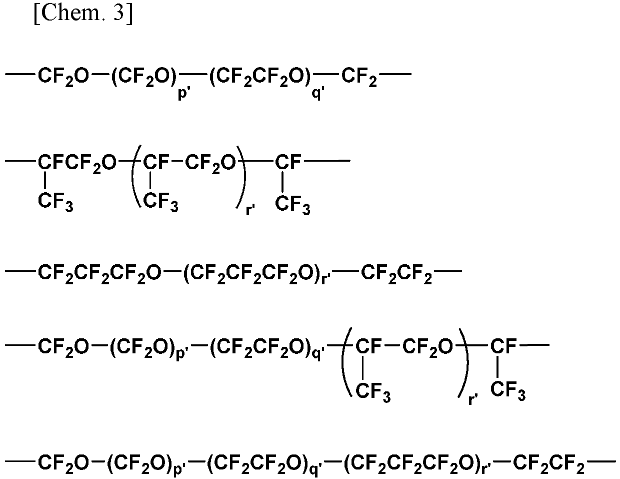 wherein p', q', and r' are each an integer of 1 or more, the sum of p', q', and r' in each formula is 3 to 200, and individual repeat units shown in parentheses with p', q', and r' may be randomly bonded.

4. The fluoropolyether-containing acrylic compound of claim 1, wherein in the formula (1), A is a hydrogen atom, a fluorine atom, a C₁-C₆ fluoroalkyl group, or a monovalent group of -CH(X-Y-Z(Y²-V)ₘ)₂.

5. The fluoropolyether-containing acrylic compound of claim 1, wherein in the formula (1), A is a fluorine atom or a C₁-C₆ perfluoroalkyl group.

6. The fluoropolyether-containing acrylic compound of claim 1, wherein in the formula (1), two X's are present at one end of the molecular chain when A is a hydrogen atom, a fluorine atom, or an unsubstituted or fluorine-substituted C₁-C₂₀ monovalent hydrocarbon group, and two X's are present at each of both ends of the molecular chain (four X's in the molecule) when A is a monovalent group of -CH(X-Y-Z(Y²-V)ₘ)₂; one X is an oxygen atom, and the other X is a single bond at each end.

7. The fluoropolyether-containing acrylic compound of claim 1, wherein in the formula (1), Y is independently a C₂-C₁₀ alkylene group, or a C₂-C₁₀ alkylene group containing a C₆-C₈ arylene group.

8. The fluoropolyether-containing acrylic compound of claim 1, wherein in the formula (1), Z is a linear tri to deca-valent organopolysiloxane residue of 2 to 10 silicon atoms or a branched or cyclic tri to deca-valent organopolysiloxane residue of 3 to 10 silicon atoms.

9. The fluoropolyether-containing acrylic compound of claim 1, wherein in the formula (1), Z has any one of the following formulae: 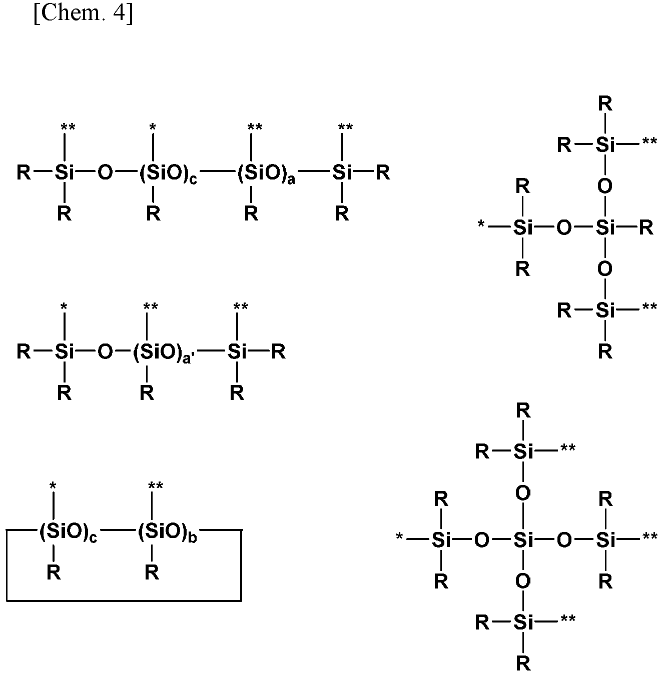 wherein * is a bond bonded to Y in the formula (1), ** is a bond bonded to Y² in the formula (1), R is independently a C₁-C₂₀ monovalent hydrocarbon group, a and a' are integers of 0 to 6, b is an integer of 2 to 9, c is 1, and individual repeat units shown in parentheses with a and c may be randomly bonded.

10. The fluoropolyether-containing acrylic compound of claim 1, wherein in the formula (1), Z is an (m'+1)-valent linking group having the following formula: 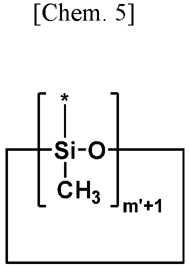 wherein * is a bond bonded to Y and Y² in the formula (1), one of * is a bond bonded to Y, and m' is an integer of 2 to 11.

11. The fluoropolyether-containing acrylic compound of claim 1, wherein in the formula (1), Y² is independently a C₃-C₁₀ alkylene group which may contain an oxygen atom, or a C₃-C₁₀ alkylene group containing a C₆-C₈ arylene group.

12. The fluoropolyether-containing acrylic compound of claim 1, wherein in the formula (1), V is a monovalent group having the following formula: 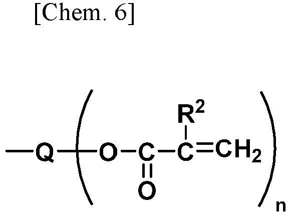 wherein R² is independently a hydrogen atom, a fluorine atom, a methyl group, or a trifluoromethyl group, Q is a single bond or a divalent or trivalent hydrocarbon group which may contain one or more bonds selected from an ether bond, an ester bond, and a urethane bond, and n is 1 or 2.

13. The fluoropolyether-containing acrylic compound of claim 1, wherein in the formula (1), V has any one of the following formulae.

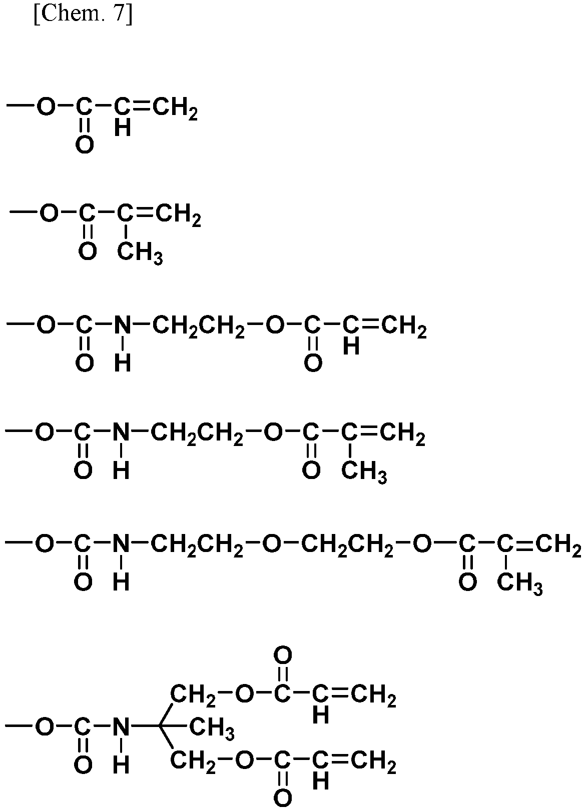

14. The fluoropolyether-containing acrylic compound of claim 1, wherein the fluoropolyether-containing acrylic compound having the formula (1) has the following general formula (3): 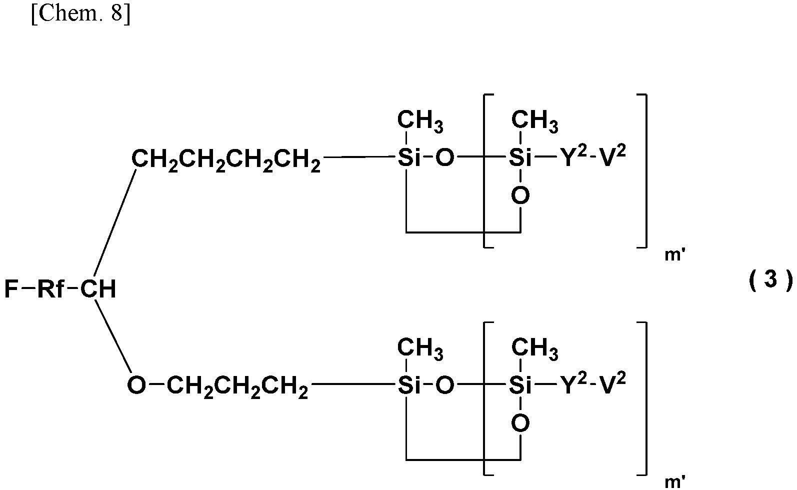 wherein Rf and Y² are the same as described above, m' is an integer of 2 to 11, and V² has any one of the following formulae.

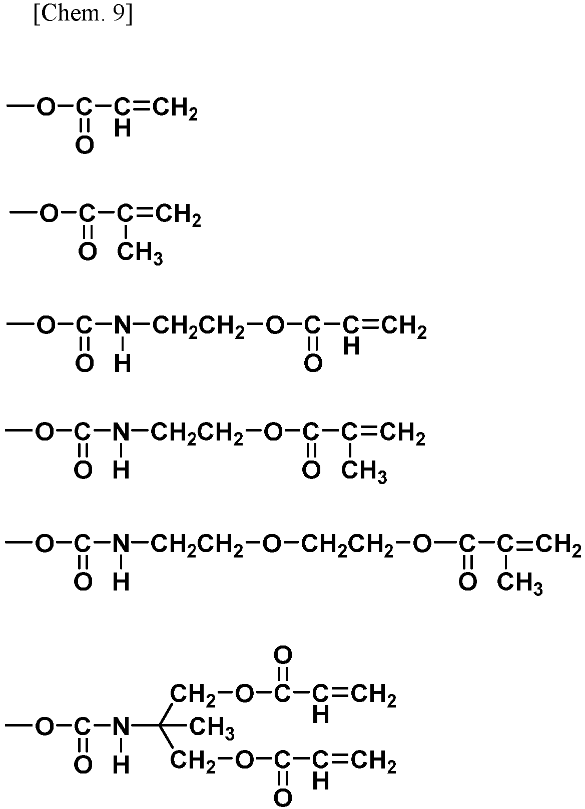

15. An active energy ray-curable composition comprising the fluoropolyether-containing acrylic compounds of claims 1 to 14 and a polymerization initiator as essential components.

16. The active energy ray-curable composition of claim 15, further comprising a solvent.

17. The active energy ray-curable composition of claim 15, further comprising a non-fluorine-based acrylic compound.

18. A cured film obtained by curing the active energy ray-curable composition of claim 15.

19. The cured film of claim 18, wherein the cured film has a film thickness of 0.5 to 100 µm in a case where a ratio of the fluoropolyether-containing acrylic compound is 0.005 parts by weight or more and less than 50 parts by weight in 100 parts by weight of all components of the active energy ray-curable composition excluding the solvent, and the cured film has a film thickness of 1 to 500 nm in a case where a ratio of the fluoropolyether-containing acrylic compound is 50 parts by weight or more and 99.9 parts by weight or less.

20. The cured film of claim 18, which has a water contact angle at a temperature of 25°C and a relative humidity of 40% of 90° or more.

21. An article having the cured film of claim 18 on a surface thereof.
